(19) **Europäisches Patentamt**

**European Patent Office**

**Office européen des brevets**

(11) Veröffentlichungsnummer: **0 180 076 B1**

(12) **EUROPÄISCHE PATENTSCHRIFT**

(45) Veröffentlichungstag der Patentschrift: **25.03.92**

(51) Int. Cl.⁵: **B62M 11/16**

(21) Anmeldenummer: **85112862.9**

(22) Anmeldetag: **10.10.85**

Teilanmeldung 91108264.2 eingereicht am 10/10/85.

(54) **Mehrgangnabe für Fahrräder oder dergleichen.**

(30) Priorität: **02.11.84 DE 3440067**

(43) Veröffentlichungstag der Anmeldung:
**07.05.86 Patentblatt 86/19**

(45) Bekanntmachung des Hinweises auf die Patenterteilung:
**25.03.92 Patentblatt 92/13**

(84) Benannte Vertragsstaaten:
**AT DE GB NL SE**

(56) Entgegenhaltungen:
DE-A- 2 337 725        DE-A- 2 458 871
DE-A- 2 514 418        FR-A- 439 639
FR-A- 914 176          GB-B- 473 205
US-A- 1 490 644

ANTRIEBSTECHNIK, Band 4, Nr. 10, Oktober 1965, Seiten 374-382; H.-J. SCHWERDHÖFER: "Planetengetriebe, Schaltsysteme und Freiläufe in Fahrrad- und Motorradnaben"

(73) Patentinhaber: **Fichtel & Sachs AG**
**Ernst-Sachs-Strasse 62**
**W-8720 Schweinfurt(DE)**

(72) Erfinder: **Steuer, Werner**
**Karl-Fichtel-Strasse 35**
**W-8720 Schweinfurt(DE)**
Erfinder: **Bergles, Eduard**
**Vaterdorfstrasse 42**
**A-8041 Graz(AT)**

(74) Vertreter: **Weickmann, Heinrich, Dipl.-Ing. et al**
**Patentanwälte H.Weickmann, Dr. K.Fincke F.A. Weickmann, B. Huber Dr. H. Liska, Dr. J. Prechtel Kopernikusstrasse 9 Postfach 86 08 20**
**W-8000 München 86(DE)**

EP 0 180 076 B1

## Beschreibung

Die Erfindung betrifft in Übereinstimmung mit dem Oberbegriff des Anspruchs 1 eine 5-Ganggetriebenabe, insbesondere mit Rücktrittbreme für Fahrräder oder dergleichen, umfassend

eine Nabenachse, welche eine geometrische Achse besitzt,

einen Antreiber, welcher drehbar auf der Nabenachse gelagert ist, wobei dieser Antreiber dazu ausgebildet ist, um mit mindestens einem Kettenzahnkranz ausgerüstet zu werden,

eine Nabenhülse, welche drehbar auf der Nabenachse gelagert ist,

ein Planetengetriebesystem innerhalb der Nabenhülse, wobei dieses Planetengetriebesystem aufweist:

einen axial feststehenden Planetenradträger, welcher auf der Nabenachse drehbar gelagert ist,

mindestens ein axial feststehendes Planetenrad, welches drehbar auf dem Planetenradträger gelagert ist, wobei dieses Planetenrad mit einem großen Stufenplanetenrad und einem kleinen Stufenplanetenrad ausgeführt ist,

Sonnenräder, nämlich ein kleines Sonnenrad zum kämmenden Eingriff mit dem großen Stufenplanetenrad und ein großes Sonnenrad zum kämmenden Eingriff mit dem kleinen Stufenplanetenrad, wobei diese Sonnenräder selektiv gegen Drehung um die Nabenachse sperrbar sind,

ein Hohlrad, welches drehbar um die Nabenachse gelagert ist,

wobei das Hohlrad in kämmendem Eingriff mit einem der Stufenplanetenräder steht,
und ferner umfassend

ein axial verschiebbares Kupplungselement, insbesondere in Form einer Kupplungsbuchse, welches in ständigem drehmomentübertragendem Eingriff mit dem Antreiber steht und selektiv zum Eingriff zu bringen ist mit entweder dem Planetenradträger oder dem Hohlrad, um gemeinsam mit dem jeweiligen Teil um die Nabenachse zu rotieren,

ein erstes Freilaufgesperre (Antriebssperrklinke - Innengesperre zwischen dem Hohlrad und der Nabenhülse,

ein zweites Freilaufgesperre (Antriebssperrklinke - Innengesperre zwischen dem Planetenradträger und der Nabenhülse und

Gangsteuerungsmittel (Zugstange - Zugkette - Anschlußteil, welche von einem einzigen Ende der Nabenachse her durch eine Bohrung in das Nabeninnere hereingeführt sind und welche dazu bestimmt und geeignet sind, um durch einen Schlitz der Nabenachse hindurch selektiv das eine oder andere der Sonnenräder gegen die Drehung um die Nabenachse zu sperren, um selektiv das Kupplungselement mit dem Planetenradträger und dem Hohlrad zu kuppeln und um das erste Freilaufgesperre zu inaktivieren,

wobei in einem 5. Schaltzustand das kleine Sonnenrad frei zur Drehung um die Nabenachse ist, das große Sonnenrad gegen Drehung um die Nabenachse gesperrt ist, das Kupplungselement in drehmomentübertragendem Eingriff mit dem Planetenradträger steht und das erste Freilaufgesperre aktiv ist,

wobei in einem 4. Schaltzustand das kleine Sonnenrad gegen Drehung um die Nabenachse gesperrt ist, das große Sonnenrad frei um die Nabenachse drehbar ist, das Kupplungselement noch in drehmomentübertragendem Eingriff mit dem Planetenradträger steht und das erste Freilaufgesperre noch aktiv ist,

wobei in einem 3. Schaltzustand das kleine Sonnenrad gegen Drehung um die Nabenachse gesperrt ist, das große Sonnenrad um die Nabenachse frei drehbar ist, das Kupplungselement in drehmomentübertragendem Eingriff mit dem Hohlrad ist und das erste Freilaufgesperre noch aktiv ist,

wobei in einem 2. Schaltzustand das kleine Sonnenrad gegen Drehung um die Nabenachse gesperrt ist, das große Sonnenrad frei um die Nabenachse drehbar ist, das Kupplungselement in drehmomentübertragender Verbindung mit dem Hohlrad steht und das erste Freilaufgesperre inaktiviert ist und

wobei in einem 1. Schaltzustand das kleine Sonnenrad frei drehbar um die Nabenachse ist, das große Sonnenrad gegen Drehung um die Nabenachse gesperrt ist, das Kupplungselement in drehmomentübertragendem Eingriff mit dem Hohlrad steht und das erste Freilaufgesperre inaktiviert ist,
Eine solche 5-Ganggetriebenabe ist aus der FR-A 914 176 bekannt.

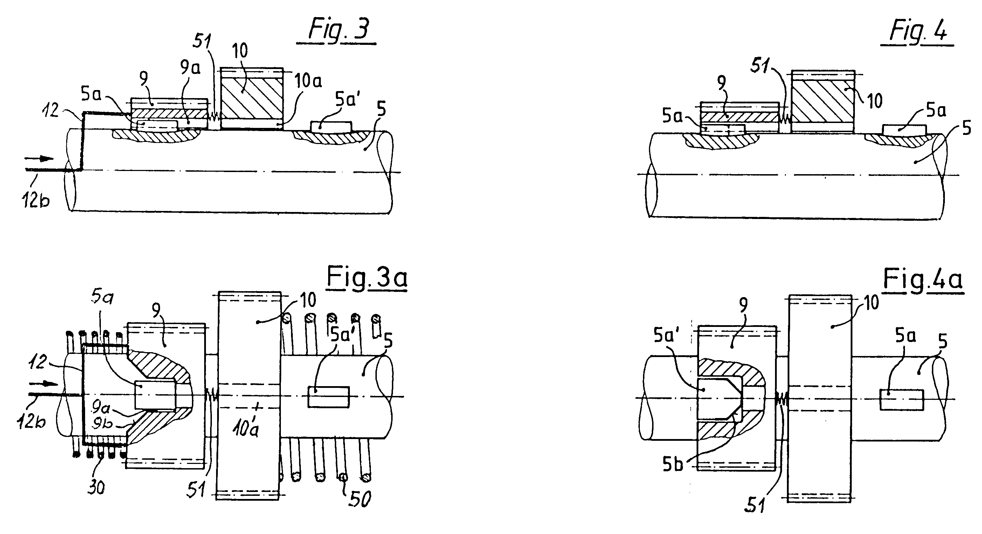

Bei dieser bekannten Ausführungsform sind nach einer ersten, nicht gattungsgemäßen Variante, gem. Fig. 4, zwei Gangsteuerungsmittel von den beiden einander gegenüberliegenden Enden der Nabenachse her eingeführt. Bei dieser ersten Variante sind auf der Nabenachse für jedes der Sonnenräder Feststellverzahnungen angebracht. Die beiden Sonnenräder sind durch eine an dem kleinen Sonnenrad angreifende erste Federung so vorgespannt, daß das große Sonnenrad in Eingriff mit der zugehörigen Feststellverzahnung steht und das kleine Sonnenrad außer Eingriff mit der zugehörigen Feststellverzahnung ist. Das eine Gangsteuerungsmittel greift an dem kleinen Sonnenrad entgegen der Wirkung der ersten Federung an, um das kleine Sonnenrad in Eingriff mit der zugehörigen Feststellverzahnung zu bringen. Wenn dies geschieht, folgt das große Sonnenrad unter der Wirkung einer zweiten Federung dem kleinen Sonnenrad und kommt außer Eingriff mit der zugehörigen Feststellverzahnung. Andererseits dient das zweite Gangsteuerungsmittel, welches von dem anderen Ende der Nabenachse her eingeführt ist, dazu, um selektiv das Kupplungselement mit dem Planetenradträger oder dem Hohlrad zu verbinden.

Nach einer zweiten, gattungsgemäßen Variante ist vorgesehen, von einem Ende der Nabenachse her zwei Gangsteuerungsmittel entweder konzentrisch ineinander oder nebeneinander einzuführen, wobei wiederum das eine Gangsteuerungsmittel zur selektiven Drehfestmachung jeweils eines Sonnenrads dient und das andere Gangsteuerungsmittel zur selektiven Verbindung des Kupplungselements mit dem Planetenradträger oder dem Hohlrad bestimmt ist.

Eine Rücktrittbremse ist nach der FR-A 914 176 nicht vorgesehen. Weiterhin fehlt bei den Ausführungsformen nach der FR-A 914 176 eine Sicherung dafür, daß beispielsweise auch bei ungenau justierten Gangsteuerungsmitteln gleichwohl eine sichere Drehmomentübertragung gewährleistet ist.

Aus der US-PS 14 90 644 ist eine 5-Ganggetriebenabe ohne Rücktrittbremse bekannt. Bei dieser bekannten Ausführungsform ist ein Planetengetriebe mit zwei Sonnenrädern, nämlich einem kleinen Sonnenrad und einem großen Sonnenrad vorgesehen.

Ein Planetenradträger ist zweiteilig ausgeführt mit zwei Planetenradträgerteilen. Der eine Planetenradträgerteil trägt ein großes Planetenrad, welches in Eingriff mit dem kleinen Sonnenrad steht. Der andere Planetenradträgerteil trägt ein kleines Planetenrad, welches in Eingriff mit dem großen Sonnenrad steht.

Den beiden Planetenrädern ist ein Hohlrad gemeinsam. Zwischen dem Hohlrad und der Nabenhülse läßt sich ein erstes Freilaufgesperre bilden. Zwischen dem einen Planetenradträgerteil und der Nabenhülse läßt sich ein zweites Freilaufgesperre bilden. Der gesamte Bausatz, bestehend aus den beiden Sonnenrädern, den beiden Planetenradträgerteilen, den beiden Planetenrädern und dem Hohlrad, läßt sich in fünf Bewegungsstufen längs der Nabenachse verschieben.

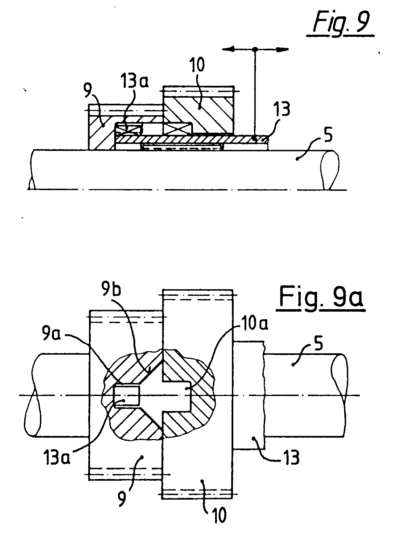

In einem fünften Schaltzustand, entsprechend dem großen Schnellgang (Fig. 14), ist das große Sonnenrad drehfest gegenüber der Nabenachse. Der Antreiber steht in drehmomentübertragender Verbindung mit dem anderen Planetenradträgerteil. Das Hohlrad wird durch das kleine Planetenrad angetrieben und die Drehbewegung des Hohlrads wird über das erste Freilaufgesperre auf die Nabenhülse übertragen. In einem vierten Schaltzustand, entsprechend dem zweiten oder kleineren Schnellgang (Fig. 9), treibt der Antreiber wiederum den anderen Planetenradträgerteil. Das große Sonnenrad ist frei drehbar. Das kleine Sonnenrad ist durch eine Sperrklinke an der Drehung gehindert. Das Hohlrad treibt wie im fünften Schaltzustand die Nabenhülse über das erste Freilaufgesperre.

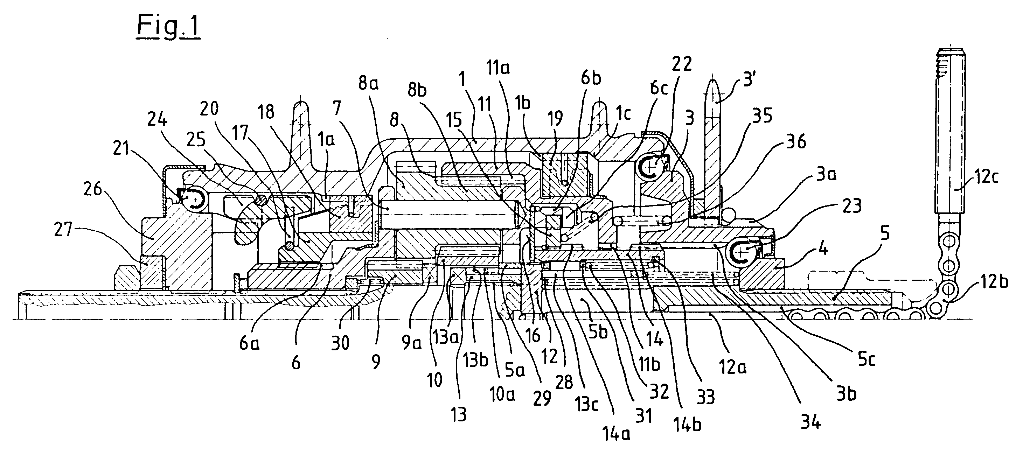

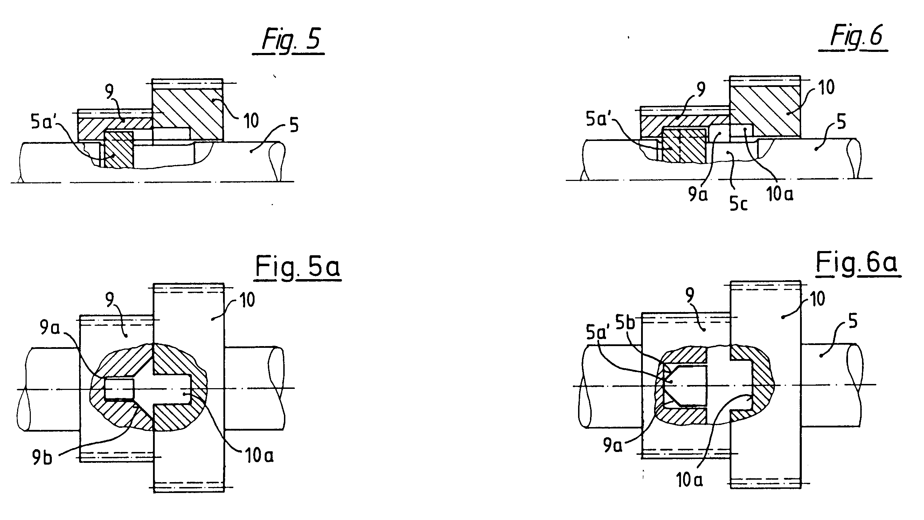

In einem dritten Schaltzustand, entsprechend dem direkten Gang (Fig. 1), sind beide Sonnenräder frei drehbar. Das Hohlrad wird durch den Antreiber angetrieben und überträgt seine Drehbewegung auf die Nabenhülse über das erste Freilaufgesperre. In einem zweiten Schaltzustand, entsprechend dem kleinen Berggang (Fig. 6), wird das Hohlrad durch den Antreiber angetrieben. Das kleine Sonnenrad stützt sich gegen Drehung an die Nabenachse ab, das große Sonnenrad ist frei drehbar. Der Abtrieb erfolgt von dem einen Planetenradträgerteil über das zweite Freilaufgesperre.

In einem ersten Schaltzustand, entsprechend dem großen Berggang (Fig. 3), ist der Antreiber in antriebsübertragender Verbindung mit dem Hohlrad. Das große Sonnenrad ist gegen Drehung gesperrt. Der Abtrieb erfolgt von dem einen Planetenradträgerteil über das zweite Freilaufgesperre zur Nabenhülse.

Der Erfindung liegt die Aufgabe zugrunde, bei einer 5-Ganggetriebenabe nach der eingangs bezeichneten Gattung, d.h. entsprechend dem Oberbegriff des Anspruchs 1, mit möglichst geringem Aufwand die Einführung von mehreren Gangsteuerungsmitteln durch die an einem Ende der Nabenachse gelagerte Bohrung zu vermeiden.

Zur Lösung dieser Aufgabe wird in Übereinstimmung mit dem kennzeichnenden Teil des Anspruchs 1 nach einem ersten Lösungsprinzip vorgeschlagen,
daß ein einziges als Zugorgan ausgebildetes Gangsteuerungsorgan (Zugstange - Zugkette - Anschlußteil durch die Bohrung in das Nabeninnere eingeführt und in mehrere sukzessiv dem besagten einzigen Ende der Nabenachse gegen Federkraft angenäherte, den fünf Schaltzuständen entsprechende Positionen einstellbar ist und derart mit Spiel auf feder- und anschlaggesteuerte, relativ zueinander axial verschiebbare Sonnenrad-Drehsperrmittel einwirkt, daß beim Übergang des Gangsteuerungsorgans (Zugstange - Zugkette - Anschlußteil) von der 5. Position in die 4. Position eine Relativverschiebung der Sonnenrad-Drehsperrmittel eintritt und das in der 5. Position drehbare kleine Sonnenrad in der 4. Position drehgesperrt und das in der 5. Position drehgesperrte große Sonnenrad in der 4. Position drehbar wird, daß bei den Übergängen von der 4. Position in die 3. Position und von der 3. Position in die 2. Position die Relativstellung der Drehsperrmittel erhalten bleibt, d. h. das kleine Sonnenrad drehgesperrt bleibt und das große Sonnenrad drehbar bleibt und daß beim Übergang von der 2. Position in die 1. Position eine erneute Relativverschiebung der Sonnenrad-Drehsperrmittel stattfindet und das kleine Sonnenrad wieder drehbar wird und das große Sonnenrad wieder drehgesperrt wird. Im Detail kann dieses erste Lösungsprinzip auf verschiedene Weise verwirklicht werden.

So ist es entsprechend dem kennzeichnenden Teil des Anspruchs 2 möglich,
daß ein einziges Gangsteuerungsorgan (Zugstange - Zugkette - Anschlußteil) durch die Bohrung in das Nabeninnere eingeführt und mit einem auf das Kupplungselement einwirkenden Schubklotz verbunden ist, welcher in fünf axial beabstandete, den fünf Schaltzuständen entsprechende Positionen durch das Gangsteuerungsorgan einstellbar ist, nämlich
eine 5. - 1. Position, welche sukzessive dem besagten einzigen Ende der Nabenachse angenähert sind, und
daß der Schubklotz mit Übertragungsspiel auf ein axial bewegliches Sonnenradfeststellelement (Schiebehülse) einwirkt, welches gegen Drehung um die Nabenachse gesichert ist und auf einem Teil des axialen Bewegungsbereichs des Schubklotzes an die Bewegung des Schubklotzes gekoppelt ist in der Weise, daß
der Schubklotz beim Übergang von der 5. Position in die 4. Position eine federkraft- und anschlagsbedingte Verschiebung der Sonnenräder aus einer ersten, das kleine Sonnenrad freigebenden und das große Sonnenrad sperrenden Relativstellung zum axial stehenbleibenden Sonnenradfeststellelement in eine zweite, das große Sonnenrad freigebende und das kleine Sonnenrad sperrende Relativstellung zuläßt, welche in der 3. - 2. Position des Schubklotzes erhalten bleibt, und daß beim Übergang des Schubklotzes aus der 2. Position in die 1. Position das Sonnenradfeststellelement von dem Schubklotz unter Wiederherstellung der ersten Relativstellung axial mitnehmbar ist.

Weiter ist es entsprechend dem kennzeichnenden Teil des Anspruchs 3 möglich,
daß ein einziges Gangsteuerungsorgan durch die Bohrung in das Naheninnere eingeführt und mit auf das Kupplungselement (14) einwirkenden Schubklotzmitteln verbunden ist, von denen ein Schubklotz in fünf axial beabstandete, den fünf Schaltzuständen entsprechende Positionen durch das Gangsteuerungsorgan einstellbar ist, nämlich
eine 5. - 1. Position, welche sukzessive dem besagten einzigen Ende der Nabenachse angenähert sind, und
daß der Schubklotz mit Übertragungsspiel auf ein axial bewegliches Sonnenradfeststellelement einwirkt, welches gegen Drehung um die Nabenachse gesichert ist und auf einem Teil des axialen Bewegungsbereichs des Schubklotzes an die Bewegung des Schubklotzes gekoppelt ist in der Weise, daß
das mit zwei axial beabstandeten Kupplungselementen (Kuplungsflächen) versehene Sonnenradfeststellelement in der 5. Position durch eine Feder gegen den Schubklotz in eine Axialstellung vorgespannt ist, in der ein erstes Kupplungselement das axial unverschiebbare große Sonnenrad drehfest macht und das ebenfalls axial unverschiebbare kleine Sonnenrad drehbar ist, beim Übergang des Schubklotzes von der 5. Position in die 4. Position das Sonnenradfeststellelement unter der Wirkung der Feder dem Schubklotz folgt in eine Axialstellung, in welcher ein 2. Kupplungselement des Sonnenradfeststellelements das kleine Sonnenrad drehfest macht und das 1. Kupplungselement das große Sonnenrad freigibt, das Sonnenradfeststellelement beim Übergang des Schubklotzes von der 4. in die 3. Position und von der 3. in die 2. Position seine Axialstellung beibehält und das Sonnenradfeststellelement beim Übergang des Schubklotzes aus der 2. in die 1. Position von dem Schubklotz mitgenommen wird, wobei nunmehr das 2. Kupplungselement das große Sonnenrad drehfest macht und das kleine Sonnenrad wieder drehbar wird.

Weiter ist es entsprechend dem kennzeichnenden Teil des Anspruchs 4 möglich,
daß ein einziges Gangsteuerungsorgan durch die Bohrung in das Nabeninnere eingeführt und mit einem auf das Kupplungselement einwirkenden Schubklotz verbunden ist, welcher in fünf axial beabstandete, den fünf Schaltzuständen entsprechende Positionen durch das Gangsteuerungsorgan einstellbar ist, nämlich
eine 5. - 1. Position, welche sukzessive dem besagten einzigen Ende der Nabenachse angenähert sind, und
daß der Schubklotz mit Übertragungsspiel auf ein axial bewegliches Sonnenradfeststellelement einwirkt, welches gegen Drehung um die Nabenachse gesichert ist und auf einem Teil des axialen Bewegungsbereichs des Schubklotzes an die Bewegung des Schubklotzes gekoppelt ist in der Weise, daß
die beiden axial beabstandeten und axial verschiebbaren Sonnenräder in einer 5. Position des Schubklotzes durch eine Druckfeder gegen den Schubklotz axial vorgespannt sind und von zwei axial beabstandeten Kupplungselementen (Kupplungsverzahnungen) des axial verschiebbaren und unverdrehbaren Sonnenradfeststellelements ein erstes Kupplungselement das große Sonnenrad drehfest macht, während das kleine Sonnenrad drehen kann, beim Übergang von der 5. Position in die 4. Position die beiden Sonnenräder unter der Wirkung der Druckfeder dem Schubklotz folgen, das kleine Sonnenrad dabei durch ein 2. Kupplungselement drehfest wird und das große Sonnenrad drehfrei wird, beim Übergang von der 4. Position in die 3. Position und von der 3. Position in die 2. Position das Sonnenradfeststellelement und die Sonnenräder axial stehen bleiben und beim Übergang von der 2. Position in die 1. Position das Sonnenradfeststellelement axial mitgenommen wird und über das 2. Kupplungselement das kleine Sonnenrad freigibt und über das 1. Kupplungselement das große Sonnenrad drehfest macht.

Weiter ist es, entsprechend dem kennzeichnenden Teil des Anspruchs 5 möglich, daß ein einziges Gangsteuerungsorgan durch die Bohrung in das Nabeninnere eingeführt und mit einem Schubklotz verbunden ist, welcher in fünf axial beabstandete, den fünf Schaltzuständen entsprechende Positionen durch das Gangsteuerungsorgan einstellbar ist, nämlich eine 5. - 1. Position, welche sukzessive dem besagten einzigen Ende der Nabenachse angenähert sind, und daß der Schubklotz mit Übertragungsspiel auf ein axial bewegliches Sonnenradfeststellelement einwirkt, welches auf einem Teil des axialen Bewegungsbereichs des Schubklotzes an die Bewegung des Schubklotzes gekoppelt ist in der Weise, daß die beiden axial beweglichen Sonnenräder durch eine Feder in der 5. Position gemeinsam gegen einen mit dem Schubklotz verbundenen Anschlag in eine Axialstellung vorgespannt sind, in der das große Sonnenrad durch ein axial feststehendes Kupplungselement (Achsverzahnung) drehfest gemacht ist und das kleine Sonnenrad drehbar ist, daß beim Übergang von der 5. in die 4.Position die beiden Sonnenräder dem mit dem Schubklotz gekoppelten Anschlag folgen, das große Sonnenrad drehfrei wird und das kleine Sonnenrad durch das Kupplungselement drehfest gemacht wird, beim Übergang von der 4. in die 3. Position und von der 3. in die 2. Position die Sonnenräder stehen bleiben und beim Übergang von der 2. Position in die 1. Position der Schubklotz ein Bewegungsumkehrgetriebe beaufschlagt, welches auf das Sonnenradfeststellelement einwirkt und die beiden Sonnenräder in umgekehrter Achsrichtung verschiebt, wobei das kleine Sonnenrad wieder drehfrei wird und das große Sonnenrad erneut in Eingriff mit dem Kupplungselement tritt. Dabei kann das Bewegungsumkehrgetriebe ein Schwenkhebelgetriebe oder ein Verschraubungsgetriebe sein.

Die der Erfindung zugrundeliegende Aufgabe läßt sich ausgehend von einer 5-Ganggetriebenabe der eingangs bezeichneten Gattung auch dadurch lösen, daß entsprechend dem kennzeichnenden Teil des Anspruchs 8, ein einziges Gangsteuerungsorgan durch die Bohrung in das Nabeninnere eingeführt ist und auf relativ zueinander axial verschiebbare Sonnenrad-Drehsperrmittel einwirkt, wobei durch Hin- und Her-Verschieben des Gangsteuerungsorgans zwischen zwei Positionen wahlweise das kleine Sonnenrad gegen Drehung sperrbar und das große Sonnenrad für Drehung freigebbar ist oder das große Sonnenrad gegen Drehung sperrbar und das kleine Sonnenrad für Drehung freigebbar ist. Dabei können die Sonnenrad-Drehsperrmittel in den beiden Positionen durch Verrastungsmittel verrastbar sein.

Weiter läßt sich die der Erfindung zugrundeliegende Aufgabe, ausgehend von einer 5-Ganggetriebenabe der eingangs bezeichneten Gattung,auch dadurch lösen, daß entsprechend dem kennzeichnenden Teil des Anspruchs 10 ein einziges Gangsteuerungsorgan durch die Bohrung in das Nabeninnere eingeführt ist und auf relativ zueinander axial verschiebbare Sonnenrad-Drehsperrmittel einwirkt, wobei die Sonnenrad-Drehsperrmittel zwei voneinander axial beabstandete, unverdrehbare und durch das Gangsteuerungsorgan gemeinsam verschiebbare Sonnenrad-Feststellelemente (Kupplungsverzahnungen) aufweisen, von denen jedes im Verlauf einer mehrstufigen gleichgerichteten Verschiebung nacheinander mit Kupplungsprofilen der beiden Sonnenräder in Eingriff tritt, und zwar so, daß in jeder Stellung der Sonnenrad-Feststellelemente (Kupplungsverzahnungen) jeweils nur eines dieser Sonnenrad-Feststellelemente (Kupplungsverzahnungen) in Eingriff mit einem Kupplungsprofil eines Sonnenrads steht.

Um insbesondere bei Vorhandensein einer Rücktrittsbremse sicherzustellen, daß der jeweils einzustellende Drehmomentübertragungsweg zuverlässig existiert, beispielsweise auch dann, wenn die Gangsteuerungsmittel nicht vorschriftsmässig justiert sind, wird in Weiterbildung der Erfindung entsprechend dem kennzeichnenden Teil des Anspruchs 11 vorgeschlagen, daß jedes der Sonnenräder gegen Drehung um die Nabenachse durch mindestens eine Kupplungszahn-Kupplungsausnehmungskombination sperrbar ist mit einem auf der Nabenachse drehfest angeordneten Kupplungszahn und einer an dem jeweiligen Sonnenrad angeordneten Kupplungsausnehmung oder umgekehrt, daß die Sperrung und die Drehungsfreigabe des jeweiligen Sonnenrads durch axiale Relativbewegung des jeweiligen Kupplungszahnes und der jeweiligen Kupplungsausnehmung erfolgt, indem der jeweilige Kupplungszahn in die jeweilige Kupplungsausnehmung eintritt bzw. aus dieser austritt, daß sowohl der Kupplungszahn als auch die Kupplungsausnehmung der Kupplungszahn-Kupplungsausnehmungskombinationen eines jeden Sonnenrads jeweils ein Paar im wesentlichen achsparalleler Kupplungsflanken umfaßt, daß einer von den Teilen: Kupplungszahn, Kupplungsausnehmung einer Kupplungszahn-Kupplungsausnehmungskombination eines Sonnenrads mindestens eine Einweiseflanke axial angrenzend an die jeweils zugehörige Kupplungsflanke umfaßt derart, daß durch Relativdrehung des Kupplungszahns und der Kupplungsausnehmung der Kupplungszahn-Kupplungsausnehmungskombination des einen Sonnenrads bei peripherem Gegenüberstehen der Einweiseflanke des einen der Teile: Kupplungszahn und Kupplungsausnehmung gegenüber dem jeweils anderen dieser Teile eine axiale Relativverschiebung von Kupplungszahn und Kupplungsausnehmung der Kupplungszahn-Kupplungsausnehmungskombination des einen Sonnenrads in Richtung auf Eingriffslösung dieses Kupplungszahns und dieser Kupplungsausnehmung stattfindet, und daß diese axiale Relativverschiebung eine axiale Folgerelativverschiebung des Kupplungszahns und der Kupplungsausnehmung der Kupplungszahn-Kupplungausnehmungskombination des anderen Sonnenrads in Richtung auf Eingriffsherstellung der Kupplungsflanken des Kupplungszahns und der Kupplungsausnehmung der Kupplungszahn-Kupplungsausnehmungskombination des anderen Sonnenrads veranlaßt.

Dieses Sicherungsprinzip kann auf verschiedene Weise weitergebildet werden. so ist es entsprechend dem kennzeichnenden Teil des Anspruchs 12 möglich,
daß einer von den Teilen Kupplungszahn, Kupplungsausnehmung einer Kupplungszahn-Kupplungsausnehmungskombination eines Sonnenrads mindestens ein Paar von Einweiseflanken axial angrenzend an das jeweils zugehörige Paar von Kupplungsflanken umfaßt, daß die einzelnen Einweiseflanken des genannten Paars von Einweiseflanken gegenüber einer zur Achse parallelen und durch den peripheren Mittelpunkt des jeweils zugehörigen Teils: Kupplungszahn, Kupplungsausnehmung gelegten Bezugslinie in entgegengesetzter Richtung geneigt sind.

Dabei kann, entsprechend dem kennzeichnenden Teil des Anspruchs 13 vorgesehen sein,
daß der axialen Relativverschiebung des Kupplungszahns und der Kupplungsausnehmung der besagten Kupplungszahn-Kupplungsausnehmungskombination des einen Sonnenrads eine erste Federung (Feder) entgegenwirkt, und daß die axiale Folgerelativverschiebung des Kupplungszahns und der Kupplungsausnehmung der Kupplungszahn-Kupplungsausnehmungskombination des anderen Sonnenrads durch eine zweite Federung (Feder) bewirkt wird.

Weiter kann entsprechend dem kennzeichnenden Teil des Anspruchs 14 vorgesehen sein,
daß die Kupplungszahn-Kupplungsausnehmungskombination eines ersten der Sonnenräder und die Kupplungszahn-Kupplungsausnehmungskombinationeines zweiten der Sonnenräder einen gemeinsamen Kupplungszahn für jede der beiden Kombinationen und je eine Ausnehmung in jedem der beiden Sonnenräder umfaßt.

Es ist auch entsprechend dem kennzeichnenden Teil des Anspruchs 15 denkbar,
daß die Kupplungszahn-Kupplungsausnehmungskombination eines ersten Sonnenrads einen ersten Kupplungszahn und eine erste Kupplungsausnehmung für das erste Sonnenrad umfaßt, und daß die Kupplungszahn-Kupplungsausnehmungskombination des zweiten Sonnenrads einen zweiten Kupplungszahn und eine zweite Kupplungsausnehmung für das zweite Sonnenrad umfaßt.

Hierbei ist es entsprechend dem kennzeichnenden Teil des Anspruchs 16 möglich,
daß der gemeinsame Kupplungszahn axial fest bezüglich der Nabenachse angeordnet ist, und daß die Sonnenräder axial beweglich gegenüber der Nabenachse sind, oder
daß entsprechend dem kennzeichnenden Teil des Anspruchs 17
der gemeinsame Kupplungszahn axial beweglich gegenüber der Nabenachse ist, und daß die Sonnenräder axial fest gegenüber der Nabenachse sind.

Entsprechend den Ansprüchen 18 und 19 können die Einweiseflanken Teile der jeweiligen Kupplungsausnehmung oder Teile des jeweiligen Kupplungszahns sein.

Es ist entsprechend dem kennzeichnenden Teil des Anspruchs 20 möglich,
daß der Kupplungszahn mindestens einer der Kupplungszahn-Kupplungsausnehmungskombinationen einstückig mit der Nabenachse hergestellt ist.

Es ist aber auch entsprechend dem kennzeichnenden Teil des Anspruchs 21 möglich,
daß der Kupplungszahn mindestens einer der Kupplungszahn-Kupplungsausnehmungskombinationen ein Teil mindestens eines Schubklotzes ist.

Bei axial beweglicher Anordnung eines gemeinsamen Kupplungszahns ist es entsprechend dem Anspruch 22 möglich,
daß der Kupplungszahn mindestens einer der Kupplungszahn-Kupplungsausnehmungskombinationen auf einer Schiebehülse angeordnet ist, welche axial beweglich und unverdrehbar auf der Nabenachse angebracht ist.

Wenn für ein erstes Sonnenrad ein erster Kupplungszahn und eine erste Kupplungsausnehmung und für ein zweites Sonnenrad ein zweiter Kupplungszahn und eine zweite Kupplungsausnehmung vorhanden sind, so ist es entsprechend Anspruch 23 möglich,
daß eine Trennfederung (Druckfeder) zwischen den beiden Sonnenrädern vorgesehen ist, daß die beiden Sonnenräder gegenüber der Nabenachse axial beweglich sind, und daß die Kupplungszähne der Kupplungszahn-Kupplungsausnehmungskombinationen gegenüber der Nabenachse axial fest sind.

Wenn eine Rücktrittbremse vorgesehen ist, so ist es entsprechend Anspruch 24 möglich, daß die Rücktrittbremse einen Bremskonus und einen spreizbaren Bremsmantel umfaßt, daß der spreizbare Bremsmantel drehfest an der Nabenachse festgelegt ist, daß der Bremskonus auf dem Planetenradträger durch eine Gewindeanordnung angebracht und gegen Drehung durch eine Friktionsfeder gesichert ist, wobei eine Rückwärtsverdrehung des Planetenradträgers unter Vermittlung der Gewindeanordnung eine Axialbewegung des Bremskonus bewirkt, und wobei diese Axialbewegung des Bremskonus eine Spreizung des Bremsmantels zum bremsenden Eingriff mit der Nabenhülse bewirkt.

Eine besonders platzsparende und formschöne 5-Ganggetriebenabe erhält man entsprechend Anspruch 25 dadurch, daß die Nabenhülse einen ersten Axialabschnitt von größerem Durchmesser und einen zweiten Axialabschnitt von kleinerem Durchmesser besitzt, daß der erste Axialabschnitt das Planetengetriebesystem aufnimmt, und daß der zweite Axialabschnitt die Rücktrittbremse aufnimmt.

Entsprechend dem kennzeichnenden Teil des Anspruchs 26 ist es möglich, daß die Drehsperrmittel eine Schiebehülse mit einem Längsschlitz umfassen, daß ein Schubklotz der Gangsteuerungsmittel gleitend verschiebbar in den Längsschlitz der Schiebehülse eingreift und auf ein geschlossenes Ende des Längsschlitzes einwirkt, um die Schiebehülse in axialer Richtung durch einen Teil des axialen Bewegungsbereichs des Schubklotzes zu bewegen.

Dabei ist es entsprechend dem Anspruch 27 möglich, daß die Schiebehülse eine erste Gruppe von Klauen zum Drehsperren des kleinen Sonnenrads und eine zweite Gruppe von Klauen (Kupplungselements zum Sperren des großen Sonnenrads besitzt.

Weiter ist es entsprechend dem Anspruch 28 möglich, daß die Klauen der ersten Gruppe von Klauen axial vorspringende Klauen sind und daß die Klauen (Kupplungselemente) der zweiten Gruppe von Klauen radial vorspringende Klauen sind, wobei "axial" und "radial" jeweils bezüglich der Schiebehülse zu verstehen ist.

Weiter ist es entsprechend dem Anspruch 29 möglich, daß die Schiebehülse in axialer Richtung durch eine Schiebehülsenbeaufschlagungsfeder (Druckfeder) belastet ist, welche die Schiebehülse in Richtung auf eine im wesentlichen gleichbleibende Position vorspannt.

Weiter ist es entsprechend dem Anspruch 30 möglich, daß der Schubklotz durch eine Schubklotzbeaufschlagungsfeder (Druckfeder) belastet ist, wobei diese Schubklotzbeaufschlagungsfeder (Druckfeder) den Schubklotz in Richtung auf seine 5. Position vorspannt, und wobei die Gangsteuerungsmittel ziehende Gangsteuerungsmittel sind.

Die Inaktivierung des ersten Freilaufgesperres kann entsprechend dem Anspruch 31 darauf beruhen, daß das Hohlrad als Folge der axialen Bewegung des Kupplungselements (Kupplungsbuchse) axial beweglich ist, und daß die Inaktivierung des ersten Freilaufgesperres als Folge einer axialen Bewegung des Hohlrads eintritt.

Dabei ist es entsprechend dem Anspruch 32 möglich, daß das Hohlrad durch den Antreiber vermittels einer Hohlradstützfeder (Druckfeder) abgestützt ist und daß das Kupplungselement (Kupplungsbuchse) auf das Hohlrad durch eine Hohlradverschiebefeder (Druckfeder) einwirkt, wobei die Hohlradverschiebefeder (Druckfeder) schwächer ist als die Hohlradstützfeder (Druckfeder).

In Weiterbildung der Erfindung kann entsprechend dem Anspruch 33 vorgesehen sein, daß das Kupplungselement (Kupplungsbuchse) mit einem von den Gangsteuerungsmitteln beaufschlagten Schubklotz durch eine spielbehaftete Verbindung verbunden ist, um das Kupplungselement (Kupplungsbuchse) auf einem Teil des axialen Bewegungsbereichs des Schubklotzes mitzunehmen.

Dabei ist es entsprechend dem Anspruch 34 möglich, daß die spielbehaftete Verbindung eine spielbereitstellende Druckfederung (Feder) umfaßt.

Die Erfindung wird im folgenden unter Bezugnahme auf die beiliegenden figuren näher beschrieben.

Im einzelnen zeigt

Fig. 1 eine von einer Nabenachsseite schaltbare Mehrgangnabe mit fünf Gängen und mit einer Rücktrittbremseinrichtung, im halben Längsschnitt,

Fig. 2a und 2a' bzw. 2b und 2b' jeweils eine Anordnung, bei welcher Sonnenräder axial verschiebbar auf der Nabenachse gelagert sind und diese Achse mit einer Kupplungsverzahnung ausgerüstet ist,

Fig. 3, 3a bzw. 4, 4a jeweils eine Anordnung von axial verschiebbaren, auf der Nabenachse gelagerten Sonnenrädern, wobei die Nabenachse zwei Kupplungsverzahnungen aufweist,

Fig. 5, 5a bzw. 6, 6a jeweils eine Anordnung von axial festen Sonnenrädern auf der Nabenachse, wobei ein Kupplungselement in der Nabenachse axial verschiebbar ist,

Fig. 7, 7a bzw. 8, 8a jeweils eine Anordnung von axial festgelegten Sonnenrädern auf der Nabenachse, es sind zwei verschiebbare Kupplungselemente in der Nabenachse vorgesehen,

Fig. 9 und 9a eine Anordnung axial festgelegter Sonnenräder, wobei auf der Nabenachse eine mit Kupplungselementen versehene Schiebehülse vorgesehen ist,

Fig. 10 bzw. 11 jeweils eine Anordnung von axial festgelegten Sonnenrädern, die mittels einer auf der Nabenachse drehfesten Schiebehülse wechselweise kuppelbar sind,

Fig. 12 bzw. 13 Beispiele für Umschaltsysteme für die Sonnenräder, wobei Leerlaufschaltstellungen vermieden sind,

Fig. 14 bzw. 15 jeweils eine Möglichkeit dafür, eines der mit der Nabenachse drehfest zu kuppelnden Sonnenräder axial zu verrasten,

Fig. 16, 17 bzw. 18 Schaltsysteme, bei welchen die Sonnenräder für sich axial festgelegt sind und jeweils über eine mit der Nabenachse drehfeste, jedoch axial verschiebbare zur Kupplung der Sonnenräder dienende Schiebehülse axial verrastet werden können,

Fig. 19 bzw. 20 Varianten zu den Ausführungsformen gemäß den Figuren 16 bis 18, bei welchen nunmehr zum Umschalten der auf der Nabenachse axial verschiebbar gelagerten Sonnenräder eine Hilfshülse verwendet ist, welche ihrerseits zur Nabenachse oder zum Planetenträger verrastbar ist,

Fig. 21 eine Anordnung, bei der bei axial verschiebbaren Sonnenrädern der Schubklotz in der Nabenachse selbst zur Vorgabe der funktionsrichtigen Schaltwege einrastet,

Fig. 22 bzw. 23 jeweils ein Schaltungssystem, das bei axial verschiebbaren Sonnenrädern in nur eine Richtung geschaltet werden muß,

Fig. 24 einen Aufbau für eine Schaltbetätigung in nur eine Richtung bei axial festgelegten Sonnenrädern,

Fig. 24a eine Variante zum Aufbau gem. Fig.24,

Fig. 25 bzw. 26 ein Aufbau für ein Schaltsystem für axial verschlebbare Sonnenräder, wobei in unterschiedlicher Weise eine Bewegungsumkehr einer speziellen Steuerhülse erreicht wird,

Fig. 27 ein Ausführungsbeispiel einer 5-Gang-Nabe mit nur einem Schaltbetätigungselement,

Fig. 28 eine konstruktive Abwandlung zu Fig. 1 in schematischer Teildarstellung,

Fig. 29 eine Ansicht zu Fig. 28 in Pfeilrichtung XXX derr Fig. 28.

Bei der in Figur 1 beispielsweise gezeigten Mehrgangnabe mit mehr als drei Gängen und einer Rücktrittbremseinrichtung ist mit 1 die Nabenhülse bezeichnet, welche über Kugelläufe 21 und 22 auf einem Hebelkonus 26 und einem Antreiber 3 drehbar gelagert ist. Der in Mitnehmernuten 3a einen Kettenzahnkranz 3' tragende Antreiber 3 ist seinerseits über einen Kugellauf 23 drehbar auf einem mit der Nabenachse 5 verschraubten Festkonus 4 gelagert.

Im Inneren der Nabenhülse 1 ist ein Planetenradträger 6 auf der Nabenachse 5 drehbar, jedoch axial festliegend, gelagert. Dieser Planetenradträger 6 weist auf Bolzen 7 gelagerte Planetenräder 8 auf, die als Stufenplanetenräder 8a und 8b ausgebildet sind, welche sowohl mit einem konzentrischen Hohlrad 11 als auch mit auf der Nabenachse 5 angeordneten Sonnenrädern 9 bzw. 10 kämmen.

Die Sonnenräder 9 bzw. 10 können mittels eines Schubklotzes 12, der in einem Schlitz 5b der Nabenachse 5 gegen die Spannung einer Druckfeder 28 gleitet und von einer Zugstange 12a über eine Zugkette 12b mit Anschlußteil 12c von außen betätigt werden kann, gesteuert werden. Dabei wirkt auf das axial linke Sonnenrad 9 ständig eine coaxiale Druckfeder 30, deren Spannung durch Anliegen des Sonnenrades 9 am Sonnenrad 10 auch an letzteres weitergeleitet wird. - Die Betätigungseinrichtung für die Zugstange 12a mit Kette 12b und Anschlußteil 12c zur Steuerung des Schubklotzes 12 ist hier nicht dargestellt. - Die in ihrer Zähnezahl unterschiedlichen Sonnenräder 9 bzw. 10 sind wechselweise drehfest kuppelbar, wobei das Sonnenrad 9 mit axialen Kupplungsklauen 9a durch axiales Verschieben mit entsprechenden Klauen 13a einer Schiebehülse 13 gekuppelt werden kann, welche ihrerseits auf der Nabenachse 5 drehfest mittels Achsklauen 5a angeordnet, jedoch axial verschiebbar ist. In der in Figur 1 dargestellten Gangschaltstellung der Mehrgangnabe ist das in der Zähnezahl größere Sonnenrad 10 mittels radialer Kupplungselemente 10a mit der das Sonnenrad 10 coaxial aufnehmenden Schiebehülse 13 drehfest, jedoch für sich axial verschiebbar verbunden. Das Sonnenrad 10 kämmt dabei mit einem in der Zähnezahl kleineren Stufenplanetenrad 8b, während das auf der Nabenachse 5 lose drehbar befindliche Sonnenrad 9 mit dem in der Zähnezahl größeren Planetenstufenrad 8a kämmt. Auf beide Sonnenräder 9 und 10 wirkt von axial links die Druckfeder 30.

Auf der Nabenachse 5 ist coaxial zur Schiebehülse 13 eine Kupplungsbuchse 14 drehbar und gegen Federspannung axial verschiebbar angeordnet, wie noch zu beschreiben sein wird. An ihrem Außenumfang ist die Kupplungsbuchse 14 mit axial getrennten Verzahnungen 14a und 14b versehen, wobei die axial linksseitige Verzahnung 14a zusätzlich zur drehfesten Aufnahme einer seitlich angeordneten Mitnehmerscheibe 15 eingerichtet ist. Die axial rechte Verzahnung 14b der Kupplungsbuchse 14 ist ständig im Eingriff mit der axial lang ausgebildeten Innenverzahnung 3b des Antreibers 3.

Durch axiales Verschieben der Kupplungsbuchse 14 ist entweder die Mitnehmerscheibe 15 mit axialen Klauen 6b am Planetenradträger 6 oder die Außenverzahnung 14a mit einer entsprechenden Innenverzahnung 11b am Hohlrad 11 kuppelbar, wie noch näher zu beschreiben sein wird. Axial linksseitig zur Kupplungsbuchse 14 ist auf den Klauen 6b des Planetenradträgers 6 festliegend eine Scheibe 16 angeordnet, deren Funktion später noch erwähnt werden wird.

Auf dem axial äußerst linksseitigen Schaftteil des Planetenradträgers 6 ist auf einem Stellgewinde 6a axial verschiebbar ein Bremskonus 17 angeordnet, welcher zugleich als Träger für einen Satz Antriebssperrklinken 18 ausgebildet ist, welch letzterer unter Spannung einer Ringfeder stehend, ständig in ein Innengesperre 1a der Nabenhülse 1 eingreifen.

Das vorerwähnte Hohlrad 11 trägt auf dem mit der Innenverzahnung 11b versehenen Ansatzteil einen weiteren Satz federgespannter Antriebssperrklinken 19, welche je nach Lage des axial verschiebbar angeordneten Hohlrades 11 in ein Innengesperre 1b der Nabenhülse 1 in Eingriff treten können wie es beispielsweise in Figur 1 gezeigt wird, oder auch mittels einer Konusfläche 1c in der Nabenhülse 1 außer Eingriff gebracht werden können.

Der vorerwähnte Bremskonus 17 wird seinerseits unter Einwirkung einer Friktionsfeder 20 stehend, in noch zu beschreibender Weise bei Rückwärtsdrehen des Antreibers 3 auf dem Stellgewinde des Planetenradträgerschaftes nach axial links bewegt und spreizt dadurch einen Bremsmantel 24/25 auf, der seinerseits an einem mit Bremshebel 27 versehenen Hebelkonus 2 drehfest gehalten wird. Durch die Aufspreizung des Bremsmantels 24 in der Nabenhülse 1 wird diese zuverlässig gebremst.

Der vorerwähnte Schubklotz 12 steht, wie Figur 1 deutlich erkennen läßt, unter Spannung einer coaxialen Druckfeder 28, welche sich am Festkonus 4 auf der Nabenachse 5 abstützt und kann innerhalb des Schlitzes 5b in der Nabenachse 5 mittels der Zugstange 12a mit angeschlossener Zugkette 12b und Ansatzteil 12c axial nach rechts verschoben werden, zur Erzielung von anderen Gangschaltstufen, wie noch zu beschreiben sein wird. Der mit dem Ansatzteil 12c mittels Schaltzug verbundene Gangschalter ist hier nicht gezeigt.

In Figur 1 ist die beispielsweise gezeigte Mehrgangnabe in der Schaltstellung 5. Gang (großer Schnellgang) dargestellt. Der durch die Feder 28 belastete Schubklotz 12 befindet sich in der axial linken Stellung innerhalb des Nabenachsschlitzes 5b. Die Schiebehülse 13 befindet sich unter Wirkung einer coaxialen Druckfeder 34 stehend, in der axial linken Endstellung, welche durch die zur drehfesten Halterung der Schiebehülse 13 dienenden Achsklauen 5a bestimmt wird. Die Schiebehülse 13 wird umgeben von einer Zwischenhülse 29, welche vom Schubklotz 12 ohne Spiel durchdrungen wird, wie Figur 1 deutlich erkennen läßt. Diese Zwischenhülse 29 bildet den axialen Anschlag nach rechts für das Sonnenrad 10, welches linksseitig vom unter Wirkung der Druckfeder 30 stehenden Sonnenrad 9 beaufschlagt wird. In der Gangschaltstellung gemäß Figur 1 ist das Sonnenrad 10 mittels seiner radialen Kupplungselemente 10a mit der Schiebehülse 13 über radial nach außen gerichtete Kupplungselemente 13b drehfest verbunden. Damit ist das Sonnenrad 10 mittelbar drehfest auf der Nabenachse 5, während das Sonnenrad 9 auf der Nabenachse 5 in dieser Gangschaltstellung frei drehbar ist, weil infolge der Lage axial äußerst links keine Kupplungsverbindung mit den axialen Elementen 9a des Sonnenrades 9 mit der entsprechenden Kupplungsverzahnung 13a der Schiebehülse 13 besteht.

Wie in Figur 1 erkennbar, steht die Kupplungsbuchse 14 mit ihrer Verzahnung 14b im Eingriff im Antreiber 3/3b, während die Verzahnung 14a über die auf ihr drehfest angebrachte Mitnehmerscheibe 15 mit den Klauen 6b des Planetenradträgers 6 in Wirkverbindung steht. Der Planetenradträger 6 treibt über seine Lagerbolzen 7 die Planetenräder 8 an, wovon das Stufenrad 8b mit dem in vorbeschriebener Weise drehfesten Sonnenrad 10 einerseits und andererseits mit der Hohlradverzahnung 11a kämmt. Das Hohlrad 11 steht über den Antriebsklinkensatz 19 mit dem Innengesperre 1b in der Nabenhülse 1 in Verbindung.

Der Drehmomentenfluß hat im gezeigten 5. Gang folgenden Verlauf:
Kettenrad auf Antreiber 3 mit Innenverzahnung 3b - Außenverzahnung 14b auf Kupplungshülse 14 zur Außenverzahnung 14a mit Mitnehmerscheibe 15 - Klauen 6b am Planetenradträger 6 - Planetenradlagerbolzen 7 mit Planetenrad 8 - Stufenrad 8b auf dem drehfesten Sonnenrad 10 abrollend - Innenverzahnung 11a im Hohlrad 11 - Antriebssperrklinken 19 - Innengesperre 1b in der Nabenhülse 1. Die Antriebssperrklinken 18 auf dem mit dem Planetenradträger 6 langsamer umlaufenden Bremskonus 17 werden von dem Innengesperre 1a der Nabenhülse 1 überholt.

Zur Schaltstellung 4. Gang (kleiner Schnellgang) wird der Schubklotz 12 soweit nach axial rechts gezogen, daß das an der Zwischenhülse 29 unmittelbar anliegende Sonnenrad 10 unter Einfluß des unter Wirkung der Druckfeder 30 stehenden Sonnenrades 9 axial nach rechts verschoben wird bis zum Eingriff der Kupplungsklauen 9a in die Klauen 13a der Schiebehülse 13, während die Kupplungselemente 10a des Sonnenrades 10 nunmehr außer Eingriff mit der Schiebehülse 13/13b kommen. Die übrigen Elemente des Nabengetriebes bleiben in der bei der Schaltstellung 5. Gang geschilderten Lage. Der Drehmomentenfluß ist im 4. Gang nunmehr folgender:

Kettenzahnkranz auf Antreiber 3 mit Innenverzahnung 3b - Außenverzahnung 14b auf Kupplungsbuchse 14 zur linken Außenverzahnung 14a mit Mitnehmerscheibe 15 - Klauen 6b am Planetenradträger 6 - Lagerbolzen 7 mit Planetenrädern 8b/8a - Planetenstufenrad 8a am Sonnenrad 9 und in Hohlrad 11/11a abrollend - Antriebssperrklinken 19 am Hohlrad 11 - Nabenhülse 1 mit Innengesperre 1b.

Zur Schaltstellung Normalgang (3.Gang) wird der Schubklotz 12 noch weiter nach axial rechts gezogen, so daß die Kupplungsbuchse 14 nunmehr infolge Anliegens der Zwischenhülse 29 an der in der Kupplungsbuchse 14 konzentrischen Druckfeder 32 gegen die an der Mitnehmerscheibe 15 anliegende Druckfeder 35 nach axial rechts verschoben wird und mit der Außenverzahnung 14a in Eingriff mit der Innenverzahnung 11b des Hohlrades 11 kommt, während die zuvor wirksame Mitnehmerscheibe 15 außer Eingriff kommt. Das zuvor drehfest gekuppelte Sonnenrad 9 bleibt in seiner Lage, das Sonnenrad 10 bleibt weiterhin drehbar auf der Schiebehülse 13.

Der Drehmomentenfluß ist nun wie folgt:
Kettenzahnkranz auf Antreiber 3 mit Innenverzahnung 3b - Außenverzahnung 14b der Kupplungsbuchse 14 mit Außenverzahnung 14a - Hohlrad-Innenverzahnung 11b - Hohlrad 11 mit Antriebssperrklinken 19 - Innengesperre 1b in der Nabenhülse 1. - Der Planetenradträger selbst wird langsamer angetrieben, so daß die Sperrklinken 18 auf dem Bremskonus 17 von der Nabenhülse 1 überholt werden.

Zur Schaltstellung 2. Gang (großer Berggang) wird mittels der Schalteinrichtung der Schubklotz 12 noch mehr nach axial rechts gezogen, so daß über die Kupplungsbuchse 14 das Hohlrad 11 gegen die Spannung der Druckfeder 36 soweit verschoben wird, daß die Sperrklinken 19 auf dem Hohlrad an der Schaltkonusfläche 1c der Nabenhülse 1 außer Eingriff gebracht werden.

Die Axialbewegung des Schubklotzes relativ zur Schiebehülse 13 wird durch einen axial langen Schlitz 13c ermöglicht. Die Schiebehülse 13 ist in der in Figur 1 erkennbaren axialen Lage verblieben, die im Zusammenhang mit der Schaltstellung 4. Gang erwähnte drehfeste Kupplung des Sonnenrades 9 mit der Schiebehülse 13 besteht unverändert weiterhin. Entsprechend ist das Sonnenrad 10 drehbar auf der Schiebehülse 13.

Der Drehmomentenfluß im 2. Gang (großer Berggang) ist folgender:
Kettenkranz auf Antreiber 3 mit Innengesperre 3b - Außenverzahnung 14b der Kupplungsbuchse mit Außenverzahnung 14a - Innenverzahnung 11b im Ansatz des Hohlrades 11 - Innenverzahnung 11a des Hohlrades - Planetenstufenrad 8b - Stufenrad 8a am Sonnenrad 9 abrollend - Lagerbolzen 7 des axial festllegenden Planetenradträgers - Planetenradträger 6 mit Bremskonus 17 auf dem Stellgewinde 6a - Sperrklinkensatz 18 - Innengesperre 1a der Nabenhülse 1.

Zur Schaltstellung 1. Gang (kleiner Berggang) wird mittels der Schaltbetätigung der Schubklotz 12 noch weiter nach axial rechts gezogen, wobei nunmehr die Schiebehülse 13 infolge Anschlagens des Schubklotzes an das Ende des Längsschlitzes 13c selbst gegen die Druckfeder 34 nach axial rechts verschoben und dabei auch die Feder 32 komprimiert wird. Dadurch ist die zuvor noch bestehende Kupplungsverbindung zwischen dem Sonnenrad 9 und der Schiebehülse 13 gelöst worden, weil das Sonnenrad 9 der Verschiebebewegung der Schiebehülse 13 nicht mehr folgen kann, sondern infolge Anliegens des benachbarten Sonnenrades 10 an einer Zwischenscheibe 16 axial festgelegt wird. Diese Zwischenscheibe 16 ist auf den Klauen 6b des axial festliegenden Planetenradträgers 6 angebracht. - Die axial nach weiter rechts verschobene Schiebehülse 13 bildet mit ihren Kupplungsklauen 13b nunmehr eine drehfeste Kupplung mit dem axial rechts an der Zwischenscheibe 16 anliegenden Sonnenrad 10. Die Schiebehülse 13 selbst wird auch in dieser Lage von den Achsklauen 5a drehfest auf der Nabenachse 5 gehalten.

Der Drehmomentenfluß in der Schaltstellung 1. Gang ist wie folgt:
Kettenkranz auf Antreiber 3 mit Innenverzahnung 3b - Außenverzahnung 14b der Kupplungsbuchse 14 mit Außenverzahnung 14a - Innenverzahnung 11b im Hohlradansatz - Innenverzahnung 11a des Hohlrades 11 - Planetenstufenrad 8b auf Sonnenrad 10 kämmend - Planetenradlagerbolzen 7 im Planetenradträger 6 - Bremskonus 17 auf Stellgewindeansatz 6a - Sperrklinkensatz 18 in Innengesperre 1a der Nabenhülse 1 eingreifend.

Wie sich aus der vorstehenden Schilderung deutlich ergibt, weist die Ausführungsform einer erfindungsgemäßen Mehrgangnabe mit mehr als drei Gängen Insbesondere eine Anordnung von konzentrischen Hülsenelementen auf, mit deren relativer Verschiebung zueinander gegen Federspannung die Gangumschaltung bewirkt wird. Es sind dies zum einen die radial äußere Kupplungsbuchse 14, zum anderen gehört zu dieser Hülsenanordnung die auf der Schiebehülse 13 verschiebbare Zwischenhülse 29, welche unmittelbar vom Schubklotz 12 gesteuert, ihrerseits die Sonnenräder 9 und 10 axial steuern, und schließlich die radial innere Schiebehülse 13 selbst, welche unmittelbar auf der Nabenachse 5 verschiebbar ist und entsprechend der axialen Lage zur wechselweisen drehfesten Kupplung mit dem Sonnenrad 9 bzw. Sonnenrad 10 ausgebildet ist. Dabei ist zur Erzielung einer ständigen Kupplungsbereitschaft entweder an der Schiebehülse 13 oder auch an einem der Sonnenräder 9 bzw. 10, vorzugsweise am kleinen Sonnenrad 9 ein System von Abweisschrägen vorgesehen. - Die bei der Hülsenanordnung vorhandenen konzentrischen Druckfedern 28 und 34 können zweckmäßig mittels entsprechender Endkappen mit Axiallänge von Teilen voneinander distanziert werden.

Die vorstehende Beschreibung eines Ausführungsbeispieles einer Mehrgangnabe mit mehr als drei Gängen zeigt deutlich, daß lediglich ein einziges Planetengetriebe mit Planetenstufenrädern auf einem axial festliegenden Planetenradträger und mit einem axial verschiebbaren Hohlrad sowie wechselweise drehfest kuppelbaren Sonnenrädern unterschiedlicher Zähnezahl angewendet wird.

Dabei erfolgt die Steuerung der vorbeschriebenen fünf Gangschaltstufen ausschließlich von einer Seite der Nabenachse her mittels eines einzigen Schaltelements, wovon hier lediglich der Schubklotz 12 an der Zugstange 12a mit Zugkette 12b gezeigt ist.

Die vorbeschriebene Schaltnabe mit mehr als drei Gängen hat außer der äußerst einfachen und zuverlässigen Steuerung von lediglich einer Nabenseite her noch den Vorteil, daß in der Nabe eine Rücktrittbremseinrichtung untergebracht werden kann. Diese Rücktrittbremseinrichtung hat beispielsweise bei einem Bremsvorgang aus dem Fahren mit dem zuletzt geschilderten 1. Gang folgende Betriebsweise:
Bei Rückwärtsdrehen des Antreibers 3 wird diese Drehbewegung über den Drehmomentenpfad des 1. Ganges geleitet. Der rückwärtsdrehende Planetenradträger 6 verschiebt mittels seines Stellgewindes 6a den von der Friktionsfeder 20 gegen Mitdrehen gehaltenen Bremskonus 17 nach axial links, wodurch der am Hebelkonus 2 drehfest gehaltene Bremsmantel 24 innerhalb der Nabenhülse 1 im Bremssinn aufgespreizt wird. - Die Antriebssperrklinken 18 bleiben bei der Rückwärtsdrehung des Systems wirkungslos.

Aufgrund der axialen Klauen 6b am Planetenradträger 6 mit entsprechenden Schrägflächen wird im Zusammenwirken mit der Mitnehmerscheibe 15 auf der Kupplungsbuchse 14 und dem Hohlrad 11 mit Ansatzteil erreicht, daß nicht nur eine ständige Antriebsbereitschaft sondern ebenso eine stete Bremsbereitschaft besteht. Zu dieser ständigen Kupplungsbereitschaft innerhalb des Naben-Getriebesystems tragen auch die bereits erwähnten Schrägflächen entweder an der Schiebehülse 13 oder einem der Sonnenräder 9 bzw. 10 bei.

Der Bremsvorgang bei der Gangschaltstellung 2. und 3. Gang (großer Berggang bzw. Normalgang) erfolgt jeweils mit der kleineren Getriebeübersetzung, die durch den Drehmomentenfluß über das Sonnenrad 9 gegeben ist.

Bei einer Schaltstellung 4. bzw. 5. Gang wird das Nabengetriebe beim Bremsvorgang umgangen. In diesen beiden Schaltstellungen ist - wie beschrieben - die Kupplungsbuchse 14 über die Mitnehmerscheibe 15 unmittelbar mit dem Planetenradträger 6 verbunden. Dieser Drehmomentenweg bleibt beim Rückwärtsdrehen des Antreibers 3 erhalten, so daß ohne zwischengeschaltete Getriebestufen der Bremskonus 17 vom rückwärtsdrehenden Planetenradträger 6 verschoben wird mit der Folge eines Aufspreizens der Bremsmantelteile 24, wodurch in bekannter Weise eine Bremsung der Nabenhülse 1 bewirkt wird. Die beim Antrieb im 4. bzw. 5. Gang wirksamen Sperrklinken 19 auf dem Hohlrad 11 bleiben hierbei unbeteiligt.

Die für eine Schaltnabe mit mehr als drei Gängen, welche wie vorstehend beschrieben worden ist, von einer Seite der Nabenachse her mittels eines einzigen Elements steuerbar ist, beispielsweise verwendbaren einzelnen Bauelemente werden nachstehend gesondert beschrieben anhand der schematischen Zeichnungsfiguren 2 bis 28.

Das Ziel der nachstehend beschriebenen Elemente einer Mehrgangnabe ist es, eine mit mehr als drei Gängen ausgestattete und eine Rücktrittsbremseinrichtung aufweisende Nabe zu schaffen, die ein Höchstmaß an Betriebssicherheit, kombiniert mit ständiger Bremsbereitschaft bietet.

Die folgenden Beschreibungen beziehen sich alle für eine Nabe, dessen einziges Planetengetriebe mit Stufenplanetenrädern ausgestattet ist, welches mit zwei wechselweise festsetzbaren Sonnenrädern kombiniert ist. Insbesondere wird hier auf Maßnahmen eingegangen, die den beim Umschalten der Sonnenräder gegebenenfalls auftretenden, die Funktionssicherheit der Mehrgangnabe beeinträchtigenden Leerlauf der Sonnenräder verhindern können.

Weiterhin ergeben sich aus der nachstehenden Beschreibung spezieller Konstruktionselemente Lösungswege, wie für den Benutzer derartiger Naben die Handhabung durch Bedienung nur eines Schaltzuges, der von nur einer Nabenseite auf die Getriebeelemente steuernd einwirkt, wesentlich vereinfacht werden kann.

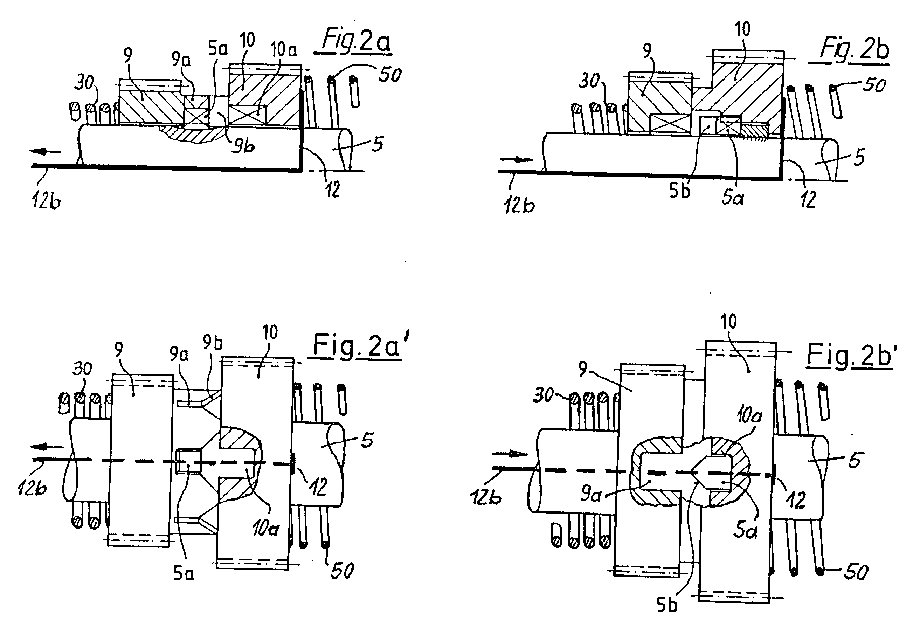

Bei den Lösungsmöglichkeiten sind mehrere Gruppen zu unterscheiden. So zeigen die Figuren 2 bis 11 Maßnahmen zur Verhinderung von Leerlauf und zwar durch eine Zwangssteuerung im Bereich der Sonnenräder, wobei spezielle Ausgestaltungen und Formgebungen der Kupplungselemente getroffen werden.

Die Figuren 2a und 2a' zeigen eine mit einer Kupplungsverzahnung versehenen Nabenachse 5. Die Kupplungszähne 5a haben parallele Flanken zum Eingriff in jeweils eines der beiden auf der Nabenachse verschiebbaren Sonnenräder 9 bzw. 10. Das Kupplungsprofil eines der beiden Sonnenräder - in der Figur das kleinere Rad - ist als axialer Fortsatz 9a des Sonnenradkörpers ausgebildet und mit Schrägflächen 9b ausgestattet. Beim Umschalten der beiden Sonnenräder 9 bzw. 10, d.h. der wechselweisen drehfesten Kupplung tritt üblicherweise ein Bereich auf, in dem die Kupplungszähne in keines der Sonnenräder 9 bzw. 10 eingreifen dürfen, um das Getriebe nicht zu blockieren. In diesem Übergangsbereich bewirken die Schrägflächen - im vorliegenden Fall am kleinen Sonnenrad 9 - bedingt durch die relative Drehung der Sonnenräder 9 bzw. 10 zueinander, daß eben das kleinere Sonnenrad 9 nach axial links abgewiesen wird, während gleichzeitig das größere Sonnenrad 10 durch die Kraft einer hier nicht gezeigten Feder nach links verschoben wird und so mit den Kupplungszähne 5a der Nabenachse 5 in Wirkverbindung treten kann. So ist mit einfachen Mitteln sichergestellt, daß ständig eines der beiden Sonnenräder 9 bzw. 10 mit der Nabenachse 5 gekuppelt und so die Mehrgangnabe als solche antriebs- oder bremsbereit ist.

Die Verstellung der Sonnenräder 9 und 10 erfolgt durch einen Schubklotz 12, der durch ein Betätigungsseil 12b nach links gezogen werden kann gegen die Wirkung der Feder 30. An dem Sonnenrad 10 liegt eine Feder 50 an, die das Sonnenrad 10 nach links zu schieben versucht. In den Fig. 2a und 2a'ist diejenige Stellung gezeichnet, in der das Sonnenrad 9 gegenüber der Nabenachse 5 durch den Eingriff der Kupplungszähne 5a in die achsparallelen Klauenflanken 9a unverdrehbar festgelegt ist, so daß das Sonnenrad 9 als Teil des Planetengetriebes wirksam ist, während das Sonnenrad 10 frei durchdrehen kann. Wenn durch Ziehen des Schaltzugs 12 nach links die beiden Sonnenräder 9 und 10 gemeinsam so weit nach links geschoben werden, daß die Zahnlücken 10a die Kupplungszähne 5a voll aufnehmen, so ist diejenige Schaltstellung erreicht, in der das Sonnenrad 10 als Teil des Planetengetriebes wirksam ist und das Sonnenrad 9 frei mitdreht. Es ist davon auszugehen, daß die axiale Länge der Kupplungszähne 5a maximal so groß ist als die axiale Länge der Schrägen 9b, so daß die Kupplungszähne 5a in keinem Fall gleichzeitig im Eingriff mit den geradlinigen Flanken 9a und den geradlinigen Flanken 10a sein können. Wenn nun beim Verschieben der Sonnenräder 9 und 10 zum Zwecke des Gangschaltens nach links infolge einer Fehleinstellung des Betätigungsschaltzugs 12b die Flanken 10a nicht in Eingriff mit den Kupplungszähnen 5a kommen und andererseits die Kupplungszähne 5a nicht mehr im Eingriff mit den Flanken 9a sind, so kann auch kein Unglück geschehen: wenn dann nämlich durch Drehen des Antreibers das Planetengetriebe umläuft, so wird das Sonnenrad 9 durch das Zusammenwirken der Kupplungszähne 5a mit den schrägen Flanken 9b gegen die Wirkung der relativ harten Feder 30 nach links verschoben. Dann kann das Sonnenrad 10 unter der Wirkung der weicheren Feder 50 nach links folgen, so daß die Flanken 10a dann in Eingriff mit den Kupplungszähnen 5a kommen, so daß auch jetzt wieder eines der Sonnenräder 9, 10, nämlich das Sonnenrad 10, auf der Mabenachse 5 gegen Verdrehung gesichert ist und damit das Planetengetriebe drehmomentübertragend wirksam ist, d. h. also sowohl ein Antriebsmoment als insbesondere auch ein Bremsmoment übertragen werden kann. Ist die Verschiebung der Sonnenräder 9 und 10 nach links so weit gegangen, daß die Zahnlücken 10a die Kupplungszähne 5a nur teilweise aufnehmen, so wird das Sonnenrad 9 durch die Wechselwirkung der Kupplungszähne 5a mit den schrägen Flanken 9b ebenfalls nach links verschoben und das Sonnenrad 10 kann nach links so lange folgen, bis die Kupplungszähne 5a in axialer Richtung vollständig von den Zahnlücken 10a aufgenommen sind.

Der in den Fig. 2a und 2a' gezeigte Zustand ist dadurch erreicht worden, daß der Schaltzug 12b nach rechts losgelassen worden ist. Wenn dabei der Zustand gemäß Fig. 2 und 2a' erreicht worden ist, so ist alles in Ordnung: das Sonnenrad 9 ist auf der Nabenachse 5 drehfest gelagert und das Sonnenrad 10 kann frei drehen. Sollte aufgrund einer Fehleinstellung des Schaltzuges 12b das Sonnenrad 9 die in Fig. 2a und 2a' dargestellte Stellung nicht erreicht haben, so daß die Kupplungszähne 5a nur eine geringe axiale Überdeckung mit den geraden Flanken 9a haben, so ist gleichwohl das Sonnenrad 9 als Teil des Planetengetriebes wirksam und das Sonnenrad 10 kann sich frei drehen. Sollte dann infolge einer Überlastung der nur mit kurzer Überdeckung zusammenwirkenden Bereiche der Kupplungszähne 5a und der geraden Flanken 9a eine Verformung in diesen Bereichen eintreten, die dazu führt, daß das Sonnenrad 9 nicht mehr drehfest festgelegt ist, so kommen die Kupplungszähne 5a wieder in Eingriff mit den schrägen Flanken 9b. Dann wird das Sonnenrad 9 durch das Zusammenwirken der Kupplungszähne 5a und der Flanken 9b wieder nach links geschoben, so daß das Sonnenrad 10 mit den Flanken 10a wieder in Eingriff mit den Kupplungszähnen 5a treten kann und somit wieder das Sonnenrad 10 als Teil des Planetengetriebes wirksam wird. Auf diese Weise ist sichergestellt, daß auch bei Fehleinstellungen des Schaltzugs 12b (die natürlich immer möglichst bald beseitigt werden sollen, um eine übermäßige Belastung von Getriebeteilen zu vermeiden) immer eines der Sonnenräder 9, 10 als Teil des Planetengetriebes wirksam ist, also immer ein Antriebsmoment und insbesondere auch ein Bremsmoment übertragen werden kann.

Die Figuren 2b und 2b' stellen eine Ausführung ähnlich den Figuren 2a und 2a' dar, jedoch sind hier die Schrägflächen, die das zwangsläufige Abweisen jeweils eines der beiden Sonnenräder 9 bzw. 10 im Übergangsbereich bewirken sollen - im Bild des kleineren Sonnenrades 9 - an den Kupplungszähnen 5a eines mit der Nabenachse 5 fest verbundenen, ringförmig die Nabenachse umschließenden Bauteiles angeordnet.

Die in den Figuren 2a, 2a' und 2b, 2b' beschriebenen Varianten haben den Vorteil, daß auf der Nabenachse 5 nur eine einzige Kupplungsverzahnung 5a erforderlich ist.

Die Anordnung nach den Fig. 2b und 2b' verhält sich genauso wie diejenige nach den Fig. 2a und 2a', wobei nur die Schrägen 5b nunmehr an dem Schaltzahn 5a angebracht sind.

Die Figuren 3 und 3a zeigen eine Anordnung, bei der die beiden Sonnenräder 9 und 10 zum Gangwechsel zwischen den beiden Kupplungsverzahnungen 5a der Nabenachse 5 verschoben und auf diese Weise jedes Sonnenrad 9 bzw. 10 mit seiner hierfür vorgesehenen Kupplungsverzahnung 9a bzw. 10a in Eingriff gebracht werden kann. Die Vermeidung von Leerlauf im Übergangsbereich zwischen den einzelnen Gangschaltstufen wird wieder über Schaltschrägen, die am Kupplungsprofil eines der Sonnenräder 9 bzw. 10 - im Bild am kleineren Sonnenrad 9, 9b - angeformt sind, bewirkt.

In den Fig. 3 und 3a wird davon ausgegangen, daß die Feder 50 stärker als die Feder 30 ist und die beiden Sonnenräder 9, 10 durch die Schaltvorrichtung gegen den Druck der Feder 50 nach rechts geschoben werden. Das Verhalten der Anordnung nach Fig. 3 und 3a entspricht aufgrund der Schrägflanken 9b dem Verhalten der Ausführungsform nach den Fig. 2a und 2a'. Eine Besonderheit, die sich aufgrund des Zusammenwirkens der beiden Sonnenräder 9 und 10 mit verschiedenen Kupplungszähnen 5a und 5a' ergibt, ist das Vorhandensein einer Druckfeder 51 zwischen den beiden Sonnenrädern 9 und 10. Wenn von der Schaltstellung gemäß den Fig. 3 und 3a in eine Schaltstellung geschaltet wird, bei der die Kupplungszähne 5a' in die Kupplungsverzahnung 10a eingreifen, so könnte der Fall eintreten, daß die axial gerichteten Stirnflächen der Kupplungsverzahnung 10a gegen axiale Stirnflächen der Kupplungszähne 5a' anschlagen und die Kupplung des Sonnenrads 10 mit den Kupplungszähnen 5a' nicht hergestellt werden kann. Dann nähern sich die Sonnenräder 9 und 10 kurzfristig unter Kompression der Feder 51 an, solange, bis infolge des Weiterdrehens des Planetengetriebes die Kupplungszähne 5a' unter dem Druck der komprimierten Feder 51 in die Kupplungsverzahnung 10a hineinspringen können.

Die Figuren 4 und 4a geben ein Ausführungsbeispiel wieder, dessen Funktionsweise ähnlich der in den Figuren 3 und 3a beschriebenen Anordnung ist. Abweichend zu der Ausgestaltung gemäß den Figuren 3 und 3a sind hier die Abweisflächen 5b zur zwangsweisen Verschiebung der Sonnenräder 9 bzw. 10 an einer der beiden Kupplungsverzahnungen 5a, 5a' der Nabenachse 5 angeordnet - im Bild an der für das kleinere Sonnenrad 9 vorgesehenen Verzahnung 5b.

Die in den Figuren 3, 3a und 4, 4a beschriebenen Ausführungsformen haben den Vorteil, daß jede der Achsverzahnungen 5a speziell für ein optimales Kupplungsverhalten mit dem jeweiligen Sonnenrad 9 bzw. 10 abgestimmt werden kann.

Die Figuren 5 und 5a zeigen ein Ausführungsbeispiel, bei dem die beiden Sonnenräder 9 bzw. 10 axial auf nicht näher dargestellte Weise fixiert sind. Zum Umschalten wird ein axial verschiebbar ausgebildetes im Bereich axial zwischen den Sonnenrädern 9 und 10 angeordnetes Kupplungselement mit dem Innenprofil des jeweils einzuschaltenden Sonnenrades 9 bzw. 10 in Eingriff gebracht.

Im Übergangsbereich zwischen den Gängen bewirken die Schrägflächen 9b bzw. 10b am Kupplungsprofil 9a bzw. 10a eines der beiden Sonnenräder 9 bzw. 10 das Abweisen und zwangsweise Einkuppeln in das andere Sonnenrad 9 bzw. 10.

In Figur 6 ist eine Ausführung dargestellt, die weitgehend mit derjenigen gemäß den Figuren 5 und 5a identisch ist. Lediglich die Schrägflächen, die das zwangsweise Einkuppeln bewirken, sind statt an den Sonnenrädern nun an dem Kupplungselement 5a', 5b angeordnet und weisen auf eines der beiden Sonnenräder 9 bzw. 10.

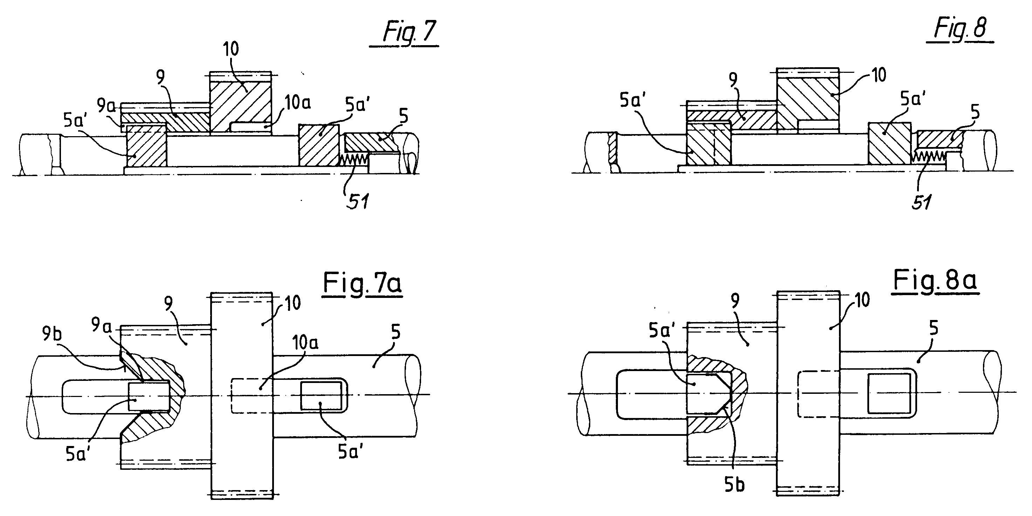

Die Figuren 7 und 8 zeigen je eine Variante mit axial festgelegten Sonnenrädern 9 bzw. 10. Es sind zwei Kupplungselemente verschiebbar an der Nabenachse 5 vorgesehen. Zum Umschalten werden die außerhalb des Sonnenradpaketes 9/10 angeordneten Kupplungselemente 5a' wechselweise mit dem einen oder anderen Sonnenrad-Kupplungsprofil 9a bzw. 10a zum Eingriff gebracht.

In der Ausführungsform nach Fig. 7, 7a, 8, 8a übernimmt die Druckfeder 51 wieder die Funktion der Druckfeder 51 aus der Ausführungsform von Fig. 3 und 3a.

Die Schaltschrägen 9b zur Zwangsumsteuerung im Übergangsbereich sind dabei in der Ausführung gemäß Figur 7 und 7a an dem Innenprofil eines der beiden Sonnenräder 9 angeordnet, bei der Ausführung gemäß Figur 8 jedoch an einem der beiden Kupplungselemente 5a', 5b.

Die Figur 9 stellt eine Ausführung dar, bei der im Bereich zwischen den Sonnenrädern 9 und 10 eine auf einer drehfesten Schiebehülse 13 angeordnete Kupplungsverzahnung 13a zum wechselweisen Festhalten eines der beiden Sonnenräder 9 bzw. 10 vorgesehen ist. Die Sonnenräder 9 bzw. 10 sind axial fixiert.

Eines der Sonnenräder - im Bild das kleinere Sonnenrad 9 - ist auf der Nabenachse 5, das andere Sonnenrad 10 auf der Schiebehülse 13 gelagert, welch letztere drehfest, jedoch axial verschiebbar auf der Nabenachse angeordnet ist. Zur Vermeidung von Leerlauf zwischen den Gängen ist die Kupplungsverzahnung eines der Sonnenräder 9 bzw. 10 mit Abweisschrägen 9b versehen, wie Figur 9a erkennen läßt. Es ist jedoch auch möglich, die Kupplungsverzahnungen 9a bzw. 10a der Sonnenräder 9 bzw. 10 parallel auszubilden und die Abweisschrägen, die nach axial links oder rechts gerichtet sein können, an der Kupplungsverzahnung 13a der Schiebehülse 13 anzubringen.

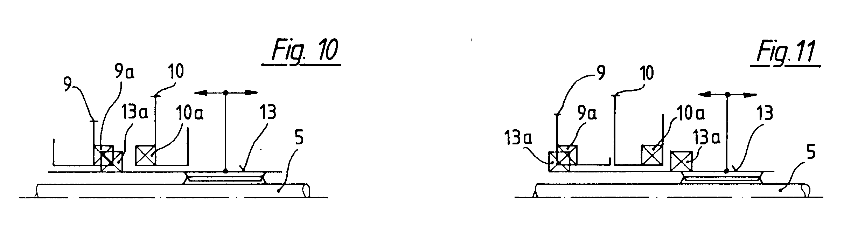

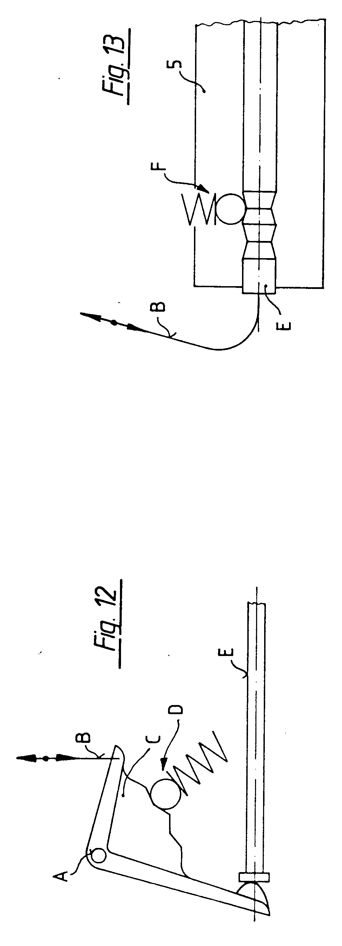

Die Figuren 10 und 11 zeigen jeweils eine Ausführung, bei der die axial festgelegten Sonnenräder 9 bzw. 10 auf einer drehfesten Schiebehülse 13 gelagert sind, wobei diese Schiebehülse 13 auf der Nabenachse 5 drehfest jedoch axial verschiebbar angeordnet ist. Die Kupplungszähne der Schiebehülse 13 zum Eingriff in die Innenprofile 9a bzw. 10a der Sonnenräder 9 bzw. 10 ist in Figur 10 axial zwischen den Sonnenrädern vorgesehen, während in Figur 11 axial außerhalb der Sonnenräder 9 und 10 die Kupplungszähne 13a an der Schiebehülse 13 vorgesehen sind. Durch Schalten der Schiebehülse 13 auf der Nabenachse 5 nach axial links oder rechts, läßt sich wahlweise das große oder das kleine Sonnenrad, 9 bzw. 10, drehfest mit der Nabenachse 5 kuppeln. Zur Vermeidung von Leerlauf zwischen den Gängen kann entweder das Kupplungsprofil 9a bzw. 10a eines der Sonnenräder 9 bzw. 10 oder die Kupplungszähne 13a der Schiebehülse 13 mit Abweisschrägen ausgestattet sein.

In den Figuren 12 bis 21 sind Systeme gezeigt, die zum Umschalten der beiden Sonnenräder dienen und dabei gleichzeitig verhindern, daß Schaltstellungen zwischen den Gängen eingelegt werden können, wodurch Leerlauf entstehen kann.

Die Figur 12 zeigt einen Umlenkhebel A der über einen Zug-Druck-Schaltzug B betätigt wird und an einer Kurve C eine Rastung D aufweist, die nur solche Schaltstellungen zuläßt, welche in der Getriebenabe zu den vorgesehenen funktionssicheren Überdeckungsverhältnissen zwischen den wechselweise zu kuppelnden Sonnenrädern und der Nabenachse führen.

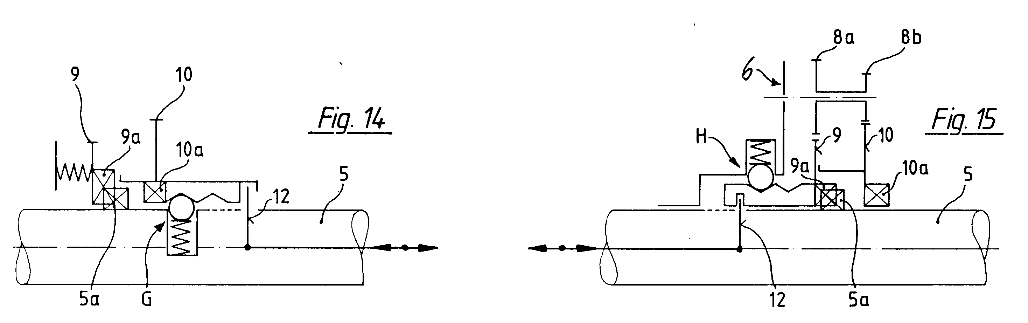

Figur 13 stellt einen Schaltstift E dar, der mit der Nabenachse 5 verrastet ist mittels einer Reihe von Rastkerben, welche z mit einer Rastkugel F zusammenwirken können. Betätigung des Schaltstiftes E erfolgt über einen Zug-Druck-Schaltzug B, die Rastung F läßt keine funktionsstörenden Zwischenstellungen zu.Die Rastung kann auch an einem auf der Achse befestigten Bauteil erfolgen. Die Figuren 14 und 15 zeigen zwei Varianten, bei den jeweils eines der Sonnenräder 9 bzw. 10, welche für sich axial verschiebbar sind, entweder mit der Nabenachse 5 oder dem Planetenradträger 6 mittels Rastelementen G bzw. H verrastbar ist.

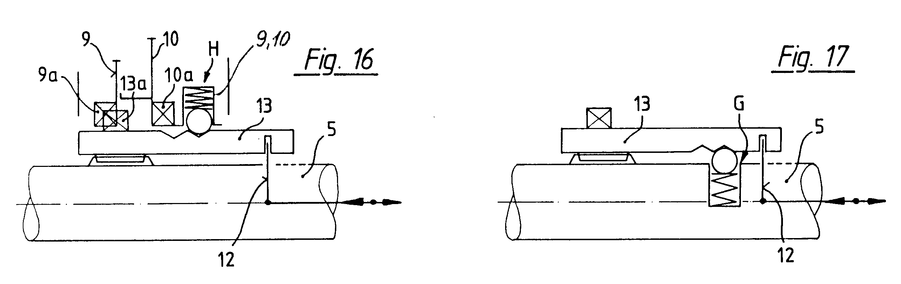

Die Figuren 16, 17 und 18 stellen Schaltsysteme dar, bei denen eine mit der Nabenachse 5 drehfeste, aber axial verschiebbare Schiebehülse 13 verrastet ist.

In Figur 16 erfolgt diese Verrastung zwischen der Schiebehülse 13 und einem der axial festgelegten Sonnenräder 9 bzw. 10.

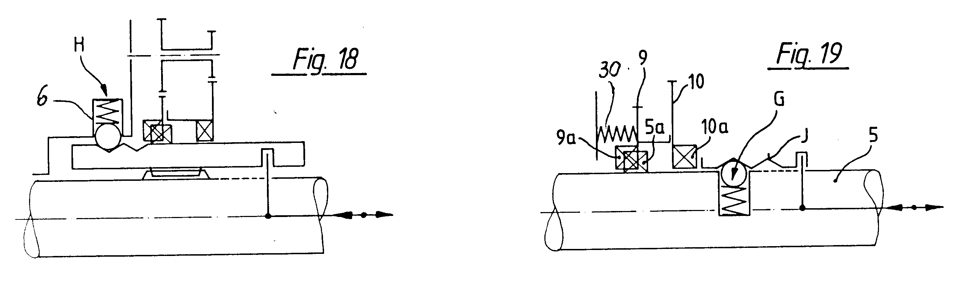

In der Darstellung gemäß Figur 17 wird die Verrastung zur Nabenachse 5 hin, und in der Darstellung gemäß Figur 18 zum Planetenradträger 6 vorgenommen.

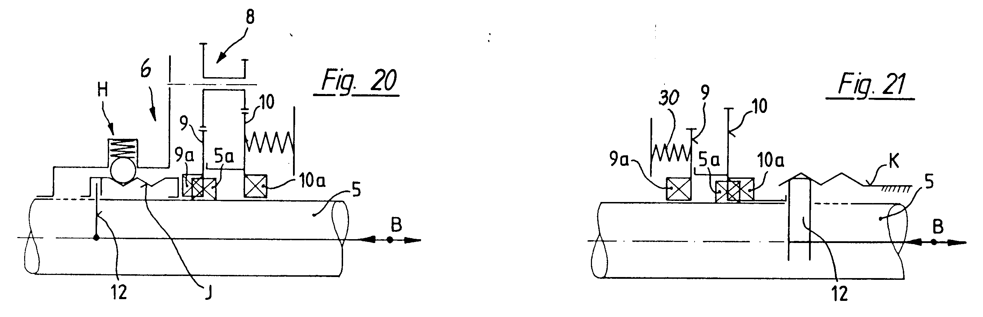

Die Figuren 19 und 20 zeigen Varianten, bei denen zum Umschalten der auf der Nabenachse 5 verschiebbar gelagerten Sonnenräder 9 bzw. 10 eine Hilfshülse I, die zur Nabenachse 5 oder zum Planetenradträger 6 verrastet ist, verwendet wird.

Die Figur 21 stellt eine Anordnung dar, bei welcher der Schubklotz 12 selbst in einem axial fixierten Federelement K zur Vorgabe der richtigen Schaltwege einrastet. Die Sonnenräder 9 und 10 sind axial verschiebbar zur Nabenachse 5 angeordnet, welche ihrerseits Kupplungszähne 5a zum Zusammenwirken mit den Kupplungsflächen 9a bzw. 10a aufweist. Der Schubklotz 12 kann dabei auf eine Schiebehülse 13, eine Hilfshülse I oder wie gezeigt, direkt auf die Sonnenräder 9 bzw. 10 wirken. - Auch diese Anordnung wird, wie alle übrigen vorgenannten Systeme auch, ebenfalls über einen Zug-Druck-Schaltzug B betätigt.

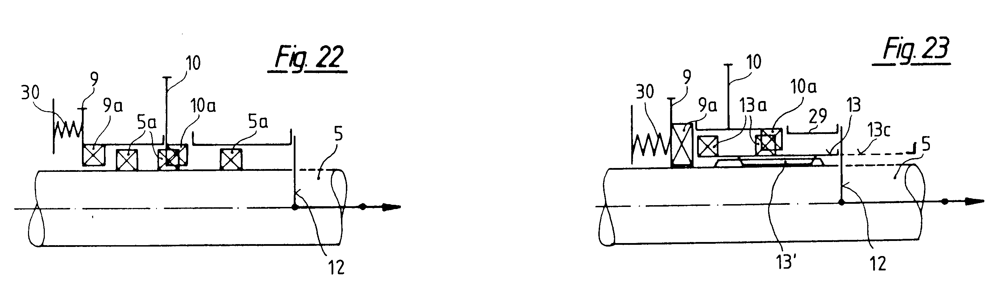

In den Figuren 22 bis 26 sind Schaltungssysteme gezeigt, die in nur einer Richtung geschaltet werden müssen und auf diese Weise einen Nabenaufbau mit insgesamt nur einem Schaltzug oder einem Schaltstift als Steuerelement ermöglichen.

Die Figur 22 stellt eine Ausführung dar, bei der die Nabenachse 5 mit drei in einem gewissen Abstand zueinander angeordneten Kupplungsverzahnungen 5a ausgestattet ist. Die beiden axial verschiebbaren, auf der Nabenachse gelagerten Sonnenräder 9 und 10 weisen ihrerseits Kupplungsverzahnungen 9a bzw. 10a auf, die mit den Kupplungsverzahnungen 5a auf der Nabenachse 5 wahlweise in Eingriff bringbar sind. Dabei geht die Umschaltung folgendermaßen vor sich:
In der Ausgangsstellung ist - wie z.B. in der Figur 22 dargestellt - das größere Sonnenrad 10 mit der axial mittleren Nabenachs-Verzahnung 5a gekuppelt.

Zum ersten Gangwechsel vom 5. zum 4. Gang wird der Schubklotz 12 soweit nach axial rechts verschoben, daß durch die Kraft der angedeuteten Feder 30 das größere Sonnenrad 10 entkuppelt und zugleich das kleinere Sonnenrad 9 in die axial linke Achsverzahnung 5a eingekuppelt wird.

Im 3. und 2. Gang bleibt die Schaltstellung der Sonnenräder 9 bzw. 10 unverändert.

Durch weiteres Verschieben des Schubklotzes 12 nach axial rechts wird das kleine Sonnenrad 9 aus der mittleren Verzahnung 5a der Nabenachse 5 herausgedrückt und das große Sonnenrad tritt mit der axial rechten Kupplungsverzahnung 5a der Nabenachse 5 in Wirkverbindung zum 1. Gang. - Das Schalten der Gangstufen erfolgt in einer Richtung des Schubklotzes 12.

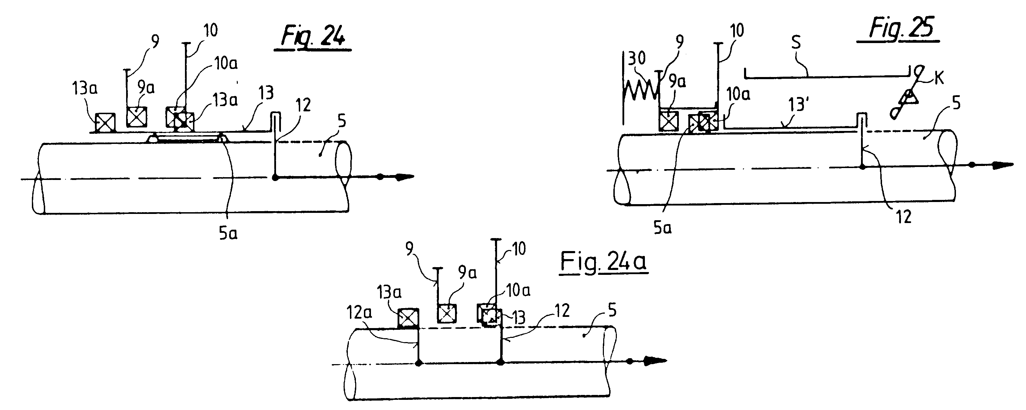

Die Figur 23 zeigt eine andere Anordnung, welche außer den axial verschiebbaren Sonnenrädern 9 und 10 eine mit zwei Kupplungsverzahnungen 13a zum Eingriff in die Sonnenräder 9 bzw. 10 und einem Innenprofil 13' zur drehfesten Kupplung mit der Nabenachse 5 ausgestattete Schiebehülse 13 aufweist. Eines der Sonnenräder - im Bild das kleinere Sonnenrad 9 - ist auf der Nabenachse 5 gelagert, das andere Sonnenrad 10 ist auf der Schiebehülse 13 gelagert.

Der Schaltvorgang ist folgender:

In der Ausgangsstellung (Figur 23 = 5. Gang) ist das große Sonnenrad 10 mit seinem Kupplungsprofil 10a im Eingriff mit der axial rechten Kupplungsverzahnung 13a der Schiebehülse 13. Wird der Schubklotz 12 nun nach axial rechts bewegt, bringt die angedeutete Feder 30 das kleine Sonnenrad 9 nach rechts in Wirkverbindung mit der linken Kupplungsverzahnung 13a der Schiebehülse 13 und löst, dabei die Kupplungsverbindung zwischen dem großen Sonnenrad 10 und der Schiebehülse 13.

Im 3. und 2. Gang bleibt die Stellung der Sonnenräder 9 bzw. 10 unverändert.

Durch nochmaliges Weiterschalten des Schubklotzes nach axial rechts wird nun die Schiebehülse 13 in Folge Anlage des Schubklotzes 12 an der axial rechten Begrenzung des Längsschlitzes 13c in der Schiebehülse 13 mit verschoben. Dabei löst sich die Kupplungsverbindung zwischen dem kleinen Sonnenrad 9 und der Schiebehülse 13, während gleichzeitig das große Sonnenrad 10 mit der Schiebehülse 13 wieder in Wirkverbindung tritt, was der Schaltstellung 1. Gang entspricht. - Die Schaltbetätigung erfolgt in dieser Ausführungsform in einer axialen Richtung.

In Figur 24 ist ein Aufbau gezeigt, der mit einer mit der Nabenachse 5 drehfest verbundenen, aber axial verschiebbaren Schiebehülse 13 mit zwei Kupplungsverzahnungen 13a zum Eingriff in die Kupplungsprofile 9a bzw. 10a der Sonnenräder 9 bzw. 10 ausgestattet ist. Auf dieser Schiebehülse 13 sind die beiden Sonnenräder 9 und 10 drehbar, aber axial fixiert im Planetenradträger gelagert.

Von der Ausgangsstellung - z.B. wie in Figur 24 dargestellt -, in der das große Sonnenrad 10 mit der axial rechten Kupplungsverzahnung 13a der Schiebehülse 13 zusammenwirkt, wird die Schiebehülse über den Schubklotz 12 nach axial rechts geschaltet. Dabei tritt die axial linke Kupplungsverzahnung 13a der Schiebehülse mit dem kleinen Sonnenrad 9 in Verbindung, während sich der Kupplungseingriff zwischen dem großen Sonnenrad 10 und der Schiebehülse 13 löst.

Durch nochmaliges axiales Weiterschalten der Schiebehülse 13 mittels des Schubklotzes 12 weiter in derselben Richtung löst sich deren linke Kupplungsverzahnung 13a vom kleinen Sonnenrad 9 und greift wieder in das Kupplungsprofil 10a des großen Sonnenrades 10 ein.

Bei den Anordnungen nach den Figuren 22, 23 und 24 können zur Vermeidung von Leerlauf zwischen den Gängen, wie schon in den Figuren 1 bis 8 beschrieben, die Kupplungszähne 5a der Nabenachse 5, die Kupplungszähne 13a der Schiebehülse 13 oder die Innenprofile 9a, 10a der Sonnenräder 9 bzw. 10 mit Schrägflächen zur Zwangssteuerung des Kupplungseingriffes ausgestattet sein. Außerdem können auch Vorkehrungen, wie sie im Zusammenhang mit Figur 9 im Hinblick auf die Schiebehülse 13 beschrieben sind, in Kombination mit den Anordnungen gemäß den Figuren 22, 23 und 24 einen Leerlauf zwischen den Gängen verhindern.

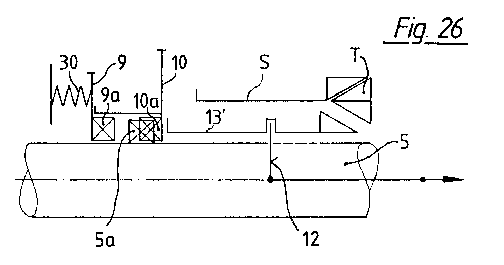

In den Figuren 25 und 26 ist jeweils ein System dargestellt, bei dem durch einen Hebel K oder auch durch ein Steigzahnsystem eine Bewegungsrichtungsumkehr einer speziellen Steuerhülse S erreicht wird.

In der Grundstellung ist jeweils das große Sonnenrad 10 mit der Kupplungsverzahnung 5a der Nabenachse 5 in Eingriff.

Durch Schalten des Schubklotzes 12 nach axial rechts wird durch die angedeutete Feder 30 das kleine Sonnenrad 9 in die Achsverzahnung 5a eingekuppelt und gleichzeitig die Verbindung zwischen der Nabenachse 5 und dem großen Sonnenrad 10 gelöst.

Wird noch weiter nach axial rechts geschaltet, trifft in der Ausgestaltung gemäß Figur 25 die Schiebehülse 13' auf den Kipphebel K, der die Steuerhülse S nach axial links schiebt und damit auch das große Sonnenrad 10, welches somit wieder in die Achsverzahnung 5a einkuppelt, während das Sonnenrad 9 - gegen die Feder 30 - aus dem Kupplungseingriff mit der Achsverzahnung 5a geschoben wird. - Als Schaltelement für den Kipphebel K kann auch ein Schubklotz bzw. ein verschiebbares Kupplungsrad dienen. In Figur 26 trifft die Schiebehülse 13' auf ein Steigzahnelement T, das sich dabei verdreht und dadurch die Steuerhülse S nach axial links verschiebt. Dadurch wird die Verbindung des kleinen Sonnenrades 9 mit der Achse 5, 5a wieder gelöst und das große Sonnenrad 10 durch entsprechende Verschiebung wieder eingekuppelt mit der Nabenachse 5. Mittels der Steigzahnanordnung T ist eine Schaltbetätigung in nur einer Richtung erforderlich.

Die Wirkungsweise der Fig. 26 kann man sich so vorstellen: wenn die Schiebehülse 13' nach rechts gegen den die Nabenachse umschließenden Ring T anläuft, so bewirkt die unverdrehbare Hülse 13' über eine erste Paarung von nicht dargestellten, gewindeartig zusammenwirkenden Nocken der Hülse 13' und des Rings T eine Drehung des Rings T um die Nabenachse 5. Zwischen der Steuerhülse S und dem Ring T ist eine weitere Paarung von gewindeartig zusammenwirkenden Nocken angebracht, die bei der vorher beschriebenen Drehung des Ringes T eine Verschiebung der Steuerhülse S nach links bewirken.

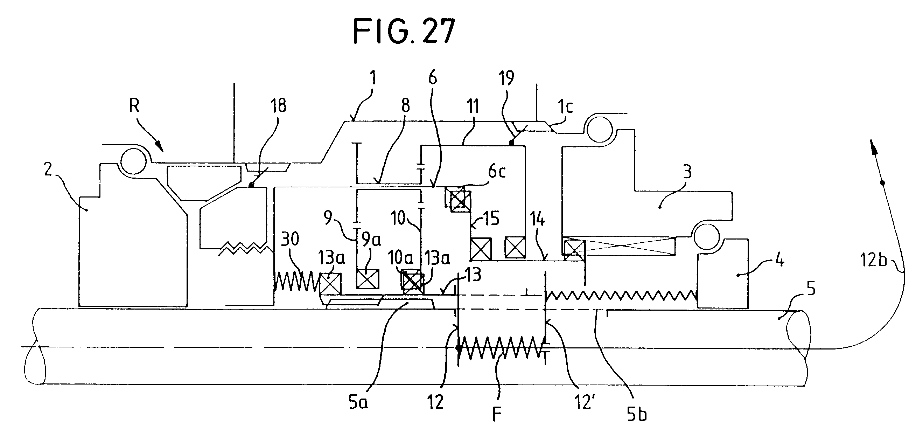

Figur 27 stellt ein weiteres unter Verwendung der vorbeschriebenen speziellen Bauelemente ausgestaltbares Ausführungsbeispiel einer 5-Gang-Rücktrittbremsnabein der Schaltstellung 5. Gang dar, bei der die Sonnenräder 9 und 10 auf einer drehfest gelagerten Schiebehülse 13 gelagert sind, axial jedoch am Planetenradträger festgelegt. Die Kupplung 14 zwischen dem Planetenradträger 6, dem Hohlrad 11 und dem Antreiber 3 ist ebenfalls von 3-Gang-Naben her bekannt. Die Gangumschaltung erfolgt bei dieser Nabe ebenfalls nur in einer Richtung und zwar auf folgende Weise:
Durch Ziehen an dem einzigen Schaltzug 12b werden beide Schubklötze 12 und 12' sowie unter der Wirkung der Feder 30 die Schiebehülse 13 soweit nach axial rechts verschoben, bis das große Sonnenrad 10 auf der Schiebehülse 13 ausgekuppelt und das kleine Sonnenrad 9 eingekuppelt ist mittels der Elemente 9a/13a. - 4. Gang -

Durch Weiterschalten, d.h. Ziehen am Schaltzug in der bisherigen Richtung wird nun die Verbindung zwischen dem Kupplungsrad 14, welches immer in den Antreiber 3 eingreift, mit dem Planetenradträger 6 gelöst und gleichzeitig das Hohlrad 11 mit dem Kupplungsrad 14 verbunden- 3. Gang. Werden die Schubklötze 12, 12' noch weiter nach axial rechts gezogen, so steuern sich die Hohlrad-Sperrklinken 19 über die Schaltschräge 1c der Nabenhülse 1 aus und der axial rechte Schubklotz 12' kommt im Achsschlitz 5b zur Anlage - 2. Gang -.

Wird der Schaltzug 12b nun gegen die Feder F bis zum Anschlag des Schubklotzes 12 am Schubklotz 12' aus der Nabenachse 5 gezogen, nimmt der linksbefindliche Schubklotz 12 die Schiebehülse 13 nach axial rechts mit und löst dabei die zuvor bestehende Kupplung 9a/13a zwischen dem kleinen Sonnenrad 9 und der Schiebehülse 13, während die Schiebehülse 13 nun wieder in das große Sonnenrad 10 einkuppelt mittels der Elemente 10a/13a - 1. Gang -.

Die durch Rückwärtsdrehen des Antreibers 3 betätigbare Bremseinrichtung R ist in ihrem einfachen Aufbau bereits von 3-Gang-Schaltnaben her bekannt, so daß sich hier eine gesonderte Beschreibung der Bremseinrichtung erübrigt.

Die Ausführungsbeispiele einer 5-Gang-Nabe nach den Figuren 1 und 27 lassen sich durch Wegfall der Bremseinrichtung R auch als Leerlauf-Naben ausbilden, wobei der Vorteil der Naben-Konstruktion, selbst bei Schaltstellungen zwischen den Gangschaltstufen immer antriebsbereit zu sein, im vollen Umfang erhalten bleibt.

Ergänzend zum Aufbau gemäß Figur 24 wird noch eine Variante anhand der Figur 24a erläutert. Diese Figur 24a zeigt einen Aufbau, in welchem die beiden Sonnenräder 9 und 10 auf der Nabenachse 5 drehbar, jedoch axial festliegend angeordnet sind.

An der Nabenachse 5 sind zwei axial verschiebbare, für sich drehfeste Kupplungselemente 13 und 13a so angeordnet, daß durch Schalten beispielsweise mittels Schubklötzen 12 und 12a, welche In der Nabenachse axial verschiebbar und miteinander verbunden angeordnet sind, jeweils eines der Sonnenräder 9 bzw. 10 entsprechend der zugeordneten Gangschaltstufe auf der Nabenachse 5 mit einem der Kupplungselemente 13 bzw. 13a festgesetzt werden kann. Die Schaltbetätigung erfolgt dabei nur in einer axialen Richtung.

Figur 24a zeigt den Aufbau in der Schaltstellung 5. Gang. Zur Schaltung 4. Gang wird das Schubklotzsystem 12/12a nach axial rechts gezogen, so daß das Sonnenrad 10 von der Kupplungsfläche 13 freigegeben, das Sonnenrad 9 dagegen mittels der Kupplungsfläche 13a mit der Nabenachse 5 drehfest gekuppelt wird. - Diese Kupplungsstellung besteht auch bei den noch nicht erwähnten Schaltstellungen 3. und 2. Gang. -

Zur Schaltstellung 1. Gang wird das Schubklotzsystem 12/12a in dergleichen axialen Richtung weiterbewegt, derart, daß das Sonnenrad 9 mit seiner Kupplungsfläche 9a vom Kupplungselement 13a freigegeben wird, dagegen das Sonnenrad 10 mit seiner Kupplungsfläche 10a mittels des Kupplungselementes 13a nunmehr gekuppelt wird und damit mit der Nabenachse 5 fest verbunden ist. Das in der dargestellten Gangschaltstellung 5. Gang wirksam gewesene Kupplungselement 13 ist nunmehr axial weit vom Sonnenrad 10 entfernt und hinsichtlich einer Kupplungsverbindung ohne Funktion.

Bei einer Schaltbetätigung in nur einer axialen Richtung ergibt sich in der Funktionsfolge, daß zuerst das große Sonnenrad 10, dann das kleine Sonnenrad 9 und schließlich wieder das große Sonnenrad 10 drehfest gehalten wird. Dies kann einmal dadurch geschehen, daß mittels der erwähnten Schubklotzanordnung das eine oder andere Sonnenrad unmittelbar mit der Nabenachse 5 drehfest verbunden wird, es ist auch möglich, auf der Nabenachse 5 eine sogenannte Schiebehülse 13 drehfest anzuordnen, mit welcher dann die Sonnenräder in der vorstehend geschilderten Funktionsfolge wechselweise drehfest verbunden werden, wodurch sich für das hier nicht gezeigte System von gestuften Planetenrädern die entsprechenden Eingriffsverhältnisse ergeben, mit welchen die unterschiedlichen Gangschaltstufen im Nabengetriebe erzielt werden.

Weiterhin kann es für einen zuverlässigen Kupplungseingriff sehr zweckmäßig sein, wenn die Kupplungsflächen an den Sonnenrädern und an den zum Festsetzen dienenden Kupplungsmitteln nicht mit parallelen Flanken versehen sind, sondern mit hinterschnitten ausgestalteten Kupplungsflächen versehen sind, derart, daß z.B. eine sogenannte Schwalbenschwanzform gebildet wird.

Schließlich kann es bei einer Nabe beispielsweise gemäß Figur 1 für eine günstige Funktion auch vorteilhaft sein, wenn die axial einerseits in ständigem Eingriff in der Innenverzahnung 3b des Antreibers 3 befindliche Kupplungsbuchse 14 an ihrer entsprechenden Verzahnung 14b etwa schraubenförmig ausgestaltet ist, wobei dann auch die Innenverzahnung 3b im Antreiber 3 entsprechend schraubenförmig ausgebildet ist.

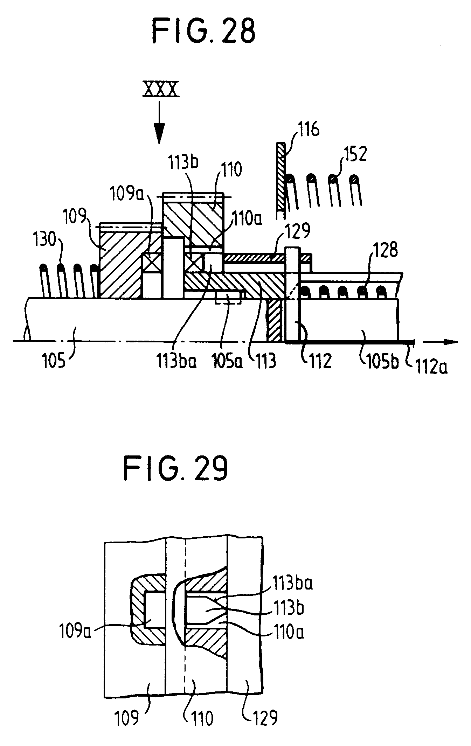

In der Fig. 28 ist in schematischer Darstellung die Ausbildung der Sonnenräder 109 und 110 zusammen mit den Kupplungsmitteln dargestellt, die dazu dienen, um jeweils eines der Sonnenräder 109 und 110 drehfest auf der Nabenachse 105 festzustellen. Eine Ausbildung, wie sie in Fig. 28 dargestellt ist, könnte in der Konstruktion nach Fig. 1 zur Anwendung kommen.

Auch bei der Ausführungsform nach Fig. 28 ist eine Betätigung mittels eines einzigen Schaltzugs 112a von rechts dargestellt. Die Ausbildung des Planetengetriebes und die wahlweise Verbindung der Kupplungsbuchse 14 mit dem Planetenradträger und dem Hohlrad erfolgt genauso wie in Fig. 1 dargestellt.

In Fig. 28 liegen die Sonnenräder 109 und 110 axial aneinander an und sind durch die gegenüber der Druckfeder 128 weichere Druckfeder 130 nach rechts vorgespannt. Fig. 28 entspricht der Stellung des 5. Ganges (großer Schnellgang) und insoweit der Fig. 1. In Fig. 28 ist das Sonnenrad 110 durch seine Innenverzahnung 110a in Eingriff mit den geraden Kupplungsklauen 113b der Schiebehülse 113, während die Schiebehülse 113 durch die Kupplungsklauen 105a drehfest an der Nabenachse 105 festgelegt ist. Das Sonnenrad 109 ist, auf dar Nabenachse 105 frei drehbar. Wenn von dem in der Fig. 28 dargestellten 5. Gang (großer Schnellgang) auf den 4. Gang (kleiner Schnellgang) umgeschaltet werden soll, so wird mittels des Zugseils 112a der Schubklotz 112 und mit ihm die Zwischenhülse 129 gegen die Wirkung der stärkeren Schraubendruckfeder 128 nach rechts verschoben, so daß unter der Wirkung der Schraubendruckfeder 130 die beiden Sonnenräder 109 und 110 der Zwischenhülse 129 nach rechts folgen können, bis das Sonnenrad 110 an der Scheibe 116 zum Anschlag kommt. Dabei tritt die Innenverzahnung 110a außer Eingriff mit den Kupplungsklauen 113b und die Kupplungsverzahnung 109a tritt in Eingriff mit den Kupplungsklauen 113b. Damit wird erreicht, daß nunmehr das Sonnenrad 109 unverdrehbar über die Schiebehülse 113 an der Nabenachse 105 festgelegt ist, während das Sonnenrad 110 gegenüber der Schiebehülse 113 frei drehbar ist. Sollte sich aufgrund einer Fehleinstellung der Fall ergeben, daß das Sonnenrad 110 nicht bis zum Anschlag 116 verschoben wird und deshalb die Kupplungverzahnung 109a nicht zum Eingriff mit den Kupplungsklauen 113b kommen kann, so befindet sich die Innenverzahnung 110a nunmehr im Eingriff mit den Schrägflächen 113ba der Kupplungsklauen 113b; dies hat zur Folge, daß nunmehr das Sonnenrad 110 bei Drehbewegung infolge Drehens des Planetengetriebes durch die Wechselwirkung der Innenverzahnung 110a mit den Schrägflächen 113ba gegen die Wirkung der Schraubendruckfeder 128 nach rechts verschoben wird, annähernd bis zum Anschlag an der Scheibe 116. Dann kann aber das Sonnenrad 109 unter der Wirkung der Schraubendruckfeder 130 dem Sonnenrad 110 folgen und nunmehr mit Sicherheit in Verbindung mit der Schiebehülse 113 treten, indem die Innenverzahnung 109a zum Eingriff mit den sich axial erstreckenden Teilflächen der Kupplungsklauen 113b gelangt. Somit ist auch bei dieser Ausführungsform dafür gesorgt, daß unter allen Umständen eines der Sonnenräder 109, 110 drehfest an der Schiebehülse 113 und damit drehfest an der Nabenachse 105 festgelegt ist.

Wenn zum Rückschalten von der Stellung des 4. Ganges auf die in Fig. 28 dargestellte Stellung des 5. Ganges das Zugseil 112a nach links losgelassen wird und das Sonnenrad 110 dann durch die Zwischenhülse 129 nicht bis in die ordnungsgemäße Stellung nach links verschoben wird, so kann wieder der Fall eintreten, daß die Innenverzahnung 110a keine ausreichende axiale Überdeckung mit den geraden Abschnitten der Kupplungsklaue 113b besitzt. Sollte dann im Laufe der Zeit durch Verformung der Fall eintreten, daß das Sonnenrad 110 nicht mehr drehfest an den Kupplungsklauen 113b fixiert ist, so kommt die Innenverzahnung 110a wieder in Eingriff mit den Schrägflächen 113ba. Die Folge ist, daß das Sonnenrad 110 wieder nach rechts verschoben wird und nunmehr das Sonnenrad 109 mit seiner Innenverzahnung 109a wieder in Eingriff mit den Kupplungsklauen 113b treten kann. Damit ist auch in dieser Situation wieder gewährleistet, daß in jedem Augenblick eines der Sonnenräder 109, 110 drehfest festgelegt ist und damit wirksames Reaktionsglied des Planetengetriebes sein kann.

Es ist zu bemerken, daß bei der Ausführungsform nach den Fig. 2 bis 9 und 28 die durch die Schrägflächen bewirkte Verschiebung eines Sonnenrads bzw. einer Kupplungsklaue immer in solcher Richtung erfolgen muß,
daß der Seilzug entspannt wird, damit nicht der Seilzug überspannt wird. Ersatzweise könnte man sich allerdings vorstellen, daß man in den Seilzug ein elastisches Ausgleichsglied einbaut, welches durch die Verschiebung des Sonnenrads bzw. der Kupplungsklaue gedehnt wird.

Bei der Ausführungsform der Fig. 28 können die Schrägflächen 113ba ihre Schutzfunktion auch dann erfüllen, wenn vom 2. auf den 1. Gang geschaltet wird (siehe Beschreibung der Fig. 1). Die Sonnenräder 109 und 110 stehen dann an der Scheibe 116 an und das Sonnenrad 109 ist mit der Schiebehülse 113 gekuppelt. Wird nun die Schiebehülse 113 infolge des Umschaltens weiter nach rechts gezogen, so gelangen die Kupplungsklauen 113b wieder in Eingriff mit der Innenverzahnung 110a des Sonnenrads 110. Reicht die Verschiebung der Schiebehülse 113 nach rechts nicht aus, um einen ordnungsgemäßen Eingriff der Kupplungsklaue 113b mit der Innenverzahnung 110a herzustellen, so tritt die Innenverzahnung 110a in Eingriff mit den Schrägflächen 113ba und das Sonnenrad 110 wird weiter nach rechts verschoben. Diese weitere Verschiebung des Sonnenrads 110 nach rechts wird dadurch möglich, daß die Scheibe 116 durch eine Schraubendruckfeder 152 abgestützt ist und im notwendigen Maße nach rechts ausweichen kann. Dann kommt wieder die Innenverzahnung 109a des Sonnenrades 109 zum Eingriff mit den geraden Abschnitten der Kupplungsklauen 113b, so daß dann das Sonnenrad 109 wieder im Rahmen des Planetengetriebes die Sonnenradfunktion erfüllen kann.

## Patentansprüche

1. 5-Ganggetriebenabe, insbesondere mit Rücktrittbremse, für Fahrräder od. dgl., umfassend

eine Nabenachse (5), welche eine geometrische Achse besitzt,

einen Antreiber (3), welcher drehbar auf der Nabenachse (5) gelagert ist, wobei dieser Antreiber (3) dazu ausgebildet ist, um mit mindestens einem Kettenzahnkranz (3') ausgerüstet zu werden,

eine Nabenhülse (1), welche drehbar auf der Nabenachse (5) gelagert ist,

ein Planetengetriebesystem innerhalb der Nabenhülse (1), wobei dieses Planetengetriebesystem aufweist:

einen axial feststehenden Planetenradträger (6), welcher auf der Nabenachse (5) drehbar gelagert ist,

mindestens ein axial feststehendes Planetenrad (8), welches drehbar auf dem Planetenradträger (6) gelagert ist, wobei dieses Planetenrad (8) mit einem großen Stufenplanetenrad (8a) und einem kleinen Stufenplanetenrad (8b) ausgeführt ist,

Sonnenräder (9,10), nämlich ein kleines Sonnenrad (9) zum kämmenden Eingriff mit dem großen Stufenplanetenrad (8a) und ein großes Sonnenrad (10) zum kämmenden Eingriff mit dem kleinen Stufenplanetenrad (8b), wobei diese Sonnenräder (9,10) selektiv gegen Drehung um die Nabenachse (5) sperrbar sind,

ein Hohlrad (11), welches drehbar um die Nabenachse (5) gelagert ist,

wobei das Hohlrad (11) in kämmendem Eingriff mit einem der Stufenplanetenräder (8a,8b) steht,

und ferner umfassend

ein axial verschiebbares Kupplungselement (14), insbesondere in Form einer Kupplungsbuchse (14), welches in ständigem drehmomentübertragendem Eingriff mit dem Antreiber (3) steht und selektiv zum Eingriff zu bringen ist mit entweder dem Planetenradträger (6) oder dem Hohlrad (11), um gemeinsam mit dem jeweiligen Teil um die Nabenachse (5) zu rotieren,

ein erstes Freilaufgesperre (Antriebssperrklinke 19 - Innengesperre 1b) zwischen dem Hohlrad (11) und der Nabenhülse (1),

ein zweites Freilaufgesperre (Antriebssperrklink - Innengesperre 1a) zwischen dem Planetenradträger (6) und der Nabenhülse (1) und

Gangsteuerungsmittel (Zugstange 12a - Zugkette 12b - Anschlußteil 12c), welche von einem einzigen Ende der Nabenachse (5) her durch eine Bohrung (5c) in das Nabeninnere hereingeführt sind und welche dazu bestimmt und geeignet sind, um durch einen Schlitz (5b) der Nabenachse (5) hindurch selektiv das eine oder andere der Sonnenräder (9,10) gegen die Drehung um die Nabenachse (5) zu sperren, um selektiv das Kupplungselement (14) mit dem Planetenradträger (6) und dem Hohlrad (11) zu kuppeln und um das erste Freilaufgesperre (19,1b) zu inaktivieren,

wobei in einem 5. Schaltzustand das kleine Sonnenrad (9) frei zur Drehung um die Nabenachse (5) ist, das große Sonnenrad (10) gegen Drehung um die Nabenachse, (5) gesperrt ist, das Kuplungselement (14) in drehmomentübertragendem Eingriff mit dem Planetenradträger (6) steht und das erste Freilaufgesperre (19,1b) aktiv ist,

wobei in einem 4. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) noch in drehmomentübertragendem Eingriff mit dem Planetenradträger (6) steht und das erste Freilaufgesperre (19,1b) noch aktiv ist,

wobei in einem 3. Schaltzustand das kleine Sonnenrad (9) gegen Drehung um die Nabenachse (5) gesperrt ist, das große Sonnenrad (10) um die Nabenachse (5) frei drehbar ist, das Kupplungselement (14) in drehmomentübertragendem Eingriff mit dem Hohlrad (11) ist und das erste Freilaufgesperre (19,1b) noch aktiv ist,

wobei in einem 2. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) in drehmomentübertragender Verbindung mit dem Hohlrad (11) steht und das erste Freilaufgesperre (19,1b) inaktiviert ist und

wobei in einem 1. Schaltzustand das kleine Sonnenrad (9) frei drehbar um die Nabenachse (5) ist, das große Sonnenrad (10) gegen Drehung um die Nabenachse (5) gesperrt ist, das Kupplungselement (14) in drehmomentübertragendem Eingriff mit dem Hohlrad (11) steht und das erste Freilaufgesperre (19,1b) inaktiviert ist,

dadurch gekennzeichnet,
daß ein einziges als Zugorgan ausgebildetes Gangsteuerungsorgan (Zugstange 12a - Zugkette 12 - Anschlußteil 12c) durch die Bohrung (5c) in das Nabeninnere eingeführt und in mehrere sukzessiv dem besagten einzigen Ende der Nabenachse gegen Federkraft angenäherte, den fünf Schaltzuständen entsprechende Positionen einstellbar ist und derart mit Spiel auf feder- und anschlaggesteuerte, relativ zueinander axial verschiebbare Sonnenrad-Drehsperrmittel (9a,10a,13) einwirkt, daß beim Übergang des Gangsteuerungsorgans (Zugstange 12a - Zugkette 12b - Anschlußteil 12c) von der 5. Position in die 4. Position eine Relativverschiebung der Sonnenrad-Drehsperrmittel eintritt und das in der 5. Position drehbare kleine Sonnenrad (9) in der 4. Position drehgesperrt und das in der 5. Position drehgesperrte große Sonnenrad (10) in der 4. Position drehbar wird, daß bei den Übergängen von der 4. Position in die 3. Position und von der 3. Position in die 2. Position die Relativstellung der Drehsperrmittel erhalten bleibt, d. h. das kleine Sonnenrad (9) drehgesperrt bleibt und das große Sonnenrad (10) drehbar bleibt und daß beim Übergang von der 2. Position in die 1. Position eine erneute Relativverschiebung der Sonnenrad-Drehsperrmittel stattfindet und das kleine Sonnenrad (9) wieder drehbar wird und das große Sonnenrad (10) wieder drehgesperrt wird.
(Siehe z. B. Fig. 1)

2. 5-Ganggetriebenabe, nach Anspruch 1, dadurch gekennzeichnet, daß ein einziges Gangsteuerungsorgan (Zugstange 12a - Zugkette 12b - Anschlußteil 12c) durch die Bohrung (5c) in das Nabeninnere eingeführt und mit einem auf das Kupplungselement (14) einwirkenden Schubklotz (12) verbunden ist, welcher in fünf axial beabstandete, den fünf Schaltzuständen entsprechende Positionen durch das Gangsteuerungsorgan (12c,12b,12a) einstellbar ist, nämlich

eine 5. - 1. Position, welche sukzessive dem besagten einzigen Ende der Nabenachse angenähert sind, und

daß der Schubklotz (12) mit Übertragungsspiel (13c) auf ein axial bewegliches Sonnenradfeststellelement (Schiebehülse 13) einwirkt, welches gegen Drehung um die Nabenachse (5) gesichert ist und auf einem Teil des axialen Bewegungsbereichs des Schubklotzes (12) an die Bewegung des Schubklotzes (12) gekoppelt ist in der Weise, daß

der Schubklotz (12) beim Übergang von der 5. Position in die 4. Position eine federkraft- und anschlagsbedingte Verschiebung der Sonnenräder (9,10) aus einer ersten, das kleine Sonnenrad (9) freigebenden und das große Sonnenrad (10) sperrenden Relativstellung zum axial stehenbleibenden Sonnenradfeststellelement (13) in eine zweite, das große Sonnenrad (10) freigebende und das kleine Sonnenrad (9) sperrende Relativstellung zuläßt, welche in der 3. - 2. Position des Schubklotzes (12) erhalten bleibt, und daß beim Übergang des Schubklotzes (12) aus der 2. Position in die 1. Position das Sonnenradfeststellelement (13) von dem Schubklotz (12) unter Wiederherstellung der ersten Relativstellung axial mitnehmbar ist.
(Siehe z. B. Fig. 1)

3.    5-Gang-Getriebenabe, nach Anspruch 1, dadurch gekennzeichnet, daß ein einziges Gangsteuerungsorgan (12b) durch die Bohrung in das Nabeninnere eingeführt und mit auf das Kupplungselement (14) einwirkenden Schubklotzmitteln (12,12') verbunden ist, von denen ein Schubklotz (12) in fünf axial beabstandete, den fünf Schaltzuständen entsprechende Positionen durch das Gangsteuerungsorgan (12b) einstellbar ist, nämlich

eine 5. - 1. Position, welche sukzessive dem besagten einzigen Ende der Nabenachse angenähert sind, und

daß der Schubklotz (12) mit Übertragungsspiel auf ein axial bewegliches Sonnenradfeststellelement (13) einwirkt, welches gegen Drehung um die Nabenachse (5) gesichert ist und auf einem Teil des axialen Bewegungsbereichs des Schubklotzes (12) an die Bewegung des Schubklotzes (12) gekoppelt ist in der Weise, daß

das mit zwei axial beabstandeten Kupplungselementen (Kuplungsflächen 13a,13a) versehene Sonnenradfeststellelement (13) in der 5. Position durch eine Feder (30) gegen den Schubklotz (12) in eine Axialstellung vorgespannt ist, in der ein erstes Kupplungselement (13a) das axial unverschiebbare große Sonnenrad (10) drehfest macht und das ebenfalls axial unverschiebbare kleine Sonnenrad (9) drehbar ist, beim Übergang des Schubklotzes (12) von der 5. Position in die 4. Position das Sonnenradfeststellelement (13) unter der Wirkung der Feder (30) dem Schubklotz (12) folgt in eine Axialstellung, in welcher ein 2. Kupplungselement (13a) des Sonnenradfeststellelements (13) das kleine Sonnenrad (9) drehfest macht und das 1. Kupplungselement (13a) das große Sonnenrad (10) freigibt, das Sonnenradfeststellelement (13) beim Übergang des Schubklotzes (12) von der 4. in die 3. Position und von der 3. in die 2. Position seine Axialstellung beibehält und das Sonnenradfeststellelement (13) beim Übergang des Schubklotzes (12) aus der 2. in die 1. Position von dem Schubklotz (12) mitgenommen wird, wobei nunmehr das 2. Kupplungselement (13a) das große Sonnenrad (10) drehfest macht und das kleine Sonnenrad (9) wieder drehbar wird.
(Siehe z. B. Fig. 28)

4.    5-Gang-Getriebenabe, nach Anspruch 1, dadurch gekennzeichnet, daß ein einziges Gangsteuerungsorgan durch die Bohrung in das Nabeninnere eingeführt und mit einem auf das Kupplungselement (14) einwirkenden Schubklotz (12) verbunden ist, welcher in fünf axial beabstandete, den fünf Schaltzuständen entsprechende Positionen durch das Gangsteuerungsorgan einstellbar ist, nämlich

eine 5. - 1. Position, welche sukzessive dem besagten einzigen Ende der Nabenachse angenähert sind, und

daß der Schubklotz (12) mit Übertragungsspiel (13c) auf ein axial bewegliches Sonnenradfeststellelement (13) einwirkt, welches gegen Drehung um die Nabenachse (5) gesichert ist und auf einem Teil des axialen Bewegungsbereichs des Schubklotzes (12) an die Bewegung des Schubklotzes (12) gekoppelt ist in der Weise, daß

die beiden axial beabstandeten und axial verschiebbaren Sonnenräder (9 und 10) in einer 5. Position des Schubklotzes (12) durch eine Druckfeder (30) gegen den Schubklotz (12) axial vorgespannt sind und von zwei axial beabstandeten Kupplungselementen (Kupplungsverzahnungen 13a) des axial verschiebbaren und unverdrehbaren Sonnenradfeststellelements (13) ein erstes Kupplungselement (13a) das große Sonnenrad (10) drehfest macht; während das kleine Sonnenrad (9) drehen kann, beim Übergang von der 5. Position in die 4. Position die beiden Sonnenräder (9,10) unter der Wirkung der Druckfeder (30) dem Schubklotz (12) folgen, das kleine Sonnenrad (9) dabei durch ein 2. Kupplungselement (13a) drehfest wird und das große

Sonnenrad (10) drehfrei wird, beim Übergang von der 4. Position in die 3. Position und von der 3. Position in die 2. Position das Sonnenradfeststellelement (13) und die Sonnenräder (9 und 10) axial stehen bleiben und beim Übergang von der 2. Position in die 1. Position das Sonnenradfeststellelement (13) axial mitgenommen wird und über das 2. Kupplungselement (13a) das kleine Sonnenrad (9) freigibt und über das 1. Kupplungselement (13a) das große Sonnenrad (10) drehfest macht.

(Siehe z.B. Fig. 23 in Verbindung mit Fig. 1)

5. 5-Gang-Getriebenabe, nach Anspruch 1, dadurch gekennzeichnet,

daß ein einziges Gangsteuerungsorgan durch die Bohrung in das Nabeninnere eingeführt und mit einem Schubklotz (12) verbunden ist, welcher in fünf axial beabstandete, den fünf Schaltzuständen entsprechende Positionen durch das Gangsteuerungsorgan einstellbar ist, nämlich

eine 5. - 1. Position, welche sukzessive dem besagten einzigen Ende der Nabenachse angenähert sind, und

daß der Schubklotz (12) mit Übertragungsspiel (13c) auf ein axial bewegliches Sonnenradfeststellelement (S) einwirkt, welches auf einem Teil des axialen Bewegungsbereichs des Schubklotzes (12) an die Bewegung des Schubklotzes (12) gekoppelt ist in der Weise, daß

die beiden axial beweglichen Sonnenräder (9,10) durch eine Feder (30) in der 5. Position gemeinsam gegen einen mit dem Schubklotz (12) verbundenen Anschlag (13') in eine Axialstellung vorgespannt sind, in der das große Sonnenrad (10) durch ein axial feststehendes Kupplungselement (Achsverzahnung 5a) drehfest gemacht ist und das kleine Sonnenrad (9) drehbar ist, daß beim Übergang von der 5. in die 4.Position die beiden Sonnenräder (9 und 10) dem mit dem Schubklotz (12) gekoppelten Anschlag (13') folgen, das große Sonnenrad (10) drehfrei wird und das kleine Sonnenrad (9) durch das Kupplungselement (5a) drehfest gemacht wird, beim Übergang von der 4. in die 3 Position und von der 3. in die 2. Position die Sonnenräder (9,10) stehen bleiben und beim Übergang von der 2. Position in die 1. Position der Schubklotz (12) ein Bewegungsumkehrgetriebe (K) beaufschlagt, welches auf das Sonnenradfeststellelement (S) einwirkt und die beiden Sonnenräder (9 und 10) in umgekehrter Achsrichtung verschiebt, wobei das kleine Sonnenrad (9) wieder drehfrei wird und das große Sonnenrad (10) erneut in Eingriff mit dem Kupplungselement (5a) tritt.

(Siehe z. B. Fig. 25 in Verbindung mit Fig. 1)

6. 5-Ganggetriebenabe nach Anspruch 5, dadurch gekennzeichnet,

daß das Bewegungsumkehrgetriebe (K) ein Schwenkhebelgetriebe ist.

(Siehe z. B. Fig. 25)

7. 5-Ganggetriebenabe nach Anspruch 5, dadurch gekennzeichnet,

daß das Bewegungsumkehrgetriebe (T) ein Verschraubungsgetriebe ist.

8. 5-Ganggetriebenabe, insbesondere mit Rücktrittbremse, für Fahrräder od. dgl., umfassend

eine Nabenachse (5), welche eine geometrische Achse besitzt,

einen Antreiber (3), welcher drehbar auf der Nabenachse (5) gelagert ist, wobei dieser Antreiber (3) dazu ausgebildet ist, um mit mindestens einem Kettenzahnkranz (3') ausgerüstet zu werden,

eine Nabenhülse (1), welche drehbar auf der Nabenachse (5) gelagert ist,

ein Planetengetriebesystem innerhalb der Nabenhülse (1), wobei dieses Planetengetriebesystem aufweist:

einen axial feststehenden Planetenradträger (6), welcher auf der Nabenachse (5) drehbar gelagert ist,

mindestens ein axial feststehendes Planetenrad (8), welches drehbar auf dem Planetenradträger (6) gelagert ist, wobei dieses Planetenrad (8) mit einem großen Stufenplanetenrad (8a) und einem kleinen Stufenplanetenrad (8b) ausgeführt ist,

Sonnenräder (9,10), nämlich ein kleines Sonnenrad (9) zum kämmenden Eingriff mit dem großen Stufenplanetenrad (8a) und ein großes Sonnenrad (10) zum kämmenden Eingriff mit dem kleinen Stufenplanetenrad (8b), wobei diese Sonnenräder (9,10) selektiv gegen Drehung um die Nabenachse (5) sperrbar sind,

ein Hohlrad (11), welches drehbar um die Nabenachse (5) gelagert ist,

wobei das Hohlrad (11) in kämmendem Eingriff mit einem der Stufenplanetenräder (8a,8b) steht,

und ferner umfassend

ein axial verschiebbares Kupplungselement (14), insbesondere in Form einer Kupplungsbuchse (14), welches in ständigem drehmomentübertragendem Eingriff mit dem Antreiber (3) steht und selektiv zum Eingriff zu bringen ist mit entweder dem Planetenradträger (6) oder dem Hohlrad (11), um gemeinsam mit dem jeweiligen Teil um die Nabenachse (5) zu rotieren,

ein erstes Freilaufgesperre (Antriebssperrklinke 19 - Innengesperre 1b) zwischen dem Hohlrad (11) und der Nabenhülse (1),

ein zweites Freilaufgesperre (Antriebssperrklinke 18 - Innengesperre 1a) zwischen dem Planetenradträger (6) und der Nabenhülse (1) und

Gangsteuerungsmittel (Zugstange 12a - Zugkette 12b - Anschlußteil 12c), welche von einem einzigen Ende der Nabenachse (5) her durch eine Bohrung (5c) in das Nabeninnere hereingeführt sind und welche dazu bestimmt und geeignet sind, um durch einen Schlitz (5b) der Nabenachse (5) hindurch selektiv das eine oder andere der Sonnenräder (9,10) gegen die Drehung um die Nabenachse (5) zu sperren, um selektiv das Kupplungselement (14) mit dem Planetenradträger (6) und dem Hohlrad (11) zu kuppeln und um das erste Freilaufgesperre (19,1b) zu inaktivieren,

wobei in einem 5. Schaltzustand das kleine Sonnenrad (9) frei zur Drehung um die Nabenachse (5) ist, das große Sonnenrad (10) gegen Drehung um die Nabenachse (5) gesperrt ist, das Kupplungselement (14) in drehmomentübertragendem Eingriff mit dem Planetenradträger (6) steht und das erste Freilaufgesperre (19,1b) aktiv ist,

wobei in einem 4. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) noch in drehmomentübertragendem Eingriff mit dem Planetenradträger (6) steht und das erste Freilaufgesperre (19,1b) noch aktiv ist,

wobei in einem 3. Schaltzustand das kleine Sonnenrad (9) gegen Drehung um die Nabenachse (5) gesperrt ist, das große Sonnenrad (10) um die Nabenachse (5) frei drehbar ist, das Kupplungselement (14) in drehmomentübertragendem Eingriff mit dem Hohlrad (11) ist und das erste Freilaufgesperre (19,1b) noch aktiv ist,

wobei in einem 2. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) in drehmomentübertragender Verbindung mit dem Hohlrad (11) steht und das erste Freilaufgesperre (19,1b) inaktiviert ist und

wobei in einem 1. Schaltzustand das kleine Sonnenrad (9) frei drehbar um die Nabenachse (5) ist, das große Sonnenrad (10) gegen Drehung um die Nabenachse (5) gesperrt ist, das Kupplungselement (14) in drehmomentübertragendem Eingriff mit dem Hohlrad (11) steht und das erste Freilaufgesperre (19,1b) inaktiviert ist,

dadurch gekennzeichnet,
daß ein einziges Gangsteuerungsorgan durch die Bohrung in das Nabeninnere eingeführt ist und auf relativ zueinander axial verschiebbare Sonnenrad-Drehsperrmittel (9a,10a,5a) einwirkt, wobei durch Hin- und Her-Verschieben des Gangsteuerungsorgans zwischen zwei Positionen wahlweise das kleine Sonnenrad (9) gegen Drehung sperrbar und das große Sonnenrad (10) für Drehung freigebbar ist oder das große Sonnenrad (10) gegen Drehung sperrbar und das kleine Sonnenrad (9) für Drehung freigebbar ist. (Fig. 1 in Verbindung mit einer der Fig. 10 - 21)

9. 5-Ganggetriebenabe nach Anspruch 8, dadurch gekennzeichnet, daß die Sonnenrad-Drehsperrmittel (9a,10,5a) in den beiden Positionen durch Verrastungsmittel (G) verrastbar sind. (Fig. 1 in Verbindung mit Fig. 14)

10. 5-Ganggetriebenabe, insbesondere mit Rücktrittbremse, für Fahrräder od. dgl., umfassend

eine Nabenachse (5), welche eine geometrische Achse besitzt,

einen Antreiber (3), welcher drehbar auf der Nabenachse (5) gelagert ist, wobei dieser Antreiber (3) dazu ausgebildet ist, um mit mindestens einem Kettenzahnkranz (3') ausgerüstet zu werden,

eine Nabenhülse (1), welche drehbar auf der Nabenachse (5) gelagert ist,

ein Planetengetriebesystem innerhalb der Nabenhülse (1), wobei dieses Planetengetriebesystem aufweist:

einen axial feststehenden Planetenradträger (6), welcher auf der Nabenachse (5) drehbar gelagert ist,

mindestens ein axial feststehendes Planetenrad (8), welches drehbar auf dem Planetenradträger (6) gelagert ist, wobei dieses Planetenrad (8) mit einem großen Stufenplanetenrad (8a) und einem kleinen Stufenplanetenrad (8b) ausgeführt ist,

Sonnenräder (9,10), nämlich ein kleines Sonnenrad (9) zum kämmenden Eingriff mit dem großen Stufenplanetenrad (8a) und ein großes Sonnenrad (10) zum kämmenden Eingriff mit dem kleinen Stufenplanetenrad (8b), wobei diese Sonnenräder (9,10) selektiv gegen Drehung um die Nabenachse (5) sperrbar sind,

ein Hohlrad (11), welches drehbar um die Nabenachse (5) gelagert ist,

wobei das Hohlrad (11) in kämmendem Eingriff mit einem der Stufenplanetenräder (8a,8b) steht,

und ferner umfassend

ein axial verschiebbares Kupplungselement (14), insbesondere in Form einer Kupplungsbuchse (14), welches in ständigem drehmomentübertragendem Eingriff mit dem Antreiber (3) steht und selektiv zum Eingriff zu bringen ist mit entweder dem Planetenradträger (6) oder dem Hohlrad (11), um gemeinsam mit dem jeweiligen Teil um die Nabenachse (5) zu rotieren,

ein erstes Freilaufgesperre (Antriebssperrklinke 19 - Innengesperre 1b) zwischen dem Hohlrad (11) und der Nabenhülse (1),

ein zweites Freilaufgesperre (Antriebssperrklinke 18 - Innengesperre 1a) zwischen dem Planetenradträger (6) und der Nabenhülse (1) und

Gangsteuerungsmittel (Zugstange 12a - Zugkette 12b - Anschlußteil 12c), welche von einem einzigen Ende der Nabenachse (5) her durch eine Bohrung (5c) in das Nabeninnere hereingeführt sind und welche dazu bestimmt und geeignet sind, um durch einen Schlitz (5b) der Nabenachse (5) hindurch selektiv das eine oder andere der Sonnenräder (9,10) gegen die Drehung um die Nabenachse (5) zu sperren, um selektiv das Kupplungselement (14) mit dem Planetenradträger (6) und dem Hohlrad (11) zu kuppeln und um das erste Freilaufgesperre (19,1b) zu inaktivieren,

wobei in einem 5. Schaltzustand das kleine Sonnenrad (9) frei zur Drehung um die Nabenachse (5) ist, das große Sonnenrad (10) gegen Drehung um die Nabenachse (5) gesperrt ist, das Kupplungselement (14) in drehmomentübertragendem Eingriff mit dem Planetenradträger (6) steht und das erste Freilaufgesperre (19,1b) aktiv ist,

wobei in einem 4. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) noch in drehmomentübertragendem Eingriff mit dem Planetenradträger (6) steht und das erste Freilaufgesperre (19,1b) noch aktiv ist,

wobei in einem 3. Schaltzustand das kleine Sonnenrad (9) gegen Drehung um die Nabenachse (5) gesperrt ist, das große Sonnenrad (10) um die Nabenachse (5) frei drehbar ist, das Kupplungselement (14) in drehmomentübertragendem Eingriff mit dem Hohlrad (11) ist und das erste Freilaufgesperre (19,1b) noch aktiv ist,

wobei in einem 2. Schaltzustand das kleine Sonnenrad (9) gegen Drehung um die Nabenachse (5) gesperrt ist, das große Sonnenrad (10) frei um die Nabenachse (5) drehbar ist, das Kupplungselement (14) in drehmomentübertragender Verbindung mit dem Hohlrad (11) steht und das erste Freilaufgesperre (19,1b) inaktiviert ist und

wobei in einem 1. Schaltzustand das kleine Sonnenrad (9) frei drehbar um die Nabenachse (5) ist, das große Sonnenrad (10) gegen Drehung um die Nabenachse (5) gesperrt ist, das Kupplungselement (14) in dehmomentübertragendem Eingriff mit dem Hohlrad (11) steht und das erste Freilaufgesperre (19,1b) inaktiviert ist,

dadurch gekennzeichnet,
daß ein einziges Gangsteuerungsorgan durch die Bohrung in das Nabeninnere eingeführt ist und auf relativ zueinander axial verschiebbare Sonnenrad-Drehsperrmittel (9a,10,13a) einwirkt,
wobei die Sonnenrad-Drehsperrmittel (9a,10a,13a) zwei voneinander axial beabstandete, unverdrehbare und durch das Gangsteuerungsorgan gemeinsam verschiebbare Sonnenrad-Feststellelemente (Kupplungsverzahnungen 13a) aufweisen, von denen jedes im Verlauf einer mehrstufigen gleichgerichteten Verschiebung nacheinander mit Kupplungsprofilen (9a und 10a) der beiden Sonnenräder (9,10) in Eingriff tritt, und zwar so, daß in jeder Stellung der Sonnenrad-Feststellelemente (Kupplungsverzahnungen 13a) jeweils nur eines dieser Sonnenrad-Feststellelemente (Kupplungsverzahnungen 13a) in Eingriff mit einem Kupplungsprofil (9a,10a) eines Sonnenrads (9 bzw. 10) steht.
(siehe Fig. 24 und 24a in Verbindung mit Fig. 1)

11. 5-Ganggetriebenabe, nach einem der Ansprüche 1 - 10,
dadurch gekennzeichnet,
daß jedes der Sonnenräder (9,10) gegen Drehung um die Nabenachse (5) durch mindestens eine Kupplungszahn-Kupplungsausnehmungskombination (5a,9a;5a,10a) sperrbar ist mit einem auf der Nabenachse (5) drehfest angeordneten Kupplungszahn (5a) und einer an dem jeweiligen Sonnenrad (9,10) angeordneten Kupplungsausnehmung (9a,10a) oder umgekehrt, daß die Sperrung und die Drehungsfreigabe des jeweiligen Sonnenrads (9,10) durch axiale Relativbewegung des jeweiligen Kupplungszahnes (5a) und der jeweiligen Kupplungsausnehmung (9a,10a) erfolgt, indem der jeweilige Kupplungszahn (5a) in die jeweilige Kupplungsausnehmung (9a,10a) eintritt bzw. aus dieser austritt, daß sowohl der Kupplungszahn (5a) als auch die Kupplungsausnehmung (9a,10a) der Kupplungszahn-Kupplungsausnehmungskombinationen (5a,9a; 5a,10a) eines jeden Sonnenrads (9,10) jeweils ein Paar im wesentlichen achsparalleler Kupplungsflanken umfaßt, daß einer von den Teilen: Kupplungszahn (5a), Kupplungsausnehmung (9a) einer Kupplungszahn-Kupplungsausnehmungskombination (5a,9a) eines Sonnenrads (9) mindestens eine Einweiseflanke (9b) axial angrenzend an die jeweils zugehörige Kupplungsflanke umfaßt derart, daß durch Relativdrehung des Kupplungszahns (5a) und der Kupplungsausnehmung (9a) der Kupplungszahn-Kupplungsausnehmungskombination (5a,9a) des einen Sonnenrads (9) bei peripherem Gegenüberstehen der Einweiseflanke (9b) des einen (9a) der Teile: Kupplungszahn (5a) und Kupplungsausnehmung (9a) gegenüber dem jeweils anderen (5a) dieser Teile eine axiale Relativverschiebung von Kupplungszahn (5a) und Kupplungsausnehmung (9a) der Kupplungszahn-Kupplungsausnehmungskombination (5a,9a) des einen Sonnenrads (9) in Richtung auf Eingriffslösung dieses Kupplungszahns (5a) und dieser Kupplungsausnehmung (9a) stattfindet, und daß diese axiale Relativverschiebung eine axiale Folgerelativverschiebung des Kupplungszahns (5a) und der Kupplungsausnehmung (10a) der Kupplungszahn-Kupplungausnehmungskombination (5a,10a) des anderen Sonnenrads (10) in Richtung auf Eingriffsherstellung der Kupplungsflanken des Kupplungszahns (5a) und der Kupplungsausnehmung (10a) der Kupplungszahn-Kupplungsausnehmungskombination (5a,10a) des anderen Sonnenrads (10) veranlaßt.
(Siehe z. B. Fig. 2a, 2a')

12. 5-Ganggetriebenabe nach Anspruch 11, dadurch gekennzeichnet,
daß einer von den Teilen Kupplungszahn (5a), Kupplungsausnehmung (9a) einer Kupplungszahn-Kupplungsausnehmungskombination (5a,9a) eines Sonnenrads (9) mindestens ein Paar von Einweiseflanken (9b) axial angrenzend an das jeweils zugehörige Paar von Kupplungsflanken umfaßt, daß die einzelnen Einweiseflanken (9b) des genannten Paars von Einweiseflanken (9b) gegenüber einer zur Achse parallelen und durch den peripheren Mittelpunkt des jeweils zugehörigen Teils: Kupplungszahn (5a), Kupplungsausnehmung (9a) gelegten Bezugslinie in entgegengesetzter Richtung geneigt sind.
(Siehe z. B. Fig. 2a, 2a')

13. 5-Ganggetriebenabe nach Anspruch 11 oder 12,
dadurch gekennzeichnet,
daß der axialen Relativverschiebung des Kupplungszahns (5a) und der Kupplungsausnehmung (9a) der besagten kupplungszahn-Kupplungsausnehmungskombination (5a,9a) des einen Sonnenrads (9) eine erste Federung (Feder 30) entgegenwirkt, und daß die axiale Folgerelativverschiebung des Kupplungszahns (5a) und der Kupplungsausnehmung (10a) der Kupplungszahn-Kupplungsausnehmungskombination (5a,10a) des anderen Sonnenrads (10) durch eine zweite Federung (Feder 50) bewirkt wird.
(Siehe z. B. Fig. 2a, 2a')

14. 5-Ganggetriebenabe nach einem der Ansprüche 11 - 13,
dadurch gekennzeichnet,
daß die Kupplungszahn-Kupplungsausnehmungskombination (5a,9a) eines ersten (9) der Sonnenräder (9,10) und die Kupplungszahn-Kupplungsausnehmungskombination (5a,10a) eines zweiten (10) der Sonnenräder (9,10) einen gemeinsamen Kupplungszahn (5a) für jede der beiden Kombinationen und je eine Ausnehmung (9a,10a) in jedem der beiden Sonnenräder (9,10) umfaßt.
(Siehe z. B. Fig. 2a, 2a')

15. 5-Ganggetriebenabe nach einem der Ansprüche 11 - 13,
dadurch gekennzeichnet,
daß die Kupplungszahn-Kupplungsausnehmungskombination (5a,9a) eines ersten Sonnenrads (9) einen ersten Kupplungszahn (5a) und eine erste Kupplungsausnehmung (9a) für das erste Sonnenrad (9) umfaßt, und daß die Kupplungszahn-Kupplungsausnehmungskombination (5a',10a') des zweiten Sonnenrads (10) einen zweiten Kupplungszahn (5a') und eine zweite Kupplungsausnehmung (10a') für das zweite Sonnenrad (10) umfaßt.
(Siehe z. B. Fig. 3 und 3a)

16. 5-Ganggetriebenabe nach Anspruch 14,
dadurch gekennzeichnet,
daß der gemeinsame Kupplungszahn (5a) axial fest bezüglich der Nabenachse (5) angeordnet ist, und daß die Sonnenräder (9,10) axial beweglich gegenüber der Nabenachse (5) sind.
(Siehe z. B. Fig. 2a, 2a')

17. 5-Ganggetriebenabe nach Anspruch 14,
dadurch gekennzeichnet,
daß der gemeinsame Kupplungszahn (5a') axial beweglich gegenüber der Nabenachse (5) ist, und daß die Sonnenräder (9,10) axial fest gegenüber der Nabenachse (5) sind.
(Siehe z. B. Fig. 5, 5a und 6, 6a)

18. 5-Ganggetriebenabe nach einem der Ansprüche 11 - 17,
dadurch gekennzeichnet,
daß die Einweiseflanken (9b) Teile der jeweiligen Kupplungsausnehmung (9a) sind.

(Siehe z. B. Fig. 2a, 2a')

19. 5-Ganggetriebenabe nach einem der Ansprüche 11 - 17,
dadurch gekennzeichnet,
daß die Einweiseflanken (5b) Teile des jeweiligen Kupplungszahns (5a) sind.
(Siehe z. B. Fig. 2b, 2b')

20. 5-Ganggetriebenabe nach einem der Ansprüche 11 - 19,
dadurch gekennzeichnet,
daß der Kupplungszahn (5a) mindestens einer der Kupplungszahn-Kupplungsausnehmungskombinationen (5a,9a) einstückig mit der Nabenachse (5) hergestellt ist.
(Siehe z. B. Fig. 2a und 2a')

21. 5-Ganggetriebenabe nach Anspruch 17
dadurch gekennzeichnet,
daß der Kupplungszahn (5a') mindestens einer der Kupplungszahn-Kupplungsausnehmungskombinationen (5a',9a) ein Teil mindestens eines Schubklotzes ist.
(Siehe z. B. Fig. 5, 5a und 6, 6a)

22. 5-Ganggetriebe nach Anspruch 17,
dadurch gekennzeichnet,
daß der Kupplungszahn (13a) mindestens einer der Kupplungszahn-Kupplungsausnehmungskombinationen (13a,9a; 13a,10a) auf einer Schiebehülse (13) angeordnet ist, welche axial beweglich und unverdrehbar auf der Nabenachse (5) angebracht ist.
(Siehe z. B. Fig. 9 und 9a)

23. 5-Ganggetriebenabe nach Anspruch 15,
dadurch gekennzeichnet,
daß eine Trennfederung (Druckfeder 51) zwischen den beiden Sonnenrädern (9,10) vorgesehen ist, daß die beiden Sonnenräder (9,10) gegenüber der Nabenachse (5) axial beweglich sind, und daß die Kupplungszähne (5a,5a') der Kupplungszahn-Kupplungsausnehmungskombinationen (5a,9a;5a',10a') gegenüber der Nabenachse (5) axial fest sind.
(Siehe z. B. Fig. 3 und 3a)

24. 5-Ganggetriebenabe nach einem der Ansprüche 1 - 23,
dadurch gekennzeichnet,
daß die Rücktrittbremse einen Bremskonus (17) und einen spreizbaren Bremsmantel (24) umfaßt, daß der spreizbare Bremsmantel (24) drehfest an der Nabenachse (5) festgelegt ist, daß der Bremskonus (17) auf dem Planetenradträger (6) durch eine Gewindeanordnung (6a) angebracht und gegen Drehung durch eine Friktionsfeder (20) gesichert ist, wobei eine Rückwärtsverdrehung des Planetenradträgers (6) unter Vermittlung der Gewindeanordnung (6a) eine Axialbewegung des Bremskonus (17) bewirkt, und wobei diese Axialbewegung des Bremskonus (17) eine Spreizung des Bremsmantels (24) zum bremsenden Eingriff mit der Nabenhülse (1) bewirkt.
(Siehe z. B. Fig. 1)

25. 5-Ganggetriebenabe nach einem der Ansprüche 1 - 24,
dadurch gekennzeichnet,
daß die Nabenhülse (1) einen ersten Axialabschnitt von größerem Durchmesser und einen zweiten Axialabschnitt von kleinerem Durchmesser besitzt, daß der erste Axialabschnitt das Planetengetriebesystem aufnimmt, und daß der zweite Axialabschnitt die Rücktrittbremse aufnimmt.
(Siehe z. B. Fig. 1)

26. 5-Ganggetriebenabe nach einem der Ansprüche 1 - 4 und 11 - 25,
dadurch gekennzeichnet,
daß die Drehsperrmittel eine Schiebehülse (13) mit einem Längsschlitz (13c) umfassen, daß ein Schubklotz (12) der Gangsteuerungsmittel gleitend verschiebbar in den Längsschlitz (13c) der Schiebehülse (13) eingreift und auf ein geschlossenes Ende des Längsschlitzes (13c) einwirkt, um die Schiebehülse (13) in axialer Richtung durch einen Teil des axialen Bewegungsbereichs des Schubklotzes (12) zu bewegen.
(Siehe z. B. Fig. 1)

27. 5-Ganggetriebenabe nach Anspruch 26,
dadurch gekennzeichnet,
daß die Schiebehülse (13) eine erste Gruppe von Klauen (13a) zum Drehsperren des kleinen Sonnenrads (9) und eine zweite Gruppe von Klauen (Kupplungselemente 13b) zum Sperren des großen Sonnenrads (10) besitzt.
(Siehe z. B. Fig. 1)

28. 5-Ganggetriebenabe nach Anspruch 27,
dadurch gekennzeichnet,
daß die Klauen (13a) der ersten Gruppe von Klauen axial vorspringende Klauen (13a) sind und daß die Klauen (Kupplungselemente 13b) der zweiten Gruppe von Klauen radial vorspringende Klauen (13b) sind, wobei "axial" und "radial" jeweils bezüglich der Schiebehülse (13) zu verstehen ist.
(Siehe z. B. Fig. 1)

29. 5-Ganggetriebenabe nach einem der Ansprüche 26 - 28,
dadurch gekennzeichnet,
daß die Schiebehülse (13) in axialer Richtung durch eine Schiebehülsenbeaufschlagungsfederung (Druckfeder 34) belastet ist, welche die Schiebehülse (13) in Richtung auf eine im wesentlichen gleichbleibende Position vorspannt.
(Siehe z. B. Fig. 1)

30. 5-Ganggetriebenabe nach einem der Ansprüche 26 - 29,
dadurch gekennzeichnet,
daß der Schubklotz (12) durch eine Schubklotzbeaufschlagungsfederung (Druckfeder 28) belastet ist, wobei diese Schubklotzbeaufschlagungsfederung (Druckfeder 28) den Schubklotz (12) in Richtung auf seine 5. Position vorspannt, und wobei die Gangsteuerungsmittel (12c,12b,12a) ziehende Gangsteuerungsmittel sind.
(Siehe z. B. Fig. 1)

31. 5-Ganggetriebenabe nach einem der Ansprüche 1 - 30,
dadurch gekennzeichnet,
daß das Hohlrad (11) als Folge der axialen Bewegung des Kupplungselements (Kupplungsbuchse 14) axial beweglich ist, und daß die Inaktivierung des ersten Freilaufgesperres (19,1b) als Folge einer axialen Bewegung des Hohlrads (11) eintritt.
(Siehe z. B. Fig. 1)

32. 5-Ganggetriebenabe nach Anspruch 31,
dadurch gekennzeichnet,
daß das Hohlrad (11) durch den Antreiber (3) vermittels einer Hohlradstützfederung (Druckfeder 36) abgestützt ist und daß das Kupplungselement (Kupplungsbuchse 14) auf das Hohlrad (11) durch eine Hohlradverschiebefederung (Druckfeder 35) einwirkt, wobei die Hohlradverschiebefederung (Druckfeder 35) schwächer ist als die Hohlradstützfederung (Druckfeder 36).
(Siehe z. B. Fig. 1)

33. 5-Ganggetriebenabe nach einem der Ansprüche 1 - 32,
dadurch gekennzeichnet,
daß das Kupplungselement (Kupplungsbuchse 14) mit einem von den Gangsteuerungsmitteln beaufschlagten Schubklotz (12) durch eine spielbehaftete Verbindung verbunden ist, um das Kupplungselement (Kupplungsbuchse 14) auf einem Teil des axialen Bewegungsbereichs des Schubklotzes (12) mitzunehmen.
(Siehe z. B. Fig. 1)

**34.** 5-Ganggetriebenabe nach Anspruch 33,
dadurch gekennzeichnet,
daß die spielbehaftete Verbindung eine spiel-
bereitstellende Druckfeder (Feder 32) um-
faßt.
(Siehe z. B. Fig. 1)

## Claims

**1.** A 5-speed gear hub, particularly with a back-
pedal brake, for bicycles or the like, comprising
- a hub axle (5) having a geometrical axis,
- a driver (3) rotatably mounted on the hub
axle (5), the said driver (3) being constructed to be fitted with at least one
chain wheel (3'),
- a hub sleeve (1), rotatably mounted on
the hub axle (5),
- a planet gear system inside the hub
sleeve (1), the said planet gear system
having:
- an axially fixed planet wheel carrier (6),
which is rotatably mounted on the hub
axle (5),
- at least one axially fixed planet wheel (8),
which is rotatably mounted on the planet
wheel carrier (6), the said planet wheel
(8) being provided with a large stepped
planet wheel (8a) and a small stepped
planet wheel (8b),
- sun wheels (9, 10), namely a small sun
wheel (9) for meshing engagement with
the large stepped planet wheel (8a) and
a large sun wheel (10) for meshing engagement with the small stepped planet
wheel (8b), these sun wheels (9, 10) being capable of being selectively locked
against rotation about the hub axle (5),
- a hollow wheel (11) which is mounted to
rotate about the hub axle (5), the hollow
wheel (11) being in meshing engagement
with one of the stepped planet wheels
(8a, 8b), and further comprising
- an axially displaceable coupling element
(14), particularly in the form of a coupling
bush (14), which is in constant torque-
transmitting engagement with the driver
(3) and can be selectively engaged with
either the planet wheel carrier (6) or the
hollow wheel (11), in order to rotate
about the hub axle (5) jointly with the
relevant part,
- a first free-wheel lock (drive detent pawl
19 - internal locking mechanism 1b) between the hollow wheel (11) and the hub
sleeve (1),
- a second free-wheel lock (drive detent pawl - internal locking mechanism 1a)
between the planet wheel carrier (6) and
the hub sleeve (1) and
- gear control means (tie rod 12a - tension
chain 12b
- connecting part 12c), introduced from
one single end of the hub axle (5)
through a bore (5c) into the hub interior,
and which are intended and suitable for
selectively, through a slot (5b) in the hub
axle (5), locking one or other of the sun
wheels (9, 10) against rotation about the
hub axle (5), for selectively coupling the
coupling element (14) with the planet
wheel carrier (6) and the hollow wheel
(11) and for
inactivating the first free-wheel lock
(29, 1b),
whereby, in a 5th gear selection situation
the small sun wheel (9) is free to rotate
about the hub axle (5), the large sun
wheel (10) is locked against rotation
about the hub axle (5), the coupling element (14) is in torque-transmitting engagement with the planet wheel carrier
(6) and the first free-wheel lock (19, 1b)
is active, and
whereby, in a 4th gear selection situation
the small sun wheel (9) is locked against
rotation about the hub axle (5), the large
sun wheel (10) is freely rotatable about
the hub axle (5), the coupling element
(14) is still in torque-transmitting engagement with the planet wheel carrier (6)
and the first free-wheel lock (19, 1b) is
still active, and
whereby, in a 3rd gear selection situation, the small sun wheel (9) is locked
against rotation about the hub axle (5),
the large sun wheel (10) is freely rotatable about the hub axle (5), the coupling
element (14) is in torque-transmitting engagement with the hollow wheel (11) and
the first free-wheel lock (19, 1b) is still
active and
whereby in a 2nd gear selection situation, the small sun wheel (9) is locked
against rotation about the hub axle (5),
the large sun wheel (10) is freely rotatable about the hub axle (5), the coupling
element (14) is in torque-transmitting engagement with the hollow wheel (11) and
the first free-wheel lock (19, 1b) is inactivated and
whereby in a 1st gear selection situation,
the small sun wheel (9) is freely rotatable
about the hub axle (5), the large sun
wheel (10) is locked against rotation about the hub axle (5), the coupling element (14) is in torque-transmitting engagement with the hollow wheel (11) and the first free-wheel lock (19, 1b) is inactivated,

characterised in that a single gear control member (tie rod 12a - tension chain 12 - connecting part 12c) constructed as a pulling member is introduced through the bore (5c) into the hub interior and can be adjusted to a plurality of positions corresponding to the five gear selection situations and which against spring force successively approach to the said single end of the hub axle, and so acts with clearance on spring and abutment controlled sun wheel rotation locking means (9a, 10a, 13) which are adapted for axial displacement relative to one another, that when the gear control member (tie rod 12a - tension chain 12b - connecting part 12c) moves from the 5th position to the 4th position, there is a relative displacement of the sun wheel rotation locking means and the small sun wheel (9) which is rotatable in the 5th position is locked against rotation in the 4th position and the large sun wheel (10) which is rotationally locked in the 5th position becomes rotatable in the 4th position and in that upon shifting from the 4th position into the 3rd position and from the 3rd position into the 2nd position, the relative position of the rotation locking means is maintained, i.e. the small sun wheel (9) remains rotationally locked, while the large sun wheel (10) remains rotatable and in that upon the transition from the 2nd position to the 1st position there is a fresh relative displacement of the sun wheel rotation locking means and the small sun wheel (9) again becomes rotatable while the large sun wheel (10) is again rotationally locked (see Fig. 1, for example).

2. A 5-speed gear hub, according to Claim 1, characterised in that
- a single gear control member (tie rod 12a - tension chain 12b - connecting part 12c) is introduced through the bore (5c) into the hub interior and is connected to a thrust block (12) which acts on the coupling element (14) and which can be adjusted by the gear control member (12c, 12b, 12a) into five axially spaced apart positions corresponding to the five gear selection situations, namely

- a 5th - 1st position which in succession come close to the said single end of the hub axle and in that
- the thrust block (12) acts with transmission clearance (13c) on an axially movable sun wheel locking element (sliding sleeve 13) which is secured against rotation about their hub axle (5) and which is so coupled on a part of the axial range of movements of the thrust block (12) to the movement of the thrust block (12) that
- the thrust block (12) upon the transition from the 5th position to the 4th position allows a spring force and abutment controlled displacement of the sun wheels (9, 10) out of a first position in relation to the axially stationary sun wheel locking element (13) in which the small sun wheel (9) is released while the large sun wheel (10) is locked and into a second relative position which releases the large sun wheel (10) and locks the small sun wheel (9) and which is maintained in the 3rd to 2nd position of the thrust block (12) and in that upon the transition of the thrust block (12) from the 2nd position to the 1st position the sun wheel locking element (13) can be axially entrained by the thrust block (12), restoring the 1st relative position (see Fig. 1 for example).

3. A 5-speed gear hub according to Claim 1, characterised in that
- a single gear control member (12b) is introduced through the bore into the hub interior and connected to thrust block means (12, 12') acting on the coupling element (14) and of which a thrust block (12) is adjustable by the gear control member (12b) into five axially spaced apart positions corresponding to the five gear selection situations, namely
- a 5th - 1st position which in succession come close to the said single end of the hub axle and in that
- the thrust block (12) acts with transmission clearance on an axially movable sun wheel locking element which is secured against rotation about their hub axle (5) and which is so coupled on a part of the axial range of movements of the thrust block (12) to the movement of the thrust block (12) that
- the sun wheel locking element (13) which is provided with two axially spaced apart coupling elements (coupling faces (13a, 13a) is in the 5th position pre-tensioned by a spring (30) acting against the thrust block (12) into an axial position in which a first coupling element (13a) renders the axially non-displaceable large sun wheel (10) rotationally rigid while the likewise axially non-displaceable small sun wheel (9) is rotatable and upon the transition of the thrust block (12) from the 5th position to the 4th position the sun wheel locking element (13) under the action of the spring (30) follows the thrust block (12) into an axial position in which a second coupling element (13a) of the sun wheel locking element (13) makes the small sun wheel (9) rotationally rigid while the first coupling element (13a) releases the large sun wheel (10), the sun wheel locking element (13) upon transition of the thrust block (12) from the 4th to the 3rd position and from the 3rd position to the 2nd position retains its axial position while the sun wheel locking element (13) upon transition of the thrust block (12) from the 2nd into the 1st position is entrained by the thrust block (12), so that now the second coupling element (13a) makes the large sun wheel (10) rotationally rigid while the small sun wheel (9) becomes rotatable again (see Fig. 28 for example).

4. A 5-speed gear hub according to Claim 1, characterised in that
   - a single gear control member is introduced through the bore into the hub interior and is connected to a thrust block (12) which acts on the coupling element (14) and which can be adjusted by the gear control member into five axially spaced apart positions corresponding to the five gear selection situations, namely
   - a 5th - 1st position which in succession come close to the said single end of the hub axle and in that
   - the thrust block (12) acts with transmission clearance (13c) on an axially movable sun wheel locking element which is secured against rotation about their hub axle (5) and which is so coupled on a part of the axial range of movements of the thrust block (12) to the movement of the thrust block (12) that
   - the two axially spaced apart and axially displaceable sun wheels (9 and 10) are in a 5th position of the thrust block (12) axially pre-tensioned by a thrust spring (30) against the thrust block (12) and of two axially spaced apart coupling elements (coupling tooth systems 13a) of the axially displaceable and non-rotatable sun wheel locking element (13), a first coupling element (13a) makes the large sun wheel (10) rotationally rigid while the small sun wheel (9) can rotate and upon transition from the 5th position to the 4th position the two sun wheels (9, 10), under the action of the thrust spring (30) follow the thrust block (12), while the small sun wheel (9) is made rotationally rigid by a second coupling element (13a) and the large sun wheel (10) becomes freely, rotatable and upon the transition from the 4th position to the 3rd position and from the 3rd position to the 2nd position the sun wheel locking elements (13) and the sun wheels (9 and 10) remain axially stationary and upon the transition from the 2nd position to the 1st position the sun wheel locking element (13) is axially entrained and via the second coupling element (13a) releases the small sun wheel (9), making the large sun wheel (10) rotationally rigid via the first coupling element (13a) (see for example Fig. 23 in conjunction with Fig. 1).

5. A 5-speed gear hub according to Claim 1, characterised in that
   - the single gear control member is introduced through the bore into the hub interior and is connected to a thrust block (12) which can be adjusted by the gear control member into five axially spaced apart positions which correspond to the five gear selection situations, namely
   - a 5th - 1st position which in succession come close to the said single end of the hub axle and in that
   - the thrust block (12) acts with transmission clearance (13c) on an axially movable sun wheel locking element (S) which over a part of the axial range of movement of the thrust block (12) is coupled with the movement of the thrust block (12) so that
   - the two axially movable sun wheels (9, 10) are initially tensioned by a spring (30) in the 5th position jointly against an abutment (13') which is connected to the thrust block (12), into an axial position in which the large sun wheel (10) is rendered rotationally rigid by an axially fixed coupling element (axle tooth system 5a) while the small sun wheel (9) is rotatable and in that upon the transition from the 5th into the 4th position the two sun wheels (9 and 10) follow the abutment (13') which is coupled to the thrust block (12), the large sun wheel (10) becomes freely rotatable and the small sun wheel (9) is rendered rotationally rigid by the coupling element (5a) and upon the transition from the 4th into the 3rd position and from the 3rd into the 2nd position the sun wheels (9, 10) remain stationary and upon the transition from the 2nd position into the 1st position the thrust block (12) acts upon a movement reversing gear mechanism (K) which acts upon the sun wheel locking element (S) and displaces the two sun wheels (9 and 10) in the reverse axial direction the small sun wheel (9) again becoming freely rotatable while the large sun wheel (10) again engages the coupling element (5a) (see for example Fig. 25 in conjunction with Fig. 1).

6. A 5-speed gear hub according to Claim 5, characterised in that the movement reversing gear mechanism (K) is a pivot lever gear mechanism (see for example Fig. 25).

7. A 5-speed gear hub according to Claim 5, characterised in that the movement reversing gear mechanism (T) is a screw gear mechanism.

8. A 5-speed gear hub particularly with a back-pedal brake, for bicycles or the like, comprising
    - a hub axle (5) having a geometrical axis,
    - a driver (3) rotatably mounted on the hub axle (5), the said driver (3) being constructed to be fitted with at least one chain wheel (3'),
    - a hub sleeve (1), rotatably mounted on the hub axle (5),
    - a planet gear system inside the hub sleeve (1), the said planet gear system having:
    - an axially fixed planet wheel carrier (6), which is rotatably mounted on the hub axle (5),
    - at least one axially fixed planet wheel (8), which is rotatably mounted on the planet wheel carrier (6), the said planet wheel (8) being provided with a large stepped planet wheel (8a) and a small stepped planet wheel (8b),
    - sun wheels (9, 10), namely a small sun wheel (9) for meshing engagement with the large stepped planet wheel (8a) and a large sun wheel (10) for meshing engagement with the small stepped planet wheel (8b), these sun wheels (9, 10) being capable of being selectively locked against rotation about the hub axle (5),
    - a hollow wheel (11) which is mounted to rotate about the hub axle (5), the hollow wheel (11) being in meshing engagement with one of the stepped planet wheels (8a, 8b), and further comprising
    - an axially displaceable coupling element (14), particularly in the form of a coupling bush (14), which is in constant torque-transmitting engagement with the driver (3) and can be selectively engaged with either the planet wheel carrier (6) or the hollow wheel (11), in order to rotate about the hub axle (5) jointly with the relevant part,
    - a first free-wheel lock (drive detent pawl 19 - internal locking mechanism 1b) between the hollow wheel (11) and the hub sleeve (1),
    - a second free-wheel lock (drive detent pawl internal locking mechanism 1a) between the planet wheel carrier (6) and the hub sleeve (1) and
    - gear control means (tie rod 12a - tension chain 12b
    - connecting part 12c), introduced from one single end of the hub axle (5) through a bore (5c) into the hub interior, and which are intended and suitable for selectively, through a slot (5b) in the hub axle (5), locking one or other of the sun wheels (9, 10) against rotation about the hub axle (5), for selectively coupling the coupling element (14) with the planet wheel carrier (6) and the hollow wheel (11) and for inactivating the first free-wheel lock (29, 1b),
    whereby, in a 5th gear selection situation the small sun wheel (9) is free to rotate about the hub axle (5), the large sun wheel (10) is locked against rotation about the hub axle (5), the coupling element (14) is in torque-transmitting engagement with the planet wheel carrier (6) and the first free-wheel lock (19, 1b) is active, and
    whereby, in a 4th gear selection situation the small sun wheel (9) is locked against rotation about the hub axle (5), the large sun wheel (10) is freely rotatable about the hub axle (5), the coupling element (14) is still in torque-transmitting engagement with the planet wheel carrier (6) and the first free-wheel lock (19, 1b) is still active, and
    whereby, in a 3rd gear selection situation, the small sun wheel (9) is locked against rotation about the hub axle (5), the large sun wheel (10) is freely rotatable about the hub axle (5), the coupling element (14) is in torque-transmitting engagement with the hollow wheel (11) and the first free-wheel lock (19, 1b) is still active and

whereby in a 2nd gear selection situation, the small sun wheel (9) is locked against rotation about the hub axle (5), the large sun wheel (10) is freely rotatable about the hub axle (5), the coupling element (14) is in torque-transmitting engagement with the hollow wheel (11) and the first free-wheel lock (19, 1b) is inactivated and

whereby in a 1st gear selection situation, the small sun wheel (9) is freely rotatable about the hub axle (5), the large sun wheel (10) is locked against rotation about the hub axle (5), the coupling element (14) is in torque-transmitting engagement with the hollow wheel (11) and the first free-wheel lock (19, 1b) is inactivated,

characterised in that

a single gear control member is introduced through the bore into the hub interior and acts upon sun wheel rotation-locking means (9a, 10a, 5a) which are axially displaceable in relation to one another, whereby, by reciprocation of the gear control means between two positions optionally the small sun wheel (9) can be locked against rotation while the large sun wheel (10) can be freely rotatable or the large sun wheel (10) can be locked against rotation while the small sun wheel (9) is freely rotatable (see Fig. 1 in conjunction with one of Figs. 10 to 21).

9. A 5-speed gear hub according to Claim 8, characterised in that

the sun wheel rotation-locking means (9a, 10, 5a) can be locked in both positions by catch means (G) (see Fig. 1 in conjunction with Fig. 14).

10. A 5-speed gear hub particularly with a back-pedal brake particularly for bicycles or the like comprising

- a hub axle (5) having a geometrical axis,
- a driver (3) rotatably mounted on the hub axle (5), the said driver (3) being constructed to be fitted with at least one chain wheel (3'),
- a hub sleeve (1), rotatably mounted on the hub axle (5),
- a planet gear system inside the hub sleeve (1), the said planet gear system having:
- an axially fixed planet wheel carrier (6), which is rotatably mounted on the hub axle (5),
- at least one axially fixed planet wheel (8), which is rotatably mounted on the planet wheel carrier (6), the said planet wheel (8) being provided with a large stepped planet wheel (8a) and a small stepped planet wheel (8b),
- sun wheels (9, 10), namely a small sun wheel (9) for meshing engagement with the large stepped planet wheel (8a) and a large sun wheel (10) for meshing engagement with the small stepped planet wheel (8b), these sun wheels (9, 10) being capable of being selectively locked against rotation about the hub axle (5),
- a hollow wheel (11) which is mounted to rotate about the hub axle (5), the hollow wheel (11) being in meshing engagement with one of the stepped planet wheels (8a, 8b), and further comprising
- an axially displaceable coupling element (14), particularly in the form of a coupling bush (14), which is in constant torque-transmitting engagement with the driver (3) and can be selectively engaged with either the planet wheel carrier (6) or the hollow wheel (11), in order to rotate about the hub axle (5) jointly with the relevant part,
- a first free-wheel lock (drive detent pawl 19 - internal locking mechanism 1b) between the hollow wheel (11) and the hub sleeve (1),
- a second free-wheel lock (drive detent pawl - internal locking mechanism 1a) between the planet wheel carrier (6) and the hub sleeve (1) and
- gear control means (tie rod 12a - tension chain 12b
- connecting part 12c), introduced from one single end of the hub axle (5) through a bore (5c) into the hub interior, and which are intended and suitable for selectively, through a slot (5b) in the hub axle (5), locking one or other of the sun wheels (9, 10) against rotation about the hub axle (5), for selectively

coupling the coupling element (14) with the planet wheel carrier (6) and the hollow wheel (11) and

for inactivating the first free-wheel lock (29, 1b),

whereby, in a 5th gear selection situation the small sun wheel (9) is free to rotate about the hub axle (5), the large sun wheel (10) is locked against rotation about the hub axle (5), the coupling element (14) is in torque-transmitting engagement with the planet wheel carrier (6) and the first free-wheel lock (19, 1b) is active, and

whereby, in a 4th gear selection situation the small sun wheel (9) is locked against rotation about the hub axle (5), the large sun wheel (10) is freely rotatable about the hub axle (5), the coupling element (14) is still in torque-transmitting engagement with the planet wheel carrier (6) and the first free-wheel lock (19, 1b) is still active, and

whereby, in a 3rd gear selection situation, the small sun wheel (9) is locked against rotation about the hub axle (5), the large sun wheel (10) is freely rotatable about the hub axle (5), the coupling element (14) is in torque-transmitting engagement with the hollow wheel (11) and the first free-wheel lock (19, 1b) is still active and

whereby in a 2nd gear selection situation, the small sun wheel (9) is locked against rotation about the hub axle (5), the large sun wheel (10) is freely rotatable about the hub axle (5), the coupling element (14) is in torque-transmitting engagement with the hollow wheel (11) and the first free-wheel lock (19, 1b) is inactivated and

whereby in a 1st gear selection situation, the small sun wheel (9) is freely rotatable about the hub axle (5), the large sun wheel (10) is locked against rotation about the hub axle (5), the coupling element (14) is in torque-transmitting engagement with the hollow wheel (11) and the first free-wheel lock (19, 1b) is inactivated,

characterised in that

- a single gear control member is inserted through the bore into the hub interior and acts upon sun wheel rotation-locking means (9a, 10, 13a) which are axially displaceable in relation to one another,

- whereby the sun wheel rotation-locking means (9a, 10a, 13a) comprise two axially spaced apart non-rotatable sun wheel locking elements (coupling tooth systems 13a) which are jointly displaceable by the gear control member and of which each, during the course of a multi-stage like-directed displacement, engages coupling profiles (9a and 10a) of the two sun wheels (9, 10) in fact so that in each position of the sun wheel locking elements (coupling tooth systems 13a) in each case only one of these sun wheel locking elements (coupling tooth systems 13a) engages a coupling profile (9a, 10a) of a sun wheel (9 or 10) (see Fig. 24 and 24a in conjunction with Fig. 1).

**11.** A 5-speed gear hub according to one of Claims 1 to 10, characterised in that

each of the sun wheels (9, 10) can be locked against rotation about the hub axle (5) by at least one coupling tooth-coupling recess combination (5a, 9a; 5a, 10a) with a coupling tooth (5a) rotationally rigidly disposed on the hub axle (5) and a coupling recess (9a, 10a) disposed on the relevant sun wheel (9 or 10) or vice versa and in that the locking and the rotational release of the relevant sun wheel (9 or 10) takes place by an axial relative movement of the relevant coupling tooth and of the relevant coupling recess (9a, 10a) in that the relevant coupling tooth (5a) enters the relevant coupling recess (9a, 10a) or emerges therefrom and in that both the coupling tooth (5a) and also the coupling recess (9a, 10a) of the coupling tooth-coupling recess combinations (5a, 9a; 5a, 10a) of each sun wheel (9, 10) comprises in each case a pair of substantially axially parallel coupling flanks and in that one of the parts: coupling tooth (5a), coupling recess (9a) of a coupling tooth-coupling recess combination (5a, 9a) of a sun wheel (9) comprises a guide flank (9a) axially adjacent the relevant associated coupling flank so that by relative rotation of the coupling tooth (5a) and of the coupling recess (9a) the coupling tooth-coupling recess combination (5a, 9a) of one sun wheel (9), upon peripheral juxtaposition of the guide flank (9b) of one (9a) of the parts: coupling tooth (5a) and coupling recess (9a) in respect of whichever is the other (5a) of these parts there is an axial relative displacement of coupling tooth (5a) and coupling recess (9a) of the coupling tooth-coupling recess combination (5a, 9a) of one sun wheel (9) in the direction of release of engagement of this coupling tooth (5a) and of this coupling recess (9a) and in that this axial relative displacement causes an axial and consequent relative displacement of the coupling tooth (5a) and of the coupling recess (10a) of the coupling tooth-coupling recess combination (5a, 10a) of the other sun wheel (10) in the direction of establishing engagement of the coupling flanks of the coupling tooth (5a) and of the coupling recess (10a) of the coupling tooth-coupling recess combination (5a, 10a) of the other sun wheel (10) (see for example Figs. 2a, 2a').

12. A 5-speed gear hub according to Claim 11, characterised in that
one of the parts: coupling tooth (5a), coupling recess (9a) of a coupling tooth-coupling recess combination (5a, 9a) of a sun wheel (9) comprises at least one pair of guide flanks (9a) axially adjacent the particular associated pair of coupling flanks and in that the individual guide flanks (9b) of the said pair of guide flanks (9b) are inclined in the opposite direction to a reference line parallel with the axis and passing through the peripheral centre point of whichever is the associated part: coupling tooth (5a), coupling recess (9a) (see for example Figs. 2a, 2a').

13. A 5-speed gear hub according to Claim 11 or 12,
characterised in that
the axial relative displacement of the coupling tooth (5a) and of the coupling recess (9a) of the said coupling tooth-coupling recess combination (5a, 9a) of one sun wheel (9) counteracts a first spring arrangement (spring 30) and in that the axial resultant relative displacement of the coupling tooth (5a) and of the coupling recess (10a) of the coupling tooth-coupling recess combination (5a, 10a) of the other sun wheel (10) is brought about by a second spring arrangement (spring 50) (see for example Figs. 2a, 2a').

14. A 5-speed gear hub according to one of Claims 11 to 13, characterised in that
the coupling tooth-coupling recess combination (5a, 9a) of a first (9) of the sun wheels (9, 10) and the coupling tooth-coupling recess combination (5a, 10a) of a second (10) of the sun wheels (9, 10) comprises a joint coupling tooth (5a) for each of the two combinations and a respective recess (9a, 10a) in each of the two sun wheels (9, 10) (see for example Figs. 2a, 2a').

15. A 5-speed gear hub according to one of Claims 11 to 13, characterised in that
the coupling tooth-coupling recess combination (5a, 9a) of a first sun wheel (9) comprises a first coupling tooth (5a) and a first coupling recess (9a) for the first sun wheel (9) and in that the coupling tooth-coupling recess combination (5a', 10a') of the second sun wheel (10) comprises a second coupling tooth (5a') and a second coupling recess (10a') for the second sun wheel (10) (see for example Figs. 3 and 3a).

16. A 5-speed gear hub according to Claim 14, characterised in that
the common coupling tooth (5a) is axially rigid in relation to the hub axle (5) and in that the sun wheels (9, 10) are axially movable in relation to the hub axle (5) (see for example Figs. 2a, 2a').

17. A 5-speed gear hub according to Claim 14, characterised in that
the common coupling tooth (5a') is axially movable in relation to the hub axle (5) and in that the sun wheels (9, 10) are axially rigid in relation to the hub axle (5) (see for example Figs. 5, 5a and 6, 6a).

18. A 5-speed gear hub according to one of Claims 11 to 17, characterised in that
the guide flanks (9b) are parts of the relevant coupling recess (9a) (see for example Figs. 2a, 2a').

19. A 5-speed gear hub according to one of Claims 11 to 17, characterised in that
the guide flanks (5b) are parts of the relevant coupling tooth (5a) (see for example Figs. 2b, 2b').

20. A 5-speed gear hub according to one of Claims 11 to 19, characterised in that
the coupling tooth (5a) of at least one of the coupling tooth-coupling recess combinations (5a, 9a) is constructed in one piece with the hub axle (5) (see for example Figs. 2a and 2a').

21. A 5-speed gear hub according to Claim 17, characterised in that
the coupling tooth (5a') of at least one of the coupling tooth-coupling recess combinations (5a', 9a) is a part of at least one thrust block (see for example Figs. 5, 5a and 6, 6a).

22. A 5-speed gear hub according to Claim 17, characterised in that
the coupling tooth (13a) of at least one of the coupling tooth-coupling recess combinations (13a, 9a; 13a, 10a) is disposed on a sliding sleeve (13) which is mounted for axial movement and is non-rotatable on the hub axle (5) (see for example Figs. 9 and 9a).

23. A 5-speed gear hub according to Claim 15, characterised in that

a separating spring arrangement (thrust spring 51) is provided between the two sun wheels (9, 10) and in that the two sun wheels (9, 10) are axially movable in relation to the hub axle (5) and in that the coupling teeth (5a, 5a') of the coupling tooth-coupling recess combinations (5a, 9a; 5a', 10a') are axially rigid in relation to the hub axle (5) (see for example Figs. 3 and 3a).

24. A 5-speed gear hub according to one of Claims 1 to 23, characterised in that

the back-pedal brake comprises a brake cone (17) and an expandable brake shell (24) and in that the expandable brake shell (24) is rotationally rigidly fixed on the hub axle (5) and in that the brake cone (17) is mounted on the planet wheel carrier (6) by a screw-threaded arrangement (6a) and is secured against rotation by a friction spring (20), a rearwards rotation of the planet wheel carrier (6), through the screw-threaded arrangement (6a), producing an axial movement of the brake cone (17), this axial movement of the brake cone (17) causing an expansion of the brake shell (24) to achieve a braking engagement with the hub sleeve (1) (see for example Fig. 1).

25. A 5-speed gear hub according to one of Claims 1 to 24, characterised in that

the hub sleeve (1) has a first axial portion of larger diameter and a second axial portion of smaller diameter and in that the first axial portion accommodates the planet gear system while the second axial portion accommodates the back-pedal brake (see for example Fig. 1).

26. A 5-speed gear hub according to one of Claims 1 to 4 and 11 to 25, characterised in that

the rotation-locking means comprise a sliding sleeve (13) with a longitudinal slot (13c) and in that a thrust block (12) of the gear control means is slidingly displaceable in its engagement in the longitudinal slot (13c) of the sliding sleeve (13) and acts upon a closed end of the longitudinal slot (13c) in order to move the sliding sleeve (13) in an axial direction through a part of the axial range of movement of the thrust block (12) (see for example Fig. 1).

27. A 5-speed gear hub according to Claim 26, characterised in that

the sliding sleeve (13) has a first group of dogs (13a) for rotationally locking the small sun wheel (9) and a second group of dogs (coupling elements 13b) for locking the large sun wheel (10) (see for example Fig. 1).

28. A 5-speed gear hub according to Claim 27, characterised in that

the dogs (13a) of the first group are axially projecting dogs (13a) and in that the dogs (coupling elements 13b) of the second group of dogs are radially projecting dogs (13b), the terms "axially" and "radially" being respectively understood as being in relation to the sliding sleeve (13) (see for example Fig. 1).

29. A 5-speed gear hub according to one of Claims 26 to 28, characterised in that

the sliding sleeve (13) is biased in an axial direction by a sliding sleeve biasing spring (thrust spring 34) which pre-tensions the sliding sleeve (13) in the direction of a substantially constant position (see for example Fig. 1).

30. A 5-speed gear hub according to one of Claims 26 to 29, characterised in that

the thrust block (12) is biased by a thrust block biasing spring arrangement (thrust spring 28), the said thrust block biasing spring arrangement (thrust spring 28) initially tensioning the thrust block (12) in the direction of its 5th position, and in that the gear control means (12c, 12b, 12a) are pulling gear control means (see for example Fig. 1).

31. A 5-speed gear hub according to one of Claims 1 to 30, characterised in that

as a result of the axial movement of the coupling element (coupling bush 14), the hollow wheel (11) is axially movable and in that inactivation of the first free wheel lock (19, 1b) occurs as the result of an axial movement of the hollow wheel (11) (see for example Fig. 1).

32. A 5-speed gear hub according to Claim 31, characterised in that

the hollow wheel (11) is braced by the driver (3) through a hollow wheel bracing spring (thrust spring 36) and in that the coupling element (coupling bush (14) acts on the hollow wheel (11) through a hollow wheel displacing spring arrangement (thrust spring 35), the hollow wheel displacing spring arrangement (thrust spring 35) being weaker than the hollow wheel bracing spring arrangement (thrust spring 36) (see for example Fig. 1).

33. A 5-speed gear hub according to one of Claims 1 to 32, characterised in that

the coupling element (coupling bush 14) is connected to a thrust block (12) which is subject to the action of the gear control means, by a connection which is subject to clearance so that the coupling element (coupling bush 14) can be entrained over a part of the axial range of movement of the thrust block (12) (see for example Fig. 1).

**34.** A 5-speed gear hub according to Claim 33, characterised in that

the connection which is subject to clearance comprises a clearance-providing thrust spring arrangement (spring 32) (see for example Fig. 1).

**Revendications**

**1.** Moyeu à 5 vitesses, en particulier avec frein à contre-pédalage, pour cycles ou similaires, comprenant

un axe de moyeu (5) qui possède un axe géométrique,

un dispositif d'entraînement (3), qui est disposé de manière rotative sur l'axe de moyeu (5), ce dispositif d'entraînement (3) étant conçu pour être muni d'au moins un grand pignon (3'),

une gaine de moyeu (1) qui est supportée de manière rotative sur l'axe de moyeu (5),

un système d'engrenages planétaires à l'intérieur de la gaine de moyeu (1), ce système d'engrenages planétaires présentant :

un porte-pignons satellites (6) fixe dans le sens axial, qui est supporté de manière rotative sur l'axe de moyeu (5),

au moins un pignon satellite (8) fixe dans le sens axial, qui est supporté de manière rotative sur le porte-pignons satellites (6), ce pignon satellite (8) étant réalisé avec un grand pignon satellite à gradins (8a) et un petit pignon satellite à gradins (8b),

des roues solaires (9, 10), à savoir une petite roue solaire (9) destinée à se mettre en prise par engrenage avec le grand pignon satellite à gradins (8a) et une grande roue solaire (10) destinée à se mettre en prise avec le petit pignon satellite à gradins (8b), ces roues solaires (9, 10) pouvant être verrouillées sélectivement contre la rotation autour de l'axe de moyeu (5),

une couronne de train planétaire (11) supportée de manière rotative autour de l'axe de moyeu (5), la couronne de train planétaire (11) se mettant en prise par engrenage avec l'un des pignons satellites à gradins (8a, 8b),

et comportant en outre

un élément d'accouplement (14) mobile dans le sens axial, en particulier sous la forme d'une douille d'accouplement (14), qui se trouve en une prise constante pour la transmission du couple de rotation avec le dispositif d'entraînement (3) et peut être amenée sélectivement à coopérer avec soit le porte-pignons satellites (6), soit la couronne de train planétaire (11), afin d'effectuer une rotation avec la partie correspondante autour de l'axe de moyeu (5),

un premier verrouillage de roue libre (cliquet de verrouillage de l'entraînement 19 - verrouillage intérieur 1b) entre la couronne de train planétaire (11) et la gaine de moyeu (1),

un second verrouillage de roue libre (cliquet de verrouillage de l'entraînement 18 - verrouillage intérieur 1b) entre le porte-pignons satellites (6) et la gaine de moyeu (1) et

des moyens de commande des vitesses (barre de traction 12a - chaîne de traction 12b - pièce de raccordement 12c), qui sont introduits à l'intérieur du moyeu à partir d'une seule extrémité de l'axe de moyeu (5) à travers un trou (5c) et qui sont destinés et adaptés à verrouiller sélectivement l'une ou l'autre des roues planétaires (9, 10) contre la rotation autour de l'axe de moyeu (5) à travers une fente (5b) de l'axe de moyeu (5), à coupler sélectivement l'élément d'accouplement (14) avec le porte-pignons satellites (6) et la couronne de train planétaire (11) et à inactiver le premier verrouillage de roue libre (19, 1b),

la petite roue solaire (9) étant libre d'effectuer une rotation autour de l'axe de moyeu (5) lorsque la cinquième vitesse est engagée, la grande roue solaire (10) étant verrouillée contre une rotation autour de l'axe de moyeu (5), l'élément d'accouplement (14) étant en prise pour la transmission du couple de rotation avec le porte-pignons satellites (6) et le premier verrouillage de roue libre (19, 1b) étant actif,

la petite roue solaire (9) étant verrouillée contre une rotation autour de l'axe de moyeu (5) lorsque la quatrième vitesse est engagée, la grande roue solaire (10) étant libre d'effectuer une rotation autour de l'axe de moyeu (5), l'élément d'accouplement (14) étant encore en prise pour la transmission du couple de rotation avec le porte-pignons satellites (6) et le premier verrouillage de roue libre (19, 1b) étant encore actif,

la petite roue solaire (9) étant verrouillée contre une rotation autour de l'axe de moyeu (5) lorsque la troisième vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant encore actif,

la petite roue solaire (9) étant verrouillée contre une rotation autour de l'axe de moyeu (5) lorsque la seconde vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

la petite roue solaire (9) étant libre d'effectuer une rotation autour de l'axe de moyeu (5) lorsque la première vitesse est engagée, la grande roue solaire (10) étant verrouillée contre une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

caractérisé en ce qu'un seul organe de commande des vitesses (barre de traction 12a - chaine de traction 12b - pièce de raccordement 12c) conçu comme un organe de traction est introduit à travers le trou (5c) à l'intérieur du moyeu et peut être réglé dans plusieurs positions successivement rapprochées de ladite seule extrémité de l'axe de moyeu contre la force d'un ressort et correspondant aux cinq vitesses et agit avec un jeu sur des moyens de verrouillage de la rotation des roues solaires (9a, 10a, 13) assurés par des ressorts et des butées et mobiles dans le sens axial les uns par rapport aux autres, de telle sorte que lors du passage de l'organe de commande des vitesses (barre de traction 12a - chaîne de traction 12b - pièce de raccordement 12c) de la cinquième position à la quatrième position il se produise un déplacement relatif des moyens de verrouillage de la rotation des roues solaires et que la petite roue solaire (9) rotative dans la cinquième position soit verrouillée en rotation dans la quatrième position et la grande roue solaire (10) verrouillée en rotation dans la cinquième position devienne rotative dans la quatrième position, que lors des passages de la quatrième position à la troisième position et de la troisième position à la seconde position la position relative des moyens de verrouillage de la rotation soit maintenue, c'est à dire que la petite roue solaire (9) reste verrouillée en rotation et que la grande roue solaire (10) reste rotative et que lors du passage de la seconde position à la première position un nouveau déplacement relatif des moyens de verrouillage de la rotation des roues solaires se produise et que la petite roue solaire (9) devienne à nouveau rotative et la grande roue solaire (10) à nouveau verrouillée en rotation.
(voir par ex. Fig. 1)

2. Moyeu à 5 vitesses selon la revendication 1, caractérisé en ce qu'un seul organe de commande des vitesses (barre de traction 12a - chaîne de traction 12b - pièce de raccordement 12c) est introduit à l'intérieur du moyeu et relié à un bloc coulissant (12) agissant sur l'élément d'accouplement (14), qui peut être réglé par l'organe de commande des vitesses (12c, 12b, 12a) dans cinq positions espacées dans le sens axial correspondant aux cinq vitesses engagées, à savoir

d'une cinquième à une première position, qui sont successivement rapprochées de ladite seule extrémité de l'axe de moyeu, et

en ce que le bloc coulissant (12) agit avec un jeu de transmission (13c) sur un élément de fixation des roues solaires (gaine coulissante 13) mobile dans le sens axial, qui est assuré contre la rotation autour de l'axe de moyeu (5) et couplé sur une partie du secteur de déplacement axial du bloc coulissant (12) sur le déplacement du bloc coulissant (12) de telle sorte que

le bloc coulissant (12) autorise lors du passage de la cinquième position à la quatrième position un déplacement des roues solaires (9, 10), assuré par la force d'un ressort et des butées, d'une première position relative libérant la petite roue solaire (9) et verrouillant la grande roue solaire (10) par rapport à l'élément de fixation des roues solaires (13) immobile dans le sens axial à une position relative libérant la grande roue solaire (10) et verrouillant la petite roue solaire (9), qui est conservée dans la troisième et la seconde positions du bloc coulissant (12) et que lors du passage du bloc coulissant (12) de la seconde à la première position l'élément de fixation des roues solaires (13) puisse être entraîné par le bloc coulissant (12) dans le sens axial en rétablissant la première position relative.
(voir par ex. Fig. 1)

3. Moyeu à 5 vitesses selon la revendication 1, caractérisé en ce qu'un seul organe de commande des vitesses (12b) est introduit à travers le trou à l'intérieur du moyeu et relié à des moyens formant bloc coulissant (12, 12') agissant sur l'élément d'accouplement (14), dont un bloc coulissant (12) peut être réglé par l'organe de commande des vitesses (12b) dans cinq positions espacées dans le sens axial correspondant aux cinq vitesses engagées, à savoir

d'une cinquième à une première position, qui sont successivement rapprochées de ladite seule extrémité de l'axe de moyeu, et

en ce que le bloc coulissant (12) agit avec un jeu de transmission sur un élément de fixation des roues solaires (13) mobile dans le sens axial, qui est assuré contre la rotation autour de l'axe de moyeu (5) et couplé sur une partie du secteur de déplacement axial du bloc coulissant (12) sur le déplacement du bloc coulissant (12) de telle sorte que

l'élément de fixation des roues solaires (13) pourvu de deux éléments d'accouplement espacés dans le sens axial (surfaces d'accouplement 13a, 13a) soit précontraint dans la cinquième position par un ressort (30) contre le bloc coulissant (12) dans une position axiale dans laquelle un premier élément d'accouplement (13a) rend fixe en rotation la grande roue solaire (10) immobile dans le sens axial et dans laquelle la petite roue solaire (9) également immobile dans le sens axial est rotative, lors du passage de la cinquième position à la quatrième position l'élément de fixation des roues solaires (13) suive sous l'effet du ressort (30) le bloc coulissant (12) dans une position axiale dans laquelle un second élément d'accouplement (13a) rend fixe en rotation la petite roue solaire (9) et le premier élément d'accouplement (13a) libère la grande roue solaire (10), lors du passage du bloc coulissant (12) de la quatrième à la troisième position et de la troisième à la seconde position, l'élément de fixation des roues solaires (13) conserve sa position axiale et l'élément de fixation des roues solaires (13) soit entraîné par le bloc coulissant (12) lors du passage de la seconde à la première position, le second élément d'accouplement (13a) rendant alors la grande roue solaire (10) fixe en rotation et la petite roue solaire (9) devenant à nouveau rotative.
(voir par ex. Fig. 28)

4. Moyeu à 5 vitesses selon la revendication 1, caractérisé en ce qu'un seul organe de commande des vitesses (12b) est introduit à travers le trou à l'intérieur du moyeu et relié à un bloc coulissant (12) agissant sur l'élément d'accouplement (14), qui peut être réglé par l'organe de commande des vitesses dans cinq positions espacées dans le sens axial correspondant aux cinq vitesses engagées, à savoir

d'une cinquième à une première position, qui sont successivement rapprochées de ladite seule extrémité de l'axe de moyeu, et

en ce que le bloc coulissant (12) agit avec un jeu de transmission (13c) sur un élément de fixation des roues solaires (13) mobile dans le sens axial, qui est assuré contre la rotation autour de l'axe de moyeu (5) et couplé sur une partie du secteur de déplacement axial du bloc coulissant (12) sur le déplacement du bloc coulissant (12) de telle sorte que

les deux roues solaires (9, 10) espacées dans le sens axial et mobiles dans le sens axial soient précontraintes dans une cinquième position du bloc coulissant (12) par un ressort de compression (30) contre le bloc coulissant (12) dans le sens axial et, de deux éléments d'accouplement (dentures d'accouplement 13a) espacés dans le sens axial de l'élément de fixation des roues solaires (13) mobile dans le sens axial et immobile en rotation, un premier élément d'accouplement (13a) rende la grande roue solaire (10) fixe en rotation, alors que la petite roue solaire (9) peut tourner, lors du passage de la cinquième à la quatrième position les deux roues solaires (9, 10) suivent le bloc coulissant (12) sous l'effet du ressort de compression (30), la petite roue solaire (9) étant alors rendue fixe en rotation par un second élément d'accouplement (13a) et la grande roue solaire (10) devenant libre d'effectuer une rotation, lors du passage de la quatrième position à la troisième position et de la troisième position à la seconde position l'élément de fixation des roues solaires (13) et les roues solaires (9 et 10) s'arrêtent dans le sens axial et lors du passage de la seconde position à la première position l'élément de fixation des roues solaires (13) soit entraîné dans le sens axial et libère la petite roue motrice (9) par l'intermédiaire du second élément d'accouplement (13a) et rende fixe en rotation la grande roue solaire (10) par l'intermédiaire du premier élément d'accouplement (13a).
(voir par ex. Fig. 23 en relation avec Fig. 1)

5. Moyeu à 5 vitesses selon la revendication 1, caractérisé en ce qu'un seul organe de commande des vitesses est introduit à travers le trou à l'intérieur du moyeu et relié à un bloc coulissant (12), qui peut être réglé par l'organe de commande des vitesses dans cinq positions espacées dans le sens axial correspondant aux cinq vitesses engagées, à savoir

d'une cinquième à une première position, qui sont successivement rapprochées de ladite seule extrémité de l'axe de moyeu, et

en ce que le bloc coulissant (12) agit avec un jeu de transmission (13c) sur un élément de fixation des roues solaires (S) mobile dans le sens axial, qui est couplé sur une partie du secteur de déplacement axial du bloc coulissant (12) sur le déplacement du bloc coulissant (12) de telle sorte que

les deux roues solaires (9, 10) mobiles dans le sens axial soient précontraintes ensemble par un ressort (30) dans la cinquième position contre une butée (13') reliée au bloc coulissant (12) dans une position axiale, dans laquelle la grande roue solaire (10) est rendue fixe en rotation par un élément d'accouplement fixe dans le sens axial (denture de l'axe 5a) et la petite roue solaire (9) est rotative, que lors du passage de la cinquième à la quatrième position les deux roues solaires (9 et 10) suivent la butée (13') couplée au bloc coulissant (12), la grande roue solaire (10) devienne libre d'effectuer une rotation et la petite roue solaire (9) soit rendue fixe en rotation par l'élément d'accouplement (5a), lors du passage de la quatrième à la troisième position et de la troisième à la seconde position les roues solaires (9, 10) s'arrêtent et lors du passage de la seconde position à la première position le bloc coulissant (12) sollicite un engrenage de renversement du mouvement (K), qui agit sur l'élément de fixation des roues solaires (S) et déplace les deux roues solaires (9, 10) dans le sens axial inverse, la petite roue solaire (9) étant à nouveau rendue libre d'effectuer une rotation et la grande roue solaire (10) se mettant à nouveau en prise avec l'élément d'accouplement (5a).
(voir par ex. Fig. 25 en relation avec Fig. 1)

6. Moyeu à 5 vitesses selon la revendication 5, caractérisé en ce que l'engrenage de renversement du mouvement (K) est un mécanisme à levier pivotant.
(voir par ex. Fig. 25)

7. Moyeu à 5 vitesses selon la revendication 5, caractérisé en ce que l'engrenage de renversement du mouvement (T) est un mécanisme à pas de vis.

8. Moyeu à 5 vitesses, en particulier avec frein à contre-pédalage, pour cycles ou similaires, comprenant

un axe de moyeu (5) qui possède un axe géométrique,

un dispositif d'entraînement (3), qui est disposé de manière rotative sur l'axe de moyeu (5), ce dispositif d'entraînement (3) étant conçu pour être muni d'au moins un grand pignon (3'),

une gaine de moyeu (1) qui est supportée de manière rotative sur l'axe de moyeu (5),

un système d'engrenages planétaires à l'intérieur de la gaine de moyeu (1), ce système d'engrenages planétaires présentant :

un porte-pignons satellites (6) fixe dans le sens axial, qui est supporté de manière rotative sur l'axe de moyeu (5),

au moins un pignon satellite (8) fixe dans le sens axial, qui est supporté de manière rotative sur le porte-pignons satellites (6), ce pignon satellite (8) étant réalisé avec un grand pignon satellite à gradins (8a) et un petit pignon satellite à gradins (8b),

des roues solaires (9, 10), à savoir une petite roue solaire (9) destinée à se mettre en prise par engrenage avec le grand pignon satellite à gradins (8a) et une grande roue solaire (10) destinée à se mettre en prise avec le petit pignon satellite à gradins (8b), ces roues solaires (9, 10) pouvant être verrouillées sélectivement contre la rotation autour de l'axe de moyeu (5),

une couronne de train planétaire (11) supportée de manière rotative autour de l'axe de moyeu (5), la couronne de train planétaire (11) se mettant en prise par engrenage avec l'un des pignons satellites à gradins (8a, 8b),

et comportant en outre

un élément d'accouplement (14) mobile dans le sens axial, en particulier sous la forme d'une douille d'accouplement (14), qui se trouve en une prise constante pour la transmission du couple de rotation avec le dispositif d'entraînement (3) et peut être amenée sélectivement à coopérer avec soit le porte-pignons satellites (6), soit la couronne de train planétaire (11), afin d'effectuer une rotation avec la partie correspondante autour de l'axe de moyeu (5), un premier verrouillage de roue libre (cliquet de verrouillage de l'entraînement 19 - verrouillage intérieur 1b) entre la couronne de train planétaire (11) et la gaine de moyeu (1),

un second verrouillage de roue libre (cliquet de verrouillage de l'entraînement 18 - verrouillage intérieur 1b) entre le porte-pignons satellites (6) et la gaine de moyeu (1) et

des moyens de commande des vitesses (barre de traction 12a - chaîne de traction 12b - pièce de raccordement 12c), qui sont introduits à l'intérieur du moyeu à partir d'une seule extrémité de l'axe de moyeu (5) à travers un trou (5c) et qui sont destinés et adaptés à verrouiller sélectivement l'une ou l'autre des roues planétaires (9, 10) contre la rotation autour de l'axe de moyeu (5) à travers une fente (5b) de l'axe de moyeu (5),
à coupler sélectivement l'élément d'accouplement (14) avec le porte-pignons satellites (6) et la couronne de train planétaire (11) et à inactiver le premier verrouillage de roue libre (19, 1b),

la petite roue solaire (9) étant libre d'effectuer une rotation autour de l'axe de moyeu (5) lorsque la cinquième vitesse est engagée, la grande roue solaire (10) étant verrouillée contre une rotation autour de l'axe de moyeu (5), l'élément d'accouplement (14) étant en prise pour la transmission du couple de rotation avec le porte-pignons satellites (6) et le premier verrouillage de roue libre (19, 1b) étant actif,

la petite roue solaire (9) étant verrouillée contre une rotation autour de l'axe de moyeu (5) lorsque la quatrième vitesse est engagée, la grande roue solaire (10) étant libre d'effectuer une rotation autour de l'axe de moyeu (5), l'élément d'accouplement (14) étant encore en prise pour la transmission du couple de rotation avec le porte-pignons satellites (6) et le premier verrouillage de roue libre (19, 1b) étant encore actif,

la petite roue solaire (9) étant verrouillée contre une rotation autour de l'axe de moyeu (5) lorsque la troisième vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant encore actif,

la petite roue solaire (9) étant verrouillée contre une rotation autour de l'axe de moyeu (5) lorsque la seconde vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

la petite roue solaire (9) étant libre d'effectuer une rotation autour de l'axe de moyeu (5) lorsque la première vitesse est engagée, la grande roue solaire (10) étant verrouillée contre une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

caractérisé en ce qu'un seul organe de commande des vitesses est introduit à travers le trou à l'intérieur du moyeu et agit sur des moyens de verrouillage de la rotation des roues solaires (9a, 10a, 5a) mobiles dans le sens axial,
le déplacement en va-et-vient de l'organe de commande des vitesses entre deux positions permettant au choix, soit de verrouiller la petite roue solaire (9) contre la rotation et de libérer la grande roue solaire (10) en vue d'une rotation, soit de verrouiller la grande roue solaire (10) contre la rotation et de libérer la petite roue solaire (9) en vue d'une rotation.

(Fig. 1 en relation avec l'une des Fig. 10 à 21)

9. Moyeu à 5 vitesses selon la revendication 8, caractérisé en ce que les moyens de verrouillage de la rotation des roues solaires (9a, 10a, 5a) peuvent être enclenchés dans les deux positions par des moyens d'enclenchement (G).
(Fig. 1 en relation avec Fig. 14)

10. Moyeu à 5 vitesses, en particulier avec frein à contre-pédalage, pour cycles ou similaires, comprenant

un axe de moyeu (5) qui possède un axe géométrique,

un dispositif d'entraînement (3), qui est disposé de manière rotative sur l'axe de moyeu (5), ce dispositif d'entraînement (3) étant conçu pour être muni d'au moins un grand pignon (3'),

une gaine de moyeu (1) qui est supportée de manière rotative sur l'axe de moyeu (5),

un système d'engrenages planétaires à l'intérieur de la gaine de moyeu (1), ce système d'engrenages planétaires présentant :

un porte-pignons satellites (6) fixe dans le sens axial, qui est supporté de manière rotative sur l'axe de moyeu,

au moins un pignon satellite (8) fixe dans le sens axial, qui est supporté de manière rotative sur le porte-pignons satellites (6), ce pignon satellite (8) étant réalisé avec un grand pignon satellite à gradins (8a) et un petit pignon satellite à gradins (8b),

des roues solaires (9, 10), à savoir une petite roue solaire (9) destinée à se mettre en prise par engrenage avec le grand pignon satellite à gradins (8a) et une grande roue solaire (10) destinée à se mettre en prise avec le petit pignon satellite à gradins (8b), ces roues solaires (9, 10) pouvant être verrouillées sélectivement contre la rotation autour de l'axe de moyeu (5),

une couronne de train planétaire (11) supportée de manière rotative autour de l'axe de moyeu (5), la couronne de train planétaire (11) se mettant en prise par engrenage avec l'un des pignons satellites à gradins (8a, 8b),

et comportant en outre

un élément d'accouplement (14) mobile dans le sens axial, en particulier sous la forme d'une douille d'accouplement (14), qui se trouve en une prise constante pour la transmission du couple de rotation avec le dispositif d'entraînement (3) et peut être amenée sélectivement à coopérer avec soit le porte-pignons satellites (6), soit la couronne de train planétaire (11), afin d'effectuer une rotation avec la partie correspondante autour de l'axe de moyeu (5),

un premier verrouillage de roue libre (cliquet de verrouillage de l'entraînement 19 - verrouillage intérieur 1b) entre la couronne de train planétaire (11) et la gaine de moyeu (1),

un second verrouillage de roue libre (cliquet de verrouillage de l'entraînement 18 - verrouillage intérieur 1b) entre le porte-pignons satellites (6) et la gaine de moyeu (1) et

des moyens de commande des vitesses (barre de traction 12a - chaîne de traction 12b - pièce de raccordement 12c), qui sont introduits à l'intérieur du moyeu à partir d'une seule extrémité de l'axe de moyeu (5) à travers un trou (5c) et qui sont destinés et adaptés à verrouiller sélectivement l'une ou l'autre des roues planétaires (9, 10) contre la rotation autour de l'axe de moyeu (5) à travers une fente (5b) de l'axe de moyeu (5),
à coupler sélectivement l'élément d'accouplement (14) avec le porte-pignons satellites (6) et la couronne de train planétaire (11) et à inactiver le premier verrouillage de roue libre (19, 1b),

la petite roue solaire (9) étant libre d'effectuer une rotation autour de l'axe de moyeu (5) lorsque la cinquième vitesse est engagée, la grande roue solaire (10) étant verrouillée contre une rotation autour de l'axe de moyeu (5), l'élément d'accouplement (14) étant en prise pour la transmission du couple de rotation avec le porte-pignons satellites (6) et le premier verrouillage de roue libre (19, 1b) étant actif,

la petite roue solaire (9) étant verrouillée contre une rotation autour de l'axe de moyeu (5) lorsque la quatrième vitesse est engagée, la grande roue solaire (10) étant libre d'effectuer une rotation autour de l'axe de moyeu (5), l'élément d'accouplement (14) étant encore en prise pour la transmission du couple de rotation avec le porte-pignons satellites (6) et le premier verrouillage de roue libre (19, 1b) étant encore actif,

la petite roue solaire (9) étant verrouillée contre une rotation autour de l'axe de moyeu (5) lorsque la troisième vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant encore actif,

la petite roue solaire (9) étant verrouillée contre une rotation autour de l'axe de moyeu (5) lorsque la seconde vitesse est engagée, la grande roue solaire (10) étant libre d'effectuer une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

la petite roue solaire (9) étant libre d'effectuer une rotation autour de l'axe de moyeu (5) lorsque la première vitesse est engagée, la grande roue solaire (10) étant verrouillée contre une rotation autour de l'axe de moyeu (5), l'élément d'accouplement (14) étant en prise pour la transmission du couple de rotation avec la couronne de train planétaire (11) et le premier verrouillage de roue libre (19, 1b) étant inactivé,

caractérisé en ce qu'un seul organe de commande des vitesses est introduit à travers le trou à l'intérieur du moyeu et agit sur des moyens de verrouillage de la rotation des roues planétaires (9a, 10a, 13a) mobiles dans le sens axial les uns par rapport aux autres, les moyens de verrouillage de la rotation des roues solaires (9a, 10a, 13a) présentant deux éléments de fixation des roues solaires (dentures d'accouplement 13a) espacés dans le sens axial, immobiles en rotation et pouvant être déplacés ensemble par l'organe de commande des vitesses, chacun d'eux se mettant successivement en prise au cours d'un déplacement en plusieurs étapes dans la même direction avec des profils d'accouplement (9a et 10a) des deux roues solaires (9, 10), de telle sorte que dans chaque position des éléments de fixation des roues solaires (dentures d'accouplement 13a) un seul de ces éléments de fixation des roues solaires (dentures d'accouplement 13a) soit en prise avec un profil d'accouplement (9a, 10a) d'une roue solaire (9 ou 10).
(voir Fig. 24 et 24a en relation avec Fig. 1)

11. Moyeu à 5 vitesses selon l'une quelconque des revendications 1 à 10, caractérisé en ce que chacune des roues solaires (9, 10) peut être verrouillée contre la rotation autour de l'axe de moyeu (5) par au moins une combinaison de dent d'accouplement et évidement d'accouplement (5a, 9a; 5a, 10a) avec une dent d'accouplement (5a) disposée de manière fixe en rotation sur l'axe de moyeu (5) et un évidement d'accouplement (9a, 10a) disposé sur chacune des roues solaires (9, 10) ou vice-versa, en ce que le verrouillage et la libération de la rotation de chacune des roues solaires (9, 10) se fait par déplacement relatif axial de la dent d'accouplement (5a) correspondante et de l'évidement d'accouplement (9a, 10a) correspondant, la dent d'accouplement correspondante (5a) entrant ou sortant alors de l'évidement d'accouplement (9a, 10a) correspondant, en ce qu'aussi bien la dent d'accouplement (5a) que l'évidement d'accouplement (9a, 10a) des combinaisons de dent d'accouplement et évidement d'accouplement (5a, 9a ; 5a, 10a) de chacune des roues solaires (9, 10) comprennent chacun une paire de flancs d'accouplement sensiblement parallèles à l'axe, en ce que l'une des parties comprenant : dent d'accouplement (5a), évidement d'accouplement (9a) d'une combinaison de dent d'accouplement et évidement d'accouplement (5a, 9a) d'une roue solaire (9) comprend au moins un flanc orienté vers l'intérieur (9b) limitrophe dans le sens axial du flanc d'accouplement correspondant de telle sorte que la rotation relative de la dent d'accouplement (5a) et de l'évidement d'accouplement (9a) de la combinaison de dent d'accouplement et d'évidement d'accouplement (5a, 9a) d'une roue solaire (9) lors de la mise face à face en périphérie du flanc orienté vers l'intérieur (9b) de l'une (9a) des parties comprenant : dent d'accouplement (5a) et évidement d'accouplement (9a) face à l'autre (5a) de ces parties il se produise un déplacement relatif axial de la dent d'accouplement (5a) et de l'évidement d'accouplement (9a) de la combinaison de dent d'accouplement et d'évidement d'accouplement (5a, 9a) de la roue solaire (9) en direction du dégagement de la prise de cette dent d'accouplement (5a) et de cet évidement d'accouplement (9a), et en ce que ce déplacement relatif axial provoque un déplacement relatif consécutif de la dent d'accouplement (5a) et de l'évidement d'accouplement (10a) de la combinaison de dent d'accouplement et d'évidement d'accouplement (5a, 10a) de l'autre roue solaire (10) en direction de l'établissement d'une prise des flancs d'accouplement combinaison de la dent d'accouplement (5a) et de l'évidement d'accouplement (10a) de la combinaison de dent d'accouplement et d'évidement d'accouplement (5a, 10a) de l'autre roue solaire (10).
(voir par ex. Fig. 2a, 2a')

12. Moyeu à 5 vitesses selon la revendication 11, caractérisé en ce que l'une des parties comprenant: dent d'accouplement (5a), évidement d'accouplement (9a) d'une combinaison de dent d'accouplement et d'évidement d'accouplement (5a, 9a) d'une roue solaire (9) comprend au moins une paire de flancs orientés vers l'intérieur (9b) limitrophes dans le sens axial de la paire correspondante de flancs d'accouplement , en ce que les différents flancs tournés vers l'intérieur (9b) de ladite paire de flancs tournés vers l'intérieur (9b) sont inclinés dans des directions opposées par rapport à une ligne de référence parallèle à l'axe passant par le centre de la partie correspondante : dent d'accouplement (5a), évidement d'accouplement (9a).
(voir par ex. Fig. 2a, 2a')

13. Moyeu à 5 vitesses selon la revendication 11 ou 12, caractérisé en ce que le déplacement relatif dans le sens axial de la dent d'accouplement (5a) et de l'évidement d'accouplement (9a) de ladite combinaison de dent d'accouplement et d'évidement d'accouplement (5a, 9a) d'une roue solaire (9) agit contre un premier ressort (ressort 30), et en ce que le déplacement relatif axial consécutif de la dent d'accouplement (5a) et de l'évidement d'accouplement (10a) de la combinaison de dent d'accouplement et d'évidement d'accouplement (5a, 10a) de l'autre roue solaire (10) est provoqué par un second ressort (ressort 50).
(voir par ex. Fig. 2a, 2a')

14. Moyeu à 5 vitesses selon l'une quelconque des revendications 11 à 13, caractérisé en ce que la combinaison de dent d'accouplement et d'évidement d'accouplement (5a, 9a) d'une première (9) des roues solaires (9, 10) et la combinaison de dent d'accouplement et d'évidement d'accouplement (5a, 10a) d'une seconde (10) des roues solaires (9, 10) comprennent une dent d'accouplement (5a) commune à chacune des deux combinaisons et un évidement (9a, 10a) dans chacune des deux roues solaires (9, 10).
(voir par ex. Fig. 2a, 2a')

15. Moyeu à 5 vitesses selon l'une quelconque des revendications 11 à 13, caractérisé en ce que la combinaison de dent d'accouplement et d'évidement d'accouplement (5a, 9a) d'une première roue solaire (9) comprend une première dent d'accouplement (5a) et un premier évidement d'accouplement (9a) pour la première roue solaire (9), et en ce que la combinaison de dent d'accouplement et d'évidement d'accouplement (5a', 10a') d'une seconde roue solaire (10) comprend une seconde dent d'accouplement (5a') et un second évidement d'accouplement (10a') pour la seconde roue solaire (10).
(voir par ex. Fig. 3 et 3a)

16. Moyeu à 5 vitesses selon la revendication 14, caractérisé en ce que la dent d'accouplement (5a) commune est disposée de manière fixe dans le sens axial par rapport à l'axe de moyeu (5), et en ce que les roues solaires (9, 10) sont mobiles dans le sens axial par rapport à l'axe de moyeu (5).
(voir par ex. Fig. 2a, 2a')

17. Moyeu à 5 vitesses selon la revendication 14, caractérisé en ce que la dent d'accouplement (5a') commune est mobile dans le sens axial par rapport à l'axe de moyeu (5) et en ce que les roues solaires (9, 10) sont fixes dans le sens axial par rapport à l'axe de moyeu (5).
(voir par ex. Fig. 5, 5a et 6, 6a)

18. Moyeu à 5 vitesses selon l'une quelconque des revendications 11 à 17, caractérisé en ce que les flancs tournés vers l'intérieur (9b) font partie de l'evidement d'accouplement (9a) correspondant.
(voir par ex. Fig. 2a, 2a')

19. Moyeu à 5 vitesses selon l'une quelconque des revendications 11 à 17, caractérisé en ce que les flancs tournés vers l'intérieur (5b) font partie de la dent d'accouplement (5a) correspondante.
(voir par ex. Fig. 2b, 2b')

20. Moyeu à 5 vitesses selon l'une quelconque des revendications 11 à 19, caractérisé en ce que la dent d'accouplement (5a) d'au moins une des combinaisons de dent d'accouplement et évidement d'accouplement (5a, 9a) est fabriquée solidairement de l'axe de moyeu (5).
(voir par ex. Fig. 2a et 2a')

21. Moyeu à 5 vitesses selon la revendication 17, caractérisé en ce que la dent d'accouplement (5a') d'au moins une des combinaisons de dent d'accouplement et évidement d'accouplement (5a', 9a) fait partie d'au moins un bloc coulissant.
(voir par ex. Fig. 5, 5a et 6, 6a)

22. Moyeu à 5 vitesses selon la revendication 17, caractérisé en ce que la dent d'accouplement (13a) d'au moins une des combinaisons de dent d'accouplement et évidement d'accouplement (13a, 9a ; 13a, 10a) est disposée sur une gaine coulissante (13), qui est montée sur l'axe de moyeu (5) de manière mobile dans le sens axial et immobile en rotation.
(voir par ex. Fig. 9 et 9a)

23. Moyeu à 5 vitesses selon la revendication 15, caractérisé en ce qu'un ressort de séparation (ressort de compression 51) est prévu entre les deux roues solaires (9, 10), en ce que les deux roues solaires (9, 10) sont mobiles dans le sens axial par rapport à l'axe de moyeu (5), et en ce que les dents d'accouplement (5a, 5a') des combinaisons de dent d'accouplement et évidement d'accouplement (5a', 9a ; 5a', 10a') sont fixes dans le sens axial par rapport à l'axe de moyeu (5).
(voir par ex. Fig. 3 et 3a)

24. Moyeu à 5 vitesses selon l'une quelconque des revendications 1 à 23, caractérisé en ce que le frein à contre-pédalage comprend un cône-frein (17) et une bague de frein (24) pouvant être écartée, en ce que la bague de frein (24) pouvant être écartée est disposée de manière fixe en rotation sur l'axe de moyeu (5), en ce que le cône-frein (17) est appliqué sur le porte-pignons satellites (6) grâce à un dispositif fileté (6a) et assuré contre la rotation par un ressort de friction (20), une rotation vers l'arrière du porte-pignons satellites (6) produisant, par l'intermédiaire du dispositif fileté (6a), un déplacement axial du cône-frein (17), et ce déplacement axial du cône-frein (17) provoquant un écartement de la bague de frein (24) qui se met en prise aux fins de freinage avec la gaine de moyeu (1).
(voir par ex. Fig. 1)

25. Moyeu à 5 vitesses selon l'une quelconque des revendications 1 à 24, caractérisé en ce que la gaine de moyeu (1) possède une première section axiale de grand diamètre et une seconde section axiale de petit diamètre, en ce que la première section axiale reçoit le système de roues planétaires, et en ce que la seconde section axiale reçoit le frein à contre-pédalage.
(voir par ex. Fig. 1)

26. Moyeu à 5 vitesses selon l'une quelconque des revendications 1 à 4 et 11 à 25, caractérisé en ce que les moyens de verrouillage de la rotation comprennent une gaine coulissante (13) avec une fente longitudinale (13c), en ce qu'un bloc coulissant (12) des moyens de verrouillage de la rotation, mobile par glissement, se met en prise dans la fente longitudinale (13c) de la gaine coulissante (13) et agit sur une extrémité fermée de la fente longitudinale (13c), afin de déplacer la gaine coulissante dans le sens axial à travers une partie du secteur de déplacement axial du bloc coulissant (13).
(voir par ex. Fig. 1)

27. Moyeu à 5 vitesses selon la revendication 26, caractérisé en ce que la gaine coulissante (13) possède un premier groupe de griffes (13a) pour verrouiller en rotation la petite roue solaire (9) et un second groupe de griffes (éléments d'accouplement 13b) pour verrouiller en rotation la grande roue solaire (10).
(voir par ex. Fig. 1)

28. Moyeu à 5 vitesses selon la revendication 27, caractérisé en ce que les griffes (13a) du premier groupe de griffes sont des griffes (13a) faisant saillie dans le sens axial et en ce que les griffes (éléments d'accouplement 13b) du second groupe de griffes sont des griffes (13b) faisant saillie dans le sens radial, "axial" et "radial" s'entendant par rapport à la gaine coulissante (13).
(voir par ex. Fig. 1)

29. Moyeu à 5 vitesses selon l'une quelconque des revendications 26 à 28, caractérisé en ce que la gaine coulissante (13) est sollicitée dans le sens axial par un ressort de sollicitation de la gaine coulissante (ressort de compression 34), qui précontraint la gaine coulissante (13) en direction d'une position sensiblement constante.
(voir par ex. Fig. 1)

30. Moyeu à 5 vitesses selon l'une quelconque des revendications 26 à 29, caractérisé en ce que le bloc coulissant (12) est sollicité par un ressort de sollicitation du bloc coulissant (ressort de compression 28), ce ressort de sollicitation du bloc coulissant (ressort de compression 28) précontraignant le bloc coulissant (12) en direction de sa cinquième position, et les moyens de commande des vitesses (12c, 12b, 12a) étant des moyens de commande des vitesses à traction.
(voir par ex. Fig. 1)

**31.** Moyeu à 5 vitesses selon l'une quelconque des revendications 1 à 30, caractérisé en ce que la couronne de train planétaire (11) est mobile dans le sens axial à la suite du mouvement axial de l'élément d'accouplement (douille d'accouplement 14), et en ce que l'inactivation du premier verrouillage de roue libre (19, 1b) se produit à la suite d'un déplacement axial de la couronne de train planétaire (11).
(voir par ex. Fig. 1)

**32.** Moyeu à 5 vitesses selon la revendication 31, caractérisé en ce que la couronne de train planétaire (11) est soutenue par le dispositif d'entraînement (3) par l'intermédiaire d'un ressort de soutien de la couronne de train planétaire (ressort de compression 36) et en ce que l'élément d'accouplement (douille d'accouplement 14) agit sur la couronne de train planétaire (11) par l'intermédiaire d'un ressort de déplacement de la couronne de train planétaire (ressort de compression 35), le ressort de déplacement de la couronne de train planétaire (ressort de compression 35) étant plus faible que le ressort de soutien de la couronne de train planétaire (ressort de compression 36).
(voir par ex. Fig. 1)

**33.** Moyeu à 5 vitesses selon l'une quelconque des revendications 1 à 32, caractérisé en ce que l'élément d'accouplement (douille d'accouplement 14) est relié avec un bloc coulissant (12) sollicité par les moyens de commande des vitesses par l'intermédiaire d'une liaison présentant un jeu, afin d'entraîner l'élément d'accouplement (douille d'accouplement 14) sur une partie du secteur de déplacement axial du bloc coulissant (12).
(voir par ex. Fig. 1)

**34.** Moyeu à 5 vitesses selon la revendication 33, caractérisé en ce que la liaison présentant un jeu comprend un ressort de compression produisant un jeu (ressort 32).
(voir par ex. Fig. 1)

Fig.1

Fig.2a

Fig.2b

Fig.2a'

Fig.2b'

_Fig. 3_

_Fig. 4_

_Fig. 3a_

_Fig. 4a_

EP 0 180 076 B1

_Fig. 5_

_Fig.5a_

_Fig.6_

_Fig.6a_

## Fig. 7

10
9
9a
5a'
5a'
10a
5
51

## Fig. 8

5a'
9
10
5a'
5
51

## Fig. 7a

9b
9a
9
10
10a
5
5a'

## Fig. 8a

5a'
9
10
5
5b

EP 0 180 076 B1

_Fig. 9_

_Fig. 9a_

EP 0 180 076 B1

_Fig. 10_

_Fig. 11_

*Fig. 13*

*Fig. 12*

_Fig. 15_

_Fig. 14_

Fig. 16

9
10
H
9,10
9a
13a
10a
13
5
12

Fig. 17

13
G
5
12

EP 0 180 076 B1

Fig. 18

Fig. 19

Fig. 20

8
6
H
10
9
9a
5a
10a
5
B
12
J

Fig. 21

30
9
10
9a
5a
10a
K
5
B
12

EP 0 180 076 B1

_Fig. 22_

_Fig. 23_

EP 0 180 076 B1

_Fig. 24_

_Fig. 25_

_Fig. 24a_

EP 0 180 076 B1

_Fig. 26_

# FIG. 27

EP 0 180 076 B1

60

# FIG. 28

# FIG. 29